(19) Europäisches Patentamt
European Patent Office
Office européen des brevets

(11) **EP 4 111 399 B1**

(12) **EUROPÄISCHE PATENTSCHRIFT**

(45) Veröffentlichungstag und Bekanntmachung des Hinweises auf die Patenterteilung:
**03.01.2024   Patentblatt 2024/01**

(21) Anmeldenummer: **21707976.3**

(22) Anmeldetag: **24.02.2021**

(51) Internationale Patentklassifikation (IPC):
**G06Q 20/06** *(2012.01)*      **G06F 21/64** *(2013.01)*
**G06Q 20/36** *(2012.01)*      **G06Q 20/02** *(2012.01)*
**G06Q 20/32** *(2012.01)*      **G06Q 20/38** *(2012.01)*

(52) Gemeinsame Patentklassifikation (CPC):
**G06F 21/64; G06Q 20/02; G06Q 20/0655;
G06Q 20/327; G06Q 20/3678; G06Q 20/3823;
G06Q 20/3825; G06Q 20/3827**

(86) Internationale Anmeldenummer:
**PCT/EP2021/054541**

(87) Internationale Veröffentlichungsnummer:
**WO 2021/170643 (02.09.2021 Gazette 2021/35)**

(54) **VERFAHREN, ENDGERÄT, ÜBERWACHUNGSINSTANZ SOWIE BEZAHLSYSTEM ZUM VERWALTEN VON ELEKTRONISCHEN MÜNZDATENSÄTZEN**

METHOD, TERMINAL, MONITORING ENTITY, AND PAYMENT SYSTEM FOR MANAGING ELECTRONIC COIN DATASETS

PROCÉDÉ, TERMINAL, ENTITÉ DE SURVEILLANCE ET SYSTÈME DE PAIEMENT POUR GÉRER DES ENSEMBLES DE DONNÉES ÉLECTRONIQUES DE PIÈCES DE MONNAIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.02.2020   DE 102020104904**

(43) Veröffentlichungstag der Anmeldung:
**04.01.2023   Patentblatt 2023/01**

(73) Patentinhaber: **Giesecke+Devrient advance52 GmbH
81677 München (DE)**

(72) Erfinder:
• **FRITZHANNS, Tilo
80639 München (DE)**
• **GAWLAS, Florian
80805 München (DE)**
• **SEIDEMANN, Wolfram
81827 München (DE)**
• **VELEVA, Maria
80689 München (DE)**

(74) Vertreter: **Giesecke + Devrient IP
Prinzregentenstraße 161
81677 München (DE)**

(56) Entgegenhaltungen:
**US-A1- 2007 027 941     US-A1- 2017 293 912**

• **YEN CHOON CHING ET AL: "FairCASH: Concepts and Framework", NEXT GENERATION MOBILE APPLICATIONS, SERVICES AND TECHNOLOGIES, 2008. NGMAST '08. THE SECOND INTERNATIONAL CONFERENCE ON, IEEE, PISCATAWAY, NJ, USA, 16. September 2008 (2008-09-16), Seiten 269-274, XP031409676, ISBN: 978-0-7695-3333-9**
• **ISABELLE SIMPLOT-RYL ET AL: "Distributed architectures for electronic cash schemes: a survey1", INTERNATIONAL JOURNAL OF PARALLEL, EMERGENT AND DISTRIBUTED SYSTEMS, Bd. 24, Nr. 3, 1. Juni 2009 (2009-06-01), Seiten 243-271, XP055672436, United Kingdom ISSN: 1744-5760, DOI: 10.1080/17445760802441671**

**Beschreibung**

TECHNISCHES GEBIET DER ERFINDUNG

Die Erfindung betrifft ein Verfahren in einem Endgerät zum Verwalten von elektronischen Münzdatensätzen, sowie ein entsprechendes Endgerät. Weiter betrifft die Erfindung ein Verfahren in einem Bezahlsystem zum Verwalten von elektronischen Münzdatensätzen, sowie ein entsprechendes Bezahlsystem.

TECHNISCHER HINTERGRUND DER ERFINDUNG

Sicherheit von Bezahltransaktionen und den dazugehörigen Bezahltransaktionsdaten bedeutet sowohl Schutz der Vertraulichkeit der ausgetauschten Daten; als auch Schutz der Integrität der ausgetauschten Daten; als auch Schutz der Verfügbarkeit der ausgetauschten Daten.

Für elektronische Münzdatensätze müssen grundlegende Kontrollfunktionen, insbesondere (1) das Erkennen von Mehrfachausgabe-Versuchen, auch Double-Spending, genannt und (2) das Erkennen von ungedeckten Zahlungen nachgewiesen werden können. Im Fall (1) versucht jemand denselben Münzdatensatz mehrfach auszugeben und Fall (2) versucht jemand einen Münzdatensatz auszugeben, obwohl er kein Guthaben (mehr) besitzt.

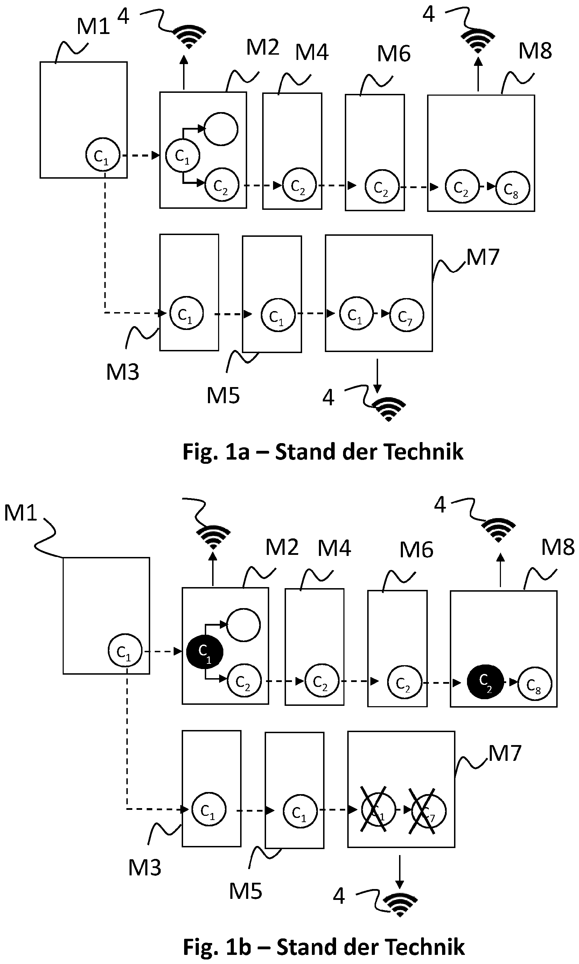

Um den Fall (1) zu verdeutlichen, ist in Fig. 1a und Fig. 1b ein Bezahlsystemen dargestellt, bei dem es möglich ist, einen geldwerten Betrag in Form von elektronischen Münzdatensätzen direkt zwischen Endgeräten im Bezahlsystem auszutauschen. Bei einem direkten Übertragen ist dann keine zentrale Instanz 4 beteiligt. In Fig. 1a hat ein Endgerät M1 einen Münzdatensatz $C_1$. Das Endgerät M1 gibt den Münzdatensatz $C_1$ unerlaubterweise an die Endgeräte M2 und M3 gleichzeitig weiter.

Im Bezahlsystem der Fig. 1a teilt das Endgerät M2 optional den Münzdatensatz $C_1$ und erhält den Münzdatensatz $C_2$, der sodann direkt an das Endgerät M4 weitergegeben wird. Das Endgerät M4 gibt den Münzdatensatz $C_2$ an das Endgerät M6 direkt weiter. Das Endgerät M6 gibt den Münzdatensatz $C_2$ an das Endgerät M8 direkt weiter. Der arglose Teilnehmer mit Endgerät M3 gibt den Münzteildatensatz Ci direkt an das Endgerät M5 weiter. Das Endgerät M5 gibt den Münzdatensatz Ci an das Endgerät M7 direkt weiter. Somit wechseln beide Münzdatensätze $C_1$ und $C_2$ häufig den Besitzer, ohne dass die zentrale Überwachungsinstanz 4 dies erfährt. Die Endgeräte M3 bis M7 waren nur temporäre Besitzer des Münzdatensatzes, der für einen anderes Endgerät registriert ist.

In Fig. 1b ist zusätzlich angedeutet, in welchem Status (bzw. Zustand) die Münzdatensätze aus Sicht einer zentralen Überwachungsinstanz 4 sind. Der Münzdatensatz Ci in Endgerät M2 wird in der Regel bereits nach dem Teilen ungültig und ist daher invertiert (mit Füllung) dargestellt. Wenn das Endgerät M8 den Münzdatensatz $C_2$ in der zentralen Überwachungsinstanz 4 auf sich registrieren lässt (=umschalten oder switch), wird auch der Münzdatensatz $C_2$ ungültig und ein Münzdatensatz $C_8$ gültig. Wenn nun auch das Endgerät M7 anstelle des Münzdatensatzes Ci seinen Münzdatensatz $C_7$ an der Instanz 4 registrieren lassen möchte, stellt die Überwachungsinstanz 4 fest, dass der Münzdatensatz Ci bereits ungültig ist. Das von M1 verursachte Problem wird erst jetzt entdeckt. In der Folge akzeptiert die Überwachungsinstanz 4 weder den Münzdatensatz Ci noch den Münzdatensatz $C_7$. Dies ist in Fig. 1b durch ein Kreuz über den Münzdatensätzen angedeutet. Eine vergleichbare Situation entsteht, wenn in einem anderen Ablauf das Endgerät M2 den Münzdatensatz Ci nicht teilt, sondern direkt weitergibt und das Endgerät M8 den empfangenen Münzdatensatz, dann ebenfalls der Münzdatensatz $C_1$, zeitlich vor dem Endgerät M7 bei der Überwachungsinstanz 4 für sich registriert.

Zudem steigt durch die Vielzahl von Transaktionen eines elektronischen Münzdatensatzes und auch durch die fortschreitende Lebensdauer das Risiko, dass an dem elektronischen Münzdatensatz Manipulation(en) vorgenommen werden.

Es soll perspektivisch möglich sein, ganz auf Bargeld (Banknoten und analoge Münzen), zumindest aber auf analoge Münzen, zu verzichten.

US 2017/0293912 A1 betrifft das Einwechseln von Token unterschiedlicher Tokenherausgeber in einem System. Der IEEE Artikel "FairCash: Concepts and Framework" von Yen Choon Ching at al. vom 16.09.2008 in 'The Second Internation Conference on Next Generation Mobile Applications, Services and Technologies' verwendet eine Zertifikatshierarchie zur Absicherung elektronischer Münzdatensätze. In dem Artikel "Distributed architecture for electronic cash schemes: a survey" - International Journal of parallel, emergent and distributed systems, Bd. 24, Nr. 3, 1.Juni 2009, Seite 243-271 von Isabelle Simplot-Ryl et al - wird ein e-cash-Schema beschrieben, in welchem ein Kunde dem Händler direkt eine digitale Münze, die einem Betrag entspricht, sendet und die Münzen in einer zentralen Instanz registriert sind. US 2007/027941 A1 offenbart den Oberbegriff von Anspruch 1.

Es ist daher die Aufgabe der vorliegenden Erfindung, ein Verfahren und ein System zu schaffen, in denen eine Bezahltransaktion sicher aber dennoch einfach ausgestaltet ist. Dabei soll insbesondere eine direkte und anonyme Bezahlung zwischen Geräten, wie Token, Smartphones aber auch Maschinen, wie Kassenterminals oder Automaten, geschaffen werden. Mehrere Münzdatensätze sollen beim Benutzer beliebig miteinander kombiniert und/oder aufgeteilt werden können, um ein flexibles Austauschen zu ermöglichen. Die ausgetauschten Münzdatensätze sollen vertraulich gegenüber anderen Systemteilnehmern sein, aber jedem Systemteilnehmer erlauben, grundlegende Prüfungen an dem Münzdatensatz durchzuführen, nämlich (1) das Erkennen von Mehrfach-Ausgabe-Versuchen; (2) das Erkennen von Versuchen mit nicht vorhandenen monetären Beträgen zu zahlen und (3) das Erkennen von Rückgabekriterien für bereits ausgegebene Münzdatensätze, beispielsweise dass eine Münzdatensatz verfallen soll.

ZUSAMMENFASSUNG DER ERFINDUNG

Die gestellten Aufgaben werden mit den Merkmalen der unabhängigen Patentansprüche gelöst. Weitere vorteilhafte Ausgestaltungen sind in den abhängigen Patentansprüchen beschrieben.

Die Aufgabe wird insbesondere durch ein Verfahren in einem Endgerät zum Verwalten von elektronischen Münzdatensätzen eines Bezahlsystems gelöst. Die elektronischen Münzdatensätze werden von einer zentralen Herausgeberinstanz ausgegeben, wobei jeder elektronische Münzdatensatz einen Prüfwert aufweist. Der Prüfwert wird bei direktem Übertragen des elektronischen Münzdatensatzes zwischen zwei Endgeräten inkrementiert oder der Prüfwert ist invariant bei einer, von Endgeräten mit dem elektronischen Münzdatensatz durchgeführten Aktion. Das Verfahren umfasst den folgenden Schritt: Bestimmen durch das Endgerät anhand des Prüfwertes eines elektronischen Münzdatensatzes, ob dieser elektronische Münzdatensatz von dem Endgerät bei dem Bezahlsystem angezeigt wird oder Bestimmen durch das Endgerät anhand des Prüfwerts des elektronischen Münzdatensatzes, ob der elektronische Münzdatensatz an die zentrale Herausgeberinstanz zurückgegeben wird.

Ein elektronischer Münzdatensatz ist insbesondere ein elektronischer Datensatz, der einen geldwerten (=monetären) Betrag repräsentiert und umgangssprachlich auch als "digitale Münze" oder "elektronische Münze", englisch "digital/electronic Coin" bezeichnet wird. Dieser geldwerte Betrag wechselt bei dem Verfahren von einem ersten Endgerät zu einem anderen Endgerät. Als ein geldwerter Betrag wird im Folgenden ein digitaler Betrag verstanden, der z.B. auf einem Konto eines Geldinstituts gutgeschrieben werden kann, oder gegen ein anderes Zahlungsmittel getauscht werden kann. Ein elektronischer Münzdatensatz repräsentiert also Bargeld in elektronischer Form.

Das Endgerät kann eine Vielzahl von elektronischen Münzdatensätzen aufweisen, beispielsweise kann in einem Datenspeicher des Endgeräts die Vielzahl von Münzdatensätzen hinterlegt sein. Der Datenspeicher stellt dann beispielsweise eine elektronische Geldbörse dar. Der Datenspeicher kann beispielsweise intern, extern oder virtuell sein.

Das Endgerät kann beispielsweise ein passives Gerät, wie z. B. ein Token, ein mobiles Endgerät, wie z.B. ein Smartphone, ein Tablet-Computer, ein Computer, ein Server oder eine Maschine sein.

Ein elektronischer Münzdatensatz zum Übertragen von geldwerten Beträgen unterscheidet sich wesentlich von einem elektronischen Datensatz zum Datenaustausch oder Datentransfer, da beispielsweise eine klassische Datentransaktion auf Basis eines Frage-Antwort-Prinzips bzw. auf einer Interkommunikation zwischen den Datentransferpartnern stattfindet. Ein elektronischer Münzdatensatz ist dementgegen einmalig, eindeutig und steht im Kontext eines Sicherheitskonzepts, welches beispielsweise Maskierungen, Signaturen oder Verschlüsselungen umfassen kann. In einem elektronischen Münzdatensatz sind prinzipiell alle Daten enthalten, die für eine empfangende Instanz bezüglich Verifikation, Authentisierung und Weitergeben an andere Instanzen benötigt werden. Eine Interkommunikation zwischen den Endgeräten beim Austausch ist daher bei dieser Art Datensätze grundsätzlich nicht erforderlich.

Der elektronische Münzdatensatz wird von einer zentralen Herausgeberinstanz herausgegeben. Das Herausgeben kann auf direkte Anfrage des Endgeräts erfolgen. Die zentrale Herausgeberinstanz, beispielsweise eine Zentralbank, generiert den elektronischen Münzdatensatz und gibt diesen direkt an das Endgerät aus. In einer Ausgestaltung wird der elektronische Münzdatensatz indirekt über das Bezahlsystem an das Endgerät herausgegeben. Im Bezahlsystem können mehrere zentrale Herausgeberinstanzen vorgesehen sein, die Anzahl an Herausgeberinstanzen ist nicht beschränkt. Beispielsweise kann ein Münzdatensatz von einer ersten Herausgeberinstanz in einer ersten Währung ausgegeben werden und ein Münzdatensatz von einer anderen Herausgeberinstanz in einer anderen Währung ausgegeben werden.

Der Prüfwert des elektronischen Münzdatensatzes wird im Verfahren verwendet, um eine Kontrollfunktion im Bezahlsystem zu ermöglichen beziehungsweise zu verbessern. Der Prüfwert ist bevorzugt ein Datenelement des elektronischen Münzdatensatzes das vom Endgerät ausgelesen werden kann und dessen Wert vom Endgerät bestimmt werden kann. Der Prüfwert ist an diesen elektronischen Münzdatensatz gekoppelt.

Der Prüfwert wird in einer ersten Ausgestaltung bei direktem Übertragen des elektronischen Münzdatensatzes zwischen zwei Endgeräten inkrementiert, also schrittweise erhöht. Das inkrementieren erfolgt entweder von einem sendenden Endgerät unmittelbar vor dem Senden des Münzdatensatzes an ein empfangendes Endgerät inkrementiert. Oder das Inkrementieren erfolgt im empfangenden Endgerät unmittelbar nach dem Empfang des Münzdatensatzes. Somit wird die Anzahl von direkten Übertragungen zwischen Endgeräten für jeden Münzdatensatz festgehalten.

Der Prüfwert ist in einer zweiten (alternativ zur ersten) Ausgestaltung invariant bei einer, von Endgeräten mit dem elektronischen Münzdatensatz durchgeführten Aktion (aktionsinvariant). Aktionsinvariant bedeutet, dass bei einer Aktion mit dem Münzdatensatz der Prüfwert unverändert erhalten bleibt. Der aktionsinvariante Prüfwert ist nicht-individuell für den elektronischen Münzdatensatz, sondern gruppenspezifisch und gilt daher für eine Mehrzahl von unterschiedlichen Münzdatensätzen, um eine Anonymität zu bewahren und eine Münzdatensatz-verfolgung zu verhindern.

Als Aktion mit einem Münzdatensatz wird jede von einem Endgerät durchgeführte Modifikation am Münzdatensatz, also insbesondere das Umschalten, das Aufteilen, das Kombinieren, wie später noch beschrieben wird. Zudem ist als Aktion jedes Übertragen des Münzdatensatzes, beispielsweise zu einem anderen Endgerät oder auch einer Instanz im Bezahlsystem, gemeint. Zudem ist als Aktion das Einlösen des Münzdatensatzes zum Gutschreiben eines monetären Betrags des Münzdatensatzes oder das Wechseln des Währungssystems gemeint. Diese Aktionen werden von einem Endgerät durchgeführt und verändern den Prüfwert nicht.

Anhand des Prüfwerts des elektronischen Münzdatensatzes wird durch das Endgerät bestimmt, ob dieser elektronische Münzdatensatz bei dem Bezahlsystem angezeigt (=gemeldet) wird. Beispielsweise wenn die Anzahl von Übertragungen zwischen Endgeräten einen vordefinierten Schwellwert übersteigt, wird so dem Bezahlsystem der Münzdatensatz angezeigt. Das Anzeigen entspricht in einer beispielhaften Ausgestaltung des Verfahrens dem Senden eines Umschalten-Kommando an eine Überwachungsinstanz des Bezahlsystems, um dort ein Umschalten des Münzdatensatz auf das den Münzdatensatz sendende Endgerät zu veranlassen. Das Anzeigen veranlasst in einer alternativen beispielhaften Ausgestaltung des Verfahrens ein Markieren des Münzdatensatzes in einer Überwachungsinstanz des Bezahlsystems. Der Prüfwert und/oder der Münzdatensatz kann, muss aber nicht, für den Zweck des Anzeigens an das Bezahlsystem übertragen werden. Die Rückgabe des elektronischen Münzdatensatzes durch das Endgerät bedingt entweder das Einlösen eines mit dem elektronischen Münzdatensatz verbundenen monetären Betrags oder das Ausgeben eines neuen elektronischen Münzdatensatzes mit einem identischen monetären Betrag.

Die Rückgabe des elektronischen Münzdatensatzes durch das Endgerät kann einen Zurücksetzen oder Löschen aller zu dem elektronischen Münzdatensatz vorhandenen Einträge im Bezahlsystem auslösen. Damit werden digitale Spuren des elektronischen Münzdatensatzes gelöscht und die Anonymität des Verfahrens abgesichert.

Alternativ wird anhand des Prüfwerts des elektronischen Münzdatensatzes durch das Endgerät bestimmt, ob der elektronische Münzdatensatz an die zentrale Herausgeberinstanz zurückgegeben wird. Damit kann mit dem Prüfwert ein Kriterium für die Rückgabe eines elektronischen Münzdatensatzes definiert werden. Auf diese Weise können elektronische Münzdatensätze beispielsweise aufgrund ihrer Lebensdauer oder der Anzahl von mit dem Münzdatensatz durchgeführten Aktionen verfallen, um die Sicherheit am Bezahlsystem zu erhöhen.

In einer bevorzugten Ausgestaltung wird der elektronische Münzdatensatz in Folge des Anzeigens von dem Bezahlsystem an die zentrale Herausgeberinstanz zurückgegeben. Durch das Anzeigen beim Bezahlsystem wird also im Bezahlsystem bestimmt, ob der Münzdatensatz zurückzugeben ist. Das Bestimmen, ob eine Rückgabe erfolgen muss, wird in dieser Ausgestaltung im Bezahlsystem anstelle dem Endgerät durchgeführt. Das Ergebnis des Bestimmens wird dem Endgerät mitgeteilt und das Endgerät wird von dem Bezahlsystem aufgefordert, den elektronischen Münzdatensatz zurückzugeben.

In einer bevorzugten Ausgestaltung fordert das Bezahlsystem in Folge des Anzeigens das Modifizieren des elektronischen Münzdatensatzes. Ein Modifizieren, beispielsweise ein Aufteilen, Kombinieren oder Umschalten, bedingt ein Registrieren des elektronischen Münzdatensatzes in dem Bezahlsystem. In vielen Ausgestaltungen des digitalen WährungsSystems ist eine Rückgabe an die Herausgeberinstanz nicht notwendig und manchmal auch nicht sinnvoll. Dies gilt insbesondere, wenn der Münzdatensatz prompt nach seiner Ausgabe schnell modifiziert wurde. In dieser Ausgestaltung wird der Münzdatensatz nicht zurückgegeben, er gilt aber als zurückgegeben.

In einer bevorzugten Ausgestaltung wird ein Zählerwert im Bezahlsystem betreffend diesen elektronischen Münzdatensatz in Folge des Anzeigens durch das Bezahlsystem unter Verwendung des Prüfwerts des elektronischen Münzdatensatzes bestimmt. Der Prüfwert des Münzdatensatzes wird bevorzugt vom Endgerät an das Bezahlsystem übertragen. Der Zählerwert ist dabei kein Bestandteil des Münzdatensatzes. Bevorzugt wird der Zählerwert im Bezahlsystem verwaltet. Bevorzugt wird der Zählerwert mit jeder Aktion (Modifikation, Übertragung, Einlösung) betreffend den elektronischen Münzdatensatz erhöht. Bevorzugt wird für unterschiedliche Aktionen der Zählerwert mit unterschiedlicher Gewichtung erhöht. Dadurch ist es möglich, die Rückgabe entsprechend unterschiedlicher Aktionen verbessert zu steuern. Somit ist im Münzdatensatz der Prüfwert als Datenelement vorgesehen, der insbesondere mit jeder direkten Übertragung zwischen Endgeräten inkrementiert wird. Der Zählerwert im Bezahlsystem bezieht den Prüfwert ein, beispielsweise durch Addieren des bisherigen Zählerwerts mit dem Prüfwert.

In einer bevorzugten Ausgestaltung weist jeder elektronische Münzdatensatz einen ersten Prüfwert und einen zweiten Prüfwert auf. Der erste Prüfwert wird dann entsprechend beim direkten Übertragen des elektronischen Münzdatensatzes zwischen zwei Endgeräten inkrementiert, wobei anhand des ersten Prüfwertes des elektronischen Münzdatensatzes bestimmt wird, ob der elektronische Münzdatensatz von dem Endgerät beim Bezahlsystem angezeigt wird. Anhand zumindest des zweiten Prüfwertes des elektronischen Münzdatensatzes wird bestimmt, ob der elektronische Münzdatensatz an die zentrale Herausgeberinstanz zurückgegeben wird. Somit ist ein Anzeige-Prüfwert getrennt von einem Rückgabe-Prüfwert im Münzdatensatz vorgesehen.

Bevorzugt ist der zweite Prüfwert invariant bei einer, von Endgeräten mit dem elektronischen Münzdatensatz durchgeführten Aktion, wobei bevorzugt der zweite Prüfwert zumindest ein Wert aus der folgenden Liste ist: Rückgabedatum des elektronischen Münzdatensatzes; Ausgabedatum des elektronischen Münzdatensatzes; Registrierungsdatum des elektronischen Münzdatensatzes; und Identifizierungswert des elektronischen Münzdatensatzes. Der aktionsinvariante Prüfwert ist nicht-individuell für den elektronischen Münzdatensatz, sondern gruppenspezifisch und gilt daher für eine Mehrzahl von unterschiedlichen Münzdatensätzen, um eine Anonymität zu bewahren und eine Münzdatensatz-verfolgung zu verhindern. Der zweite aktionsinvariante Prüfwert ist dabei nicht individuell für den elektronischen Münzdatensatz, sondern gilt für eine Mehrzahl von unterschiedlichen Münzdatensätzen (Gruppen-ID), um eine Anonymität zu bewahren und eine Münzdatensatz-verfolgung zu verhindern.

In einer vorteilhaften Ausgestaltung ist der zweite Prüfwert variabel und umfasst den ersten Prüfwert, um zu bestimmen, ob der elektronische Münzdatensatz zurückgegeben wird. Dabei könnte eine Summe gebildet werden und diese Summe mit einem vordefinierten Schwellwert verglichen werden. Beispielsweise könnte die Anzahl von Direktübertragungen ein Rückgabekriterium sein, sodass keine Infrastruktur zur Auswertung der Münzdatensätze hinsichtlich der Rückgabe des Münzdatensätze in dem Bezahlsystem vorzuhalten wäre, also ein einfachere und sicherere Verwaltung unter Schaffung der Kontrollfunktionen ermöglicht wäre.

In einer vorteilhaften Ausgestaltung wird das Überschreiten eines Schwellwerts des Prüfwerts des elektronischen Münzdatensatzes durch ein erstes Endgerät festgestellt und eine Aktion mit diesem elektronischen Münzdatensatz, insbesondere das direkte Übertragen dieses elektronischen Münzdatensatzes von dem ersten Endgerät an ein zweites Endgerät, wird nur dann durchgeführt, wenn im ersten Endgerät festgestellt wurde, dass kein anderer elektronischer Münzdatensatz im ersten Endgerät vorhanden ist. Auf diese Weise wird sichergestellt, dass mit dem Münzdatensatz eine Bezahltransaktion zwischen zwei Endgeräten trotz hoher Anzahl von direkten Übertragungen dieses Münzdatensatzes zwischen Endgeräten mangels alternativer Münzdatensätze in dem Endgerät dennoch durchgeführt und abgeschlossen werden kann.

In einer vorteilhaften Ausgestaltung wird das Überschreiten eines Blockier-Schwellwerts des Prüfwerts des elektronischen Münzdatensatzes durch ein erstes Endgerät festgestellt wird und eine Aktion mit diesem elektronischen Münzdatensatz, insbesondere das direkte Übertragen dieses elektronischen Münzdatensatzes von dem ersten Endgerät an ein zweites Endgerät, blockiert wird, unabhängig davon, ob im ersten Endgerät ein anderer elektronischer Münzdatensatz vorhanden ist oder nicht. Somit wird ein Schwellwert definiert, bei dessen Erreichen eine direkte Weitergabe (Übertragung) zwischen Endgeräten vollständig unterbunden (blockiert) wird. Beispielsweise könnte dieser Münzdatensatz in einen sicheren Speicherbereich abgelegt werden, zudem nur ein Rückgabe-Prozess aber kein Aktionsprozess des Endgeräts Zugriff hat.

Das drohende Blockieren kann vom Endgerät vorab erfasst werden und einem Nutzer des Endgeräts mitgeteilt werden, um das Blockieren des Münzdatensatzes durch sofortiges Rückgeben des Münzdatensatzes zu unterbinden. Zusätzlich oder alternativ kann das Endgerät bei Erkennen des Überschreitens des Blockier-Schwellwerts den elektronischen Münzdatensatz zurückgeben.

Bevorzugt ist der Schwellwert des Prüfwerts geringer als der Blockier-Schwellwert des Prüfwerts. Der Blockier-Schwellwert kann ein Vielfaches des Schwellwertes sein, um den Münzdatensatz nicht zu früh zu blockieren. Der Schwellwert liegt beispielsweise bei zehn, oder beispielsweise bei fünf oder beispielsweise bei 3. Der Blockier-Schwellwert liegt entsprechend bei 30, oder beispielsweise bei 15 oder beispielsweise bei 10.

In einer bevorzugten Ausgestaltung fragt die Herausgeberinstanz in vordefinierten periodischen Zeitabständen oder gezielt gesteuert Prüfwerte von Münzdatensätzen ab und fordert einen elektronischen Münzdatensatz automatisch zurück, wenn ein Prüfwert des elektronischen Münzdatensatzes überschritten ist.

Die Aufgabe wird zudem durch eine Überwachungsinstanz, eingerichtet zum Verwalten eines elektronischen Münzdatensatzes gelöst, wobei der elektronische Münzdatensatz von einer zentralen Herausgeberinstanz ausgegeben wurde, wobei für jeden elektronischen Münzdatensatz ein Prüfwert vorliegt, wobei der Prüfwert bei direktem Übertragen des elektronischen Münzdatensatzes zwischen zwei Endgeräten inkrementiert wird oder wobei der Prüfwert invariant bei einer, von Endgeräten mit dem elektronischen Münzdatensatz durchgeführten Aktion ist, wobei die Überwachungsinstanz eingerichtet ist zum Bestimmen, anhand des Prüfwertes des elektronischen Münzdatensatzes, ob der elektronische Münzdatensatz zurückgegeben wird; und/oder Markieren des Münzdatensatzes, wobei der Prüfwert und/oder der Münzdatensatz für den Zweck eines Anzeigens gesendet wurde.

Die Aufgabe wird zudem durch ein Endgerät gelöst. Das Endgerät weist eine Recheneinheit auf, die eingerichtet zum Verwalten von elektronischen Münzdatensätzen gemäß dem vorhergehend beschriebenen Verfahren ist. Das Endgerät weist auch Mittel zum Zugreifen auf einen Datenspeicher auf, wobei im Datenspeicher zumindest ein elektronischer Münzdatensatz abgelegt ist. Und das Endgerät weist eine Schnittstelle eingerichtet zum Ausgaben des zumindest einen elektronischen Münzdatensatzes an ein anderes Endgerät und/oder zum Anzeigen des elektronischen Münzdatensatzes an das Bezahlsystem und/oder zum Zurückgeben des elektronischen Münzdatensatzes auf.

Die Aufgabe wird zudem durch ein Verfahren in einem Bezahlsystem, insbesondere einer Geschäftsbank oder einer Überwachungsinstanz des Bezahlsystems, zum Verwalten von elektronischen Münzdatensätzen gelöst, wobei die elektronischen Münzdatensätze von einer zentralen Herausgeberinstanz ausgegeben werden, wobei für jeden elektronischen Münzdatensatz ein Prüfwert vorliegt, wobei der Prüfwert bei direktem Übertragen des elektronischen Münzdatensatzes zwischen zwei Endgeräten inkrementiert wird oder wobei der Prüfwert invariant bei einer, von Endgeräten mit dem elektronischen Münzdatensatz durchgeführten Aktion ist, wobei das Verfahren den Schritt umfasst: Bestimmen, durch das Bezahlsystem, anhand des Prüfwertes des elektronischen Münzdatensatzes, ob der elektronische Münzdatensatz zurückgegeben wird.

In dem Verfahren im Bezahlsystem werden bevorzugt ausschließlich maskierte elektronische Münzdatensätze verwaltet. Das Maskieren der Münzdatensätze wird später beschrieben und stellt die Anonymität im Bezahlsystem sicher.

In einer bevorzugten Ausgestaltung ist der elektronische Münzdatensatz zum Übertragen zwischen zwei Endgeräten vorgesehen, wobei der zu übertragende elektronische Münzdatensatz von dem Bezahlsystem in Folge des Bestimmens an die Herausgeberinstanz zurückgegeben wird und wobei anstelle des zu übertragenden elektronischen Münzdatensatzes ein elektronischer Münzdatensatz des Bezahlsystems oder ein neu ausgegebener elektronischer Münzdatensatz übertragen wird. Auf die oben genannten Vorteile bei einem derartigen Verfahren wird verwiesen.

In einer bevorzugten Ausgestaltung ist der elektronische Münzdatensatz zum Übertragen zwischen zwei Endgeräten vorgesehen, wobei das Bezahlsystem das Zurückgeben des zu übertragenden elektronischen Münzdatensatzes von einem (sendenden oder empfangenden) Endgerät an die Herausgeberinstanz fordert.

In einer bevorzugten Ausgestaltung wird durch das Bezahlsystem ein Zählerwert im Bezahlsystem betreffend den elektronischen Münzdatensatz unter Verwendung des Prüfwerts des elektronischen Münzdatensatzes bestimmt. Bei Überschreiten eines Schwellwertes des Zählerwertes, wird der elektronische Münzdatensatz (direkt oder indirekt) an die zentrale Herausgeberinstanz zurückgegeben. Dabei werden im Bezahlsystem bevorzugt ausschließlich maskierte Münzdatensätze verwaltet. Die Herausgeberinstanz oder das Bezahlsystem fordert den entsprechenden Münzdatensatz vom Endgerät an oder stellt eine entsprechende Information vom Bezahlsystem an das Endgerät zur (direkten) Rückgabe bereit. Der Zählerwert wird bevorzugt mit jeder Aktion am elektronischen Münzdatensatzes erhöht, wobei bevorzugt für unterschiedliche Aktionen der Zählerwert mit unterschiedlicher Gewichtung erhöht wird. Auf die oben genannten Vorteile bei einem derartigen Verfahren wird verwiesen.

In einer bevorzugten Ausgestaltung weist jeder elektronische Münzdatensatz einen Prüfwert auf, der invariant bei einer, von Endgeräten mit dem elektronischen Münzdatensatz durchgeführten Aktion ist, wobei dieser Prüfwert im Bezahlsystem zur Überprüfung der Rückgabe durch das Bezahlsystem hinterlegt ist und wobei bevorzugt der Prüfwert zumindest ein Wert aus der folgenden Liste ist Rückgabedatum des elektronischen Münzdatensatzes; Ausgabedatum des elektronischen Münzdatensatzes; Registrierungsdatum des elektronischen Münzdatensatzes; und Identifizierungswert des elektronischen Münzdatensatzes.

In einer bevorzugten Ausgestaltung wird bei einer Durchführung einer Aktion mit dem elektronischen Münzdatensatz durch das Bezahlsystem der Prüfwert des elektronischen Münzdatensatzes von dem Bezahlsystem zurückgesetzt. Das vereinfacht das Verfahren, da das Endgerät nicht an die Summe aller erlaubten Aktionen angepasst werden muss, sondern nur an die Summe nacheinander erlaubter direkter Übertragungen.

In einer bevorzugten Ausgestaltung wird beim Kombinieren (=Verbinden) von elektronischen Münzteildatensätzen zu einem kombinierten elektronischen Münzdatensatz durch das Bezahlsystem der höchste Prüfwert der elektronischen Münzteildatensätze bestimmt und dieser höchste Prüfwert als der Prüfwert des kombinierten elektronischen Münzdatensatzes übernommen wird.

In einer bevorzugten Ausgestaltung wird beim Kombinieren von elektronischen Münzteildatensätzen zu einem kombinierten elektronischen Münzdatensatz durch das Bezahlsystem ein neuer Prüfwert aus der Summe aller Prüfwerte der elektronischen Münzteildatensätzen geteilt durch das Produkt der Anzahl der Münzteildatensätze mit einem konstanten Korrekturwert bestimmt, wobei dieser neue Prüfwert als der Prüfwert des kombinierten elektronischen Münzdatensatzes übernommen wird, wobei der Korrekturwert größer gleich 1 ist und wobei bevorzugt der Korrekturwert von einer maximalen Abweichung der einzelnen Prüfwerte der elektronischen Münzteildatensätze oder von einem maximalen Prüfwert einer der elektronischen Münzteildatensätze abhängt, wobei weiter bevorzugt der Korrekturwert kleiner gleich 2 ist. Der Korrekturwert ist bezahlsystemweit konstant.

In einer bevorzugten Ausgestaltung erfolgt das Zurückgeben des elektronischen Münzdatensatzes von dem Bezahlsystem an die Herausgeberinstanz, wenn das Endgerät das Einlösen eines geldwerten Betrag des elektronischen Münzdatensatzes auf ein Konto des Bezahlsystems veranlasst und/oder wenn das Endgerät einen Wechsel des geldwerten Betrags des elektronischen Münzdatensatzes in ein anderes Währungssystem des Bezahlsystems anfordert.

Die Aufgabe wird zudem durch ein Bezahlsystem umfassend eine Überwachungsinstanz, ein erstes Endgerät und zumindest ein zweites Endgerät gelöst, wobei eine Herausgeberinstanz ausgebildet ist, einen elektronischen Münzdatensatzes für das Bezahlsystem zu erstellen, wobei das Bezahlsystem zum Ausführen des Verfahrens zum Verwalten von elektronischen Münzdatensätzen nach der vorhergehend beschriebenen Art ausgebildet ist.

Bevorzugt ist das Bezahlsystem eingerichtet, elektronische Münzdatensätze zum Verwalten von elektronischen Münzdatensätzen von weiteren Herausgeberinstanzen und/oder monetäre Beträge als Buchgeld zu verwalten.

In einer vorteilhaften Ausgestaltung weist der elektronische Münzdatensatz neben dem Prüfwert auch noch einen monetären Betrag, also ein Datum, das einen Geldwert des elektronischen Münzdatensatzes darstellt, und einen Verschleierungsbetrag, beispielsweise eine Zufallszahl, auf. Darüber hinaus kann der elektronische Münzdatensatz weitere Metadaten aufweisen, beispielsweise welche Währung der monetäre Betrag repräsentiert. Ein elektronischer Münzdatensatz wird durch diese wenigstens drei Daten (monetärer Betrag, Verschleierungsbetrag, Prüfwert) eindeutig repräsentiert. Jeder, der Zugriff auf diese drei Daten eines elektronischen Münzdatensatzes hat, kann diesen elektronischen Münzdatensatz zum Bezahlen verwenden. Die Kenntnis dieser drei Werte (monetärer Betrag, Verschleierungsbetrag, Prüfwert) ist also gleichbedeutend mit dem Besitz des digitalen Geldes. Dieser elektronische Münzdatensatz kann zwischen zwei Endgeräten direkt übertragen werden. In einer Ausgestaltung der Erfindung ist zum Austausch von digitalem Geld nur die Übertragung des monetären Betrags, des Verschleierungsbetrags und des Prüfwerts notwendig.

In einer bevorzugten Ausgestaltung wird im Verfahren und im Bezahlsystem jedem elektronischen Münzdatensatz ein entsprechender maskierter elektronischer Münzdatensatz zugeordnet. Die Kenntnis eines maskierten elektronischen Münzdatensatzes berechtigt nicht dazu, das digitale Geld, das durch den elektronischen Münzdatensatz repräsentiert wird, auszugeben. Dies stellt einen wesentlichen Unterschied zwischen den maskierten elektronischen Münzdatensätzen und den (nicht maskierten) elektronischen Münzdatensätzen dar. Ein maskierter elektronischer Münzdatensatz ist einzigartig und zudem eindeutig einem elektronischen Münzdatensatz zuzuordnen, es gibt also eine 1-zu-1 Beziehung zwischen einem maskierten elektronischen Münzdatensatz und einem (nicht-maskierten) elektronischen Münzdatensatz. Das Maskieren des elektronischen Münzdatensatzes erfolgt bevorzugt durch eine Recheneinheit des Endgeräts innerhalb des Endgeräts. Das Endgerät weist zumindest einen elektronischen Münzdatensatz auf. Alternativ kann das Maskieren durch eine Recheneinheit des Endgeräts, das den elektronischen Münzdatensatz empfängt, erfolgen.

Bei der Herausgabe eines elektronischen Münzdatensatzes von der Herausgeberinstanz an ein Endgerät kann parallel ein maskierter elektronischer Münzdatensatz von der Herausgeberinstanz an das Bezahlsystem, beispielsweise eine Überwachungsinstanz des Bezahlsystems, zur Registrierung des elektronischen Münzdatensatzes mit ausgegeben werden.

Dieser maskierte elektronische Münzdatensatz wird durch Anwenden einer Einwegfunktion, beispielsweise einer homomorphen Einwegfunktion,. beispielsweise einer kryptographischen Funktion, erhalten. Diese Funktion ist eine Einwegfunktion, also eine mathematische Funktion, die komplexitätstheoretisch "leicht" berechenbar, aber "schwer" bis praktisch unmöglich umzukehren ist. Hierbei wird unter Einwegfunktion auch eine Funktion bezeichnet, zu der bislang keine in angemessener Zeit und mit vertretbarem Aufwand praktisch ausführbare Umkehrung bekannt ist. Somit ist die Berechnung eines maskierten elektronischen Münzdatensatzes aus einem elektronischen Münzdatensatz vergleichbar mit bzw. entspricht der Generierung eines öffentlichen Schlüssels in einem Verschlüsselungsverfahren über eine Restklassengruppe. Vorzugsweise wird eine Einwegfunktion verwendet, die auf eine Gruppe operiert, in der das diskrete Logarithmusproblem schwer zu lösen ist, wie z. B. ein kryptographisches Verfahren analog einer elliptischer-Kurve-Verschlüsselung, kurz ECC, aus einem privaten Schlüssel eines entsprechenden Kryptographie-Verfahrens. Die umgekehrte Funktion, also die Erzeugung eines elektronischen Münzdatensatzes aus einem maskierten elektronischen Münzdatensatz (oder des Teils des elektronischen Münzdatensatzes), ist dabei - äquivalent zur Erzeugung des privaten Schlüssels aus einem öffentlichen Schlüssel in einem Verschlüsselungsverfahren über einer Restklassengruppe - sehr zeitintensiv. Wenn im vorliegenden Dokument von Summen und Differenzen oder anderen mathematischen Operationen die Rede ist, dann sind dabei im mathematischen Sinn die jeweiligen Operationen auf der entsprechenden mathematischen Gruppe zu verstehen, beispielsweise der Gruppe der Punkte auf einer elliptischen Kurve.

Die Einwegfunktion ist in einer Ausgestaltung homomorph, also ein kryptographisches Verfahren, welches über Homomorphie-Eigenschaften verfügt. Somit können mit dem maskierten elektronischen Münzdatensatz mathematische Operationen durchgeführt werden, die parallel dazu auch auf dem (nicht maskierten) elektronischen Münzdatensatz durchgeführt und somit nachvollzogen werden können. Mit Hilfe der homomorphen Einwegfunktion können Berechnungen mit maskierten elektronischen Münzdatensätzen in der Überwachungsinstanz nachvollzogen werden, ohne dass die entsprechenden (nicht maskierten) elektronischen Münzdatensätze dort bekannt sind. Daher können bestimmte Berechnungen mit elektronischen Münzdatensätzen, beispielsweise für ein Verarbeiten des (nicht maskierten) elektronischen Münzdatensatzes (zum Beispiel Aufteilen oder Verbinden), auch parallel mit den dazugehörigen maskierten elektronischen Münzdatensätzen nachgewiesen werden, beispielsweise zu Validierungsprüfungen oder zur Überwachung über die Rechtmäßigkeit des jeweiligen elektronischen Münzdatensatzes. Die Homomorphie-Eigenschaften treffen zumindest auf Additions- und Subtraktionsoperationen zu, sodass ein Aufteilen oder Kombinieren (=Verbinden) von elektronischen Münzdatensätzen auch mittels der entsprechend maskierten elektronischen Münzdatensätze in der Überwachungsinstanz festgehalten und von anfragenden Endgeräten und/ oder von der Überwachungsinstanz nachvollzogen werden kann, ohne Kenntnis über den monetären Betrag und das durchführende Endgerät zu erlangen.

Die Homomorphie-Eigenschaft ermöglicht es also, eine Eintragung von gültigen und ungültigen elektronischen Münzdatensätzen auf Basis ihrer maskierten elektronischen Münzdatensätze in einer Überwachungsinstanz zu führen ohne Kenntnis der elektronischen Münzdatensätze, auch wenn diese elektronische Münzdatensätze verarbeitet werden (aufgeteilt, verbunden, umschalten). Dabei wird sichergestellt, dass kein zusätzlicher monetärer Betrag geschaffen wurde oder dass eine Identität des Endgeräts in der Überwachungsinstanz festgehalten wird. Das Maskieren ermöglicht ein hohes Maß an Sicherheit, ohne einen Einblick in den monetären Betrag oder das Endgerät zu geben. Somit ergibt sich ein zweischichtiges Bezahlsystem. Zum einen existiert die Verarbeitungsschicht, in der maskierte elektronische Datensätze geprüft werden, und zum anderen die Direkttransaktionsschicht, in der zumindest zwei Endgeräte elektronische Münzdatensätze übertragen.

In einer weiteren Ausgestaltung ist die Einwegfunktion eine kryptographische Verschlüsselungsfunktion.

Das Anwenden der Einwegfunktion auf den elektronischen Münzdatensatz umfasst auch das Anwenden der Einwegfunktion auf einen Teil des elektronischen Münzdatensatzes, insbesondere auf den Verschleierungsbetrag, in einer Ausgestaltung nur auf den Verschleierungsbetrag.

Beim direkten Übertragen eines elektronischen Münzdatensatzes vom ersten Endgerät auf das zweite Endgerät haben zwei Endgeräte Kenntnis über den elektronischen Münzdatensatz. Um zu verhindern, dass das sendende erste Endgerät den elektronischen Münzdatensatz bei einem anderen (dritten) Endgerät ebenfalls zum Bezahlen verwendet (sogenanntes Double-Spending), kann ein Umschalten ("Switch") des übertragenen elektronischen Münzdatensatzes vom ersten Endgerät auf das zweite Endgerät ausgeführt. Das Umschalten kann bevorzugt automatisch beim Empfangen eines elektronischen Münzdatensatzes im zweiten Endgerät geschehen. Zusätzlich kann es auch auf Anforderung, beispielsweise eines Befehls vom ersten und/ oder zweiten Endgerät, erfolgen. Zusätzlich kann es auch auf Anforderung, beispielsweise eines Befehls vom ersten und/ oder zweiten Endgerät, erfolgen. Zusätzlich kann ein elektronischer Münzdatensatz auch in zumindest zwei Münzteildatensätze aufgeteilt werden ("Split"). Zusätzlich können zwei elektronische Münzdatensätze zu einem Münzdatensatz verbunden werden ("Merge").

Das Umschalten, das Aufteilen und das Verbinden sind verschiedene Modifikation an einem elektronischen Münzdatensatz, also Aktionen mit dem elektronischen Münzdatensatz. Diese Modifikationen bedingen ein Registrieren des maskierten Münzdatensatzes im Bezahlsystem, beispielsweise in einer Überwachungsinstanz. Dieses Registrieren im Zuge der Modifikationen führt dazu, dass der vom ersten Endgerät gesendete elektronische Münzdatensatz ungültig wird und bei einem zweiten Ausgeben-Versuch des ersten Endgeräts als entsprechend ungültig erkannt wird. Der vom zweiten Endgerät zu registrierende Münzdatensatz wird durch das Registrieren in der Überwachungsinstanz gültig. Das konkrete Durchführen der einzelnen Modifikationen wird später erläutert.

Ein Umschalten erfolgt zudem, wenn ein elektronischer Münzdatensatz verändert, beispielsweise aufgeteilt oder mit anderen elektronischen Münzdatensätzen verbunden wurde, insbesondere um einen zu zahlenden monetären Betrag passend begleichen zu können. Dabei sollte das Bezahlsystem stets in der Lage sein, jeden monetären Betrag zu zahlen.

Das Aufteilen und anschließende Registrieren hat den Vorteil, dass ein Besitzer des zumindest einen elektronischen Münzdatensatzes nicht gezwungen ist, stets den gesamten monetären Betrag auf einmal zu übertragen, sondern nunmehr entsprechende monetäre Teilbeträge zu bilden und zu übertragen. Der Geldwert kann aufgeteilt werden, solange alle elektronische Münzdatenteilsätze einen positiven monetären Betrag aufweisen, der kleiner ist als der monetäre Betrag des elektronische Münzdatensatzes, von dem aus aufgeteilt wird und die Summe der elektronischen Münzteildatensätze gleich dem aufzuteilenden elektronischen Münzteildatensatzes ist. Alternativ oder zusätzlich können feste Denominationen genutzt werden.

Das Verfahren weist bevorzugt die weiteren folgenden Schritte auf: Umschalten des übertragenen elektronischen Münzteildatensatzes; und/oder Verbinden des übertragenen elektronischen Münzdatensatzes mit einem zweiten elektronischen Münzdatensatz zu einem weiteren elektronischen Münzdatensatz, nämlich verbundenen elektronischen Münzdatensatz.

Beim Umschalten ergibt der vom ersten Endgerät erhaltene elektronische Münzteildatensatz einen neuen elektronischen Münzdatensatz, bevorzugt mit gleichem monetären Betrag, dem sogenannten umzuschaltenden elektronischen Münzdatensatz. Der neue elektronische Münzdatensatz wird vom zweiten Endgerät generiert, vorzugsweise indem der monetäre Betrag des erhaltenen elektronischen Münzdatensatzes als monetärer Betrag des umzuschaltenden elektronischen Münzdatensatzes verwendet wird. Dabei wird ein neuer Verschleierungsbetrag, beispielsweise eine Zufallszahl, generiert. Der neue Verschleierungsbetrag wird beispielsweise zum Verschleierungsbetrag des erhaltenen elektronischen Münzdatensatzes addiert, damit die Summe beider Verschleierungsbeträge (neu und erhalten) als Verschleierungsbetrag des umzuschaltenden elektronischen Münzdatensatzes dient. Nach dem Umschalten wird bevorzugt der erhaltene elektronische Münzteildatensatz und der umzuschaltende elektronische Münzteildatensatz im Endgerät durch Anwenden der beispielsweise homomorphen Einwegfunktion auf jeweils den erhaltenen elektronischen Münzteildatensatz und den umzuschaltenden elektronischen Münzteildatensatz maskiert, um entsprechend einen maskierten erhaltenen elektronischen Münzteildatensatz und einen maskierten umzuschaltenden elektronischen Münzteildatensatz zu erhalten.

Das Umschalten wird also durch Hinzufügen eines neuen Verschleierungsbetrags zum Verschleierungsbetrag des erhaltenen elektronischen Münzdatensatz abgesichert, wodurch ein Verschleierungsbetrag erhalten wird, den nur das zweite Endgerät kennt. Neu geschaffene Verschleierungsbeträge müssen eine hohe Entropie aufweisen, da sie als Blendungsfaktor für die entsprechenden maskierten elektronischen Münzteildatensätze verwendet werden. Bevorzugt wird dazu ein Zufallszahlengenerator auf dem Endgerät verwendet. Diese Absicherung kann in der Überwachungsinstanz nachverfolgt werden.

Im Rahmen des Umschaltens werden bevorzugt zusätzliche Informationen, die zum Registrieren des Umschaltens des maskierten elektronischen Münzdatensatzes in der entfernten Überwachungsinstanz benötigt werden, im Endgerät berechnet. Bevorzugt beinhalten die zusätzlichen Informationen einen Bereichsnachweis über den maskierten umzuschaltenden elektronischen Münzdatensatz und einen Bereichsnachweis über den maskierten erhaltenen elektronischen Münzdatensatz. Bei dem Bereichsnachweis handelt es sich um einen Nachweis, dass der monetäre Betrag des elektronischen Münzdatensatzes nicht negativ ist, der elektronische Münzdatensatz gültig erstellt und/ oder der monetäre Betrag und der Verschleierungsbetrag des elektronischen Münzdatensatzes dem Ersteller des Bereichsnachweises bekannt sind. Insbesondere dient der Bereichsnachweis dazu, diese(n) Nachweis(e) zu führen ohne den monetären Betrag und/oder den Verschleierungsbetrag des maskierten elektronischen Münzdatensatzes zu offenbaren. Diese Bereichsnachweise werden auch "Zero-Knowledge-Range-Proofs" genannt. Bevorzugt werden als Bereichsnachweis Ringsignaturen verwendet. Anschließend erfolgt ein Registrieren des Umschaltens des maskierten elektronischen Münzdatensatzes in der entfernten Überwachungsinstanz.

Der Schritt des Registrierens wird vorzugsweise dann ausgeführt, wenn das zweite Endgerät mit der Überwachungsinstanz verbunden ist. Während die elektronischen Münzdatensätze für direktes Bezahlen zwischen zwei Endgeräten verwendet werden, werden die maskierten Münzdatensätze mit dem Pseudonym in der Überwachungsinstanz registriert.

In einer weiter bevorzugten Ausgestaltung des Verfahrens wird für ein Verbinden von elektronischen Münzteildatensätzen ein weiterer elektronischer Münzdatensatz (verbundener elektronischer Münzdatensatz) aus einem ersten und einem zweiten elektronischen Münzteildatensatz bestimmt. Dabei wird der Verschleierungsbetrag für den zu verbindenden elektronischen Münzdatensatz durch Bilden der Summe aus den jeweiligen Verschleierungsbeträgen des ersten und des zweiten elektronischen Münzdatensatzes berechnet. Weiterhin wird vorzugsweise der monetäre Betrag für den verbundenen elektronischen Münzdatensatz durch Bilden der Summe aus den jeweiligen monetären Beträgen des ersten und des zweiten elektronischen Münzdatensatzes berechnet.

Nach dem Verbinden wird der erste elektronische Münzteildatensatz, der zweite elektronische Münzteildatensatz, sowie der zu verbindende elektronische Münzdatensatz im (ersten und/ oder zweiten) Endgerät durch Anwenden der beispielsweise homomorphen Einwegfunktion auf jeweils den ersten elektronischen Münzteildatensatz, den zweiten elektronischen Münzteildatensatz, sowie den zu verbindenden elektronischen Münzdatensatz maskiert, um entsprechend einen maskierten ersten elektronischen Münzteildatensatz, einen maskierten zweiten elektronischen Münzteildatensatz, sowie einen maskierten zu verbindenden elektronischen Münzdatensatz zu erhalten. Des Weiteren werden zusätzliche Informationen, die zum Registrieren des Verbindens der maskierten elektronischen Münzdatensätze in der entfernten Überwachungsinstanz benötigt werden, im Endgerät berechnet. Bevorzugt beinhalten die zusätzlichen Informationen einen Bereichsnachweis über den maskierten ersten elektronischen Münzteildatensatz und einen Bereichsnachweis über den maskierten zweiten elektronischen Münzteildatensatz. Bei dem Bereichsnachweis handelt es sich um einen Nachweis, dass der monetäre Betrag des elektronischen Münzdatensatzes nicht negativ ist, der elektronische Münzdatensatz gültig erstellt und/ oder der monetäre Betrag und der Verschleierungsbetrag des elektronischen Münzdatensatzes dem Ersteller des Bereichsnachweises bekannt sind. Insbesondere dient der Bereichsnachweis dazu, diese(n) Nachweis zu führen ohne den monetären Wert und/oder den Verschleierungsbetrag des maskierten elektronischen Münzdatensatzes zu offenbaren. Diese Bereichsnachweise werden auch "Zero-Knowledge-Range-Proofs" genannt. Bevorzugt werden als Bereichsnachweis Ringsignaturen verwendet. Anschließend erfolgt ein Registrieren des Verbindens der beiden maskierten elektronischen Münzteildatensätze in der entfernten Überwachungsinstanz.

Mit dem Schritt des Verbindens können zwei elektronische Münzdatensätze bzw. zwei elektronische Münzteildatensätze zusammengefasst werden. Dabei werden die monetären Beträge sowie auch die Verschleierungsbeträge addiert. Wie beim Aufteilen kann somit auch beim Verbinden eine Validität der beiden ursprünglichen Münzdatensätze durchgeführt werden.

In einer bevorzugten Ausgestaltung umfasst der Registrieren-Schritt das Empfangen des maskierten umzuschaltenden elektronischen Münzteildatensatzes in der Überwachungsinstanz, das Prüfen des maskierten umzuschaltenden elektronischen Münzteildatensatzes auf Validität; und das Registrieren des maskierten umzuschaltenden elektronischen Münzdatensatzes in der Überwachungsinstanz, wenn der Prüfen-Schritt erfolgreich ist, wodurch der umzuschaltende elektronische Münzteildatensatz als überprüft gilt.

Das Bezahlsystem ist bevorzugt zumindest zweischichtig aufgebaut und weist eine Direktbezahltransaktionsschicht, zum direkten Austauschen von (nicht maskierten) elektronischen Münzdatensätzen und eine Überwachungsschicht (die Überwachungsinstanz des Bezahlsystems) auf, welche auch als "Verschleierter-elektronischer-Datensatz-Ledger" bezeichnet werden kann, vorgesehen. In der Überwachungsinstanz, der Überwachungsschicht, werden bevorzugt keine Bezahltransaktionen festgehalten, sondern ausschließlich maskierte elektronische Münzdatensätze, deren Prüfwerte bzw. Zählerwerte und deren Modifikationen zum Zweck der Verifizierung der Gültigkeit von (nicht maskierten) elektronischen Münzdatensätzen. So wird die Anonymität der Teilnehmer des Bezahlsystems gewährleistet. Die Überwachungsinstanz gibt Auskunft über gültige und ungültige elektronische Münzdatensätze, um beispielsweise eine Mehrfach-Ausgabe des gleichen elektronischen Münzdatensatzes zu vermeiden oder die Echtheit des elektronischen Münzdatensatzes als gültig herausgegebenes elektronisches Geld zu verifizieren oder die Summe monetärer Beträge pro Endgerät zu erfassen, um diese Summe mit einem Grenzwert zu vergleichen und eine Modifikation entsprechend zu unterbinden oder zu gestatten. Die Überwachungsinstanz bestimmt anhand des Zählerwerts eines elektronischen Münzdatensatzes, ob der elektronische Münzdatensatz verfallen ist und zurückzugeben ist, oder entsprechend zu modifizieren ist, sodass er als zurückgegeben gilt.

Das Endgerät kann vorliegend ein Sicherheitelement aufweisen oder ein Sicherheitselement sein, in dem die elektronischen Münzdatensätze sicher abgelegt sind. Ein Sicherheitselement ist bevorzugt ein spezielles Computerprogrammprodukt, insbesondere in Form einer abgesicherten Laufzeitumgebung innerhalb eines Betriebssystems eines Endgeräts, englisch Trusted Execution Environments, TEE, gespeichert auf einem Datenspeicher, beispielsweise eines mobilen Endgeräts, einer Maschine, vorzugsweise Bankautomat. Alternativ ist das Sicherheitselement beispielsweise als spezielle Hardware, insbesondere in Form eines gesicherten Hardware-Plattform-Moduls, englisch Trusted Platform Module, TPM oder als ein eingebettetes Sicherheitsmodul, eUICC, eSIM, ausgebildet. Das Sicherheitselement stellt eine vertrauenswürdige Umgebung bereit.

Die Kommunikation zwischen zwei Endgeräten kann drahtlos oder drahtgebunden, oder z.B. auch auf optischem Weg, bevorzugt über QR-Code oder Barcode, erfolgen und kann als ein gesicherter Kanal ausgebildet sein. Der optische Weg kann beispielsweise die Schritte des Generierens einer optischen Codierung, insbesondere einer 2D-Codierung, vorzugsweise ein QR-Code, und des Einlesens der optischen Codierung umfassen. Somit ist der Austausch des elektronischen Münzdatensatzes beispielsweise durch kryptografische Schlüssel gesichert, beispielsweise einem für einen elektronischen Münzdatensatz-Austausch ausgehandelten Sitzungsschlüssel oder einem symmetrischen oder asymmetrischen Schlüsselpaar.

Durch das Kommunizieren zwischen Endgeräten, beispielsweise über ihre Sicherheitselemente, werden die ausgetauschten elektronischen Münzdatensätze vor Diebstahl oder Manipulation geschützt. Die Ebene der Sicherheitselemente ergänzt so die Sicherheit etablierter Blockchain-Technologie.

In einer bevorzugten Ausgestaltung erfolgt das Übertragen der Münzdatensätze als APDU Kommandos. Dazu ist der Münzdatensatz bevorzugt in einer (embedded) UICC als Sicherheitselement abgelegt und wird dort verwalten. Ein APDU ist ein kombinierter Kommando-/Datenblock eines Verbindungsprotokolls zwischen der UICC und einem Gerät. Die Struktur der APDU ist durch den Standard ISO-7816-4 definiert. APDUs stellen ein Informationselement der Anwendungsebene (Schicht 7 des OSI-Schichtenmodels) dar.

Darüber hinaus ist es vom Vorteil, dass die elektronischen Münzdatensätze in beliebiger Formatierung übertragen werden können. Dies impliziert, dass sie auf beliebigen Kanälen kommuniziert, also übertragen werden können. Sie müssen nicht in einem festgelegten Format oder in einem bestimmten Programm gespeichert werden.

Als ein Endgerät wird insbesondere ein mobiles Telekommunikationsendgerät, beispielsweise ein Smartphone angesehen. Alternativ oder zusätzlich kann das Endgerät auch ein Gerät, wie Wearable, Smartcard, Maschine, Werkzeug, Automat oder auch Behälter bzw. Fahrzeug sein. Ein erfindungsgemäßes Endgerät ist somit entweder stationär oder mobil. Das Endgerät ist vorzugsweise ausgebildet, das Internet und/ oder andere öffentliche oder private Netze zu nutzen. Dazu verwendet das Endgerät eine geeignete Verbindungstechnologie, beispielsweise Bluetooth, LoRa, NFC und/ oder WiFi und weist wenigstens eine entsprechende Schnittstelle auf. Das Endgerät kann auch ausgebildet sein, mittels Zugang zu einem Mobilfunknetz mit dem Internet und/ oder anderen Netzen verbunden zu werden.

In einer Ausgestaltung kann vorgesehen sein, dass das erste und/ oder zweite Endgerät bei den aufgezeigten Verfahren die empfangenen elektronischen Münzdatensätze bei Vorliegen oder Empfang mehrerer elektronischer Münzdatensätze diese entsprechend ihrer monetären Wertigkeit abarbeitet. So kann vorgesehen sein, dass elektronische Münzdatensätze mit höherer monetärer Wertigkeit vor elektronische Münzdatensätze mit niedriger monetärer Wertigkeit verarbeitet. In einer Ausgestaltung kann das erste und/ oder zweite Endgerät ausgebildet sein, nach Empfang eines elektronischen Münzdatensatzes diesen in Abhängigkeit von beigefügter Information, beispielsweise einer Währung oder Denomination, mit bereits im zweiten Endgerät vorhandenem elektronischen Münzdatensatz zu verbinden und entsprechend einen Schritt des Verbindens auszuführen. Weiterhin kann das zweite Endgerät auch zum automatisierten Ausführen eines Umschaltens nach Empfang des elektronischen Münzdatensatzes vom ersten Endgerät ausgebildet sein.

In einer Ausgestaltung werden beim Übertragen weitere Informationen, insbesondere Metadaten, vom ersten Endgerät auf das zweite Endgerät übermittelt, beispielsweise eine Währung. Diese Information kann in einer Ausgestaltung vom elektronischen Münzdatensatz umfasst sein.

Die Verfahren sind nicht auf eine Währung beschränkt. So kann das Bezahlsystem eingerichtet sein, verschiedene Währungen von unterschiedlichen Herausgeberinstanzen zu verwalten. Das Bezahlsystem ist beispielsweise eingerichtet einen elektronischen Münzdatensatz einer ersten Währung in ein elektronischen Münzdatensatz einer anderen Währung umzusetzen (=wechseln). Dieses Wechseln ist ebenfalls eine Modifikation des Münzdatensatzes. Mit dem Wechsel wird der ursprüngliche Münzdatensatz ungültig und gilt als zurückgegeben. Ein flexibles Bezahlen mit unterschiedlichen Währungen ist damit möglich und die Benutzerfreundlichkeit ist erhöht.

Die Verfahren ermöglichen zudem das Umsetzen des elektronischen Münzdatensatzes in Buchgeld, also beispielsweise das Einlösen des monetären Betrags auf ein Konto des Teilnehmers am Bezahlsystem. Dieses Umsetzen ist ebenfalls eine Modifikation. Mit dem Einlösen wird der elektronische Münzdatensatz ungültig und gilt als zurückgegeben.

In einer bevorzugten Ausgestaltung ist die Überwachungsinstanz eine entfernte Instanz. Damit ist beispielsweise zum Registrieren des elektronischen Münzdatensatzes der Aufbau einer Kommunikationsverbindung zu der Überwachungsinstanz vorgesehen. Diese Kommunikationsverbindung muss nunmehr nicht zwangsläufig während des Bezahlvorgangs vorhanden sein. Stattdessen kann das sendende (erste) Endgerät das Aufteilen und/oder Verbinden und/oder Umschalten auch an das empfangene (zweite) Endgerät delegieren.

Die Überwachungsinstanz ist als übergeordnete Instanz ausgebildet. Die Überwachungsinstanz ist demnach nicht zwingend in der Ebene bzw. in der Schicht der Endgeräten (Direkttransaktionsschicht) angeordnet. Vorzugsweise ist die Überwachungsinstanz zur Verwaltung und Prüfung von maskierten elektronischen Münzdatensätzen vorgesehen und einer Herausgeberschicht, in welcher auch eine Herausgeberinstanz angeordnet ist, und/ oder einer Überwachungsschicht angeordnet. Es ist denkbar, dass die Überwachungsinstanz zusätzlich weitere Transaktionen zwischen Endgeräten verwaltet und prüft.

Die Überwachungsinstanz ist bevorzugt eine dezentral gesteuerte Datenbank, englisch Distributed Ledger Technology, DLT, in der die maskierten elektronischen Münzdatensätze mit entsprechender Verarbeitung des maskierten elektronischen Münzdatensatzes registriert sind. In einer bevorzugten Ausgestaltung lässt sich daraus ein Gültigkeitsstatus des (maskierten) elektronischen Münzdatensatzes ableiten. Bevorzugt wird die Gültigkeit der (maskierten) elektronischen Münzdatensätze in der und durch die Überwachungsinstanz vermerkt. Die Registrierung der Verarbeitung bzw. der Verarbeitungsschritte kann auch das Registrieren von Prüfergebnissen und Zwischenprüfergebnissen betreffend die Gültigkeit eines elektronischen Münzdatensatzes betreffen, insbesondere das Bestimmen von Prüfwerten und Zählerwerten entsprechender Münzdatensätze. Ist eine Verarbeitung endgültig, wird dies beispielsweise durch entsprechende Markierungen oder einer abgeleiteten Gesamtmarkierung angezeigt. Eine endgültige Verarbeitung entscheidet sodann, ob ein elektronischer Münzdatensatz gültig oder ungültig ist. Auf diese Weise kann das Überschreiten eines Zählerwerts oder eines Prüfwerts dazu führen, dass der Münzdatensatz an die Herausgeberinstanz zurückzugeben ist oder als zurückzugeben erklärt wird.

Diese Datenbank ist weiter bevorzugt eine nicht-öffentliche Datenbank, kann aber auch als öffentliche Datenbank realisiert werden. Diese Datenbank ermöglicht es auf einfache Weise, Münzdatensätze bezüglich ihrer Gültigkeit zu prüfen und "Double-Spending", also Mehrfachausgaben, zu verhindern, ohne dass die Bezahltranskation selbst registriert oder protokolliert wird. Die DLT beschreibt dabei eine Technik für vernetzte Computer, die zu einer Übereinkunft über die Reihenfolge von bestimmten Transaktionen kommen und darüber, dass diese Transaktionen Daten aktualisieren. Es entspricht einem dezentral geführten Verwaltungssystem oder einer dezentral geführten Datenbank.

In einer weiteren Ausgestaltung kann die Datenbank auch als öffentliche Datenbank ausgebildet sein.

Alternativ ist die Überwachungsinstanz eine zentral geführte Datenbank, beispielsweise in Form eines öffentlich zugänglichen Datenspeichers oder als Mischform aus zentraler und dezentraler Datenbank.

Bevorzugt wird der zumindest eine initiale elektronische Münzdatensatz ausschließlich von der Herausgeberinstanz erstellt, wobei vorzugsweise die aufgeteilten elektronischen Münzdatensätze, insbesondere elektronischen Münzteildatensätze, auch durch ein Endgerät generiert werden können. Das Erstellen und das Wählen eines monetären Betrags beinhalten bevorzugt auch das Wählen eines Verschleierungsbetrags mit hoher Entropie. Die Herausgeberinstanz ist ein Rechensystem, welches bevorzugt entfernt vom ersten und/ oder zweiten Endgerät ist. Nach dem Erstellen des neuen elektronischen Münzdatensatzes wird der neue elektronische Münzdatensatz in der Herausgeberinstanz durch Anwenden der beispielsweise homomorphen Einwegfunktion auf den neuen elektronischen Münzdatensatz maskiert, um entsprechend einen maskierten neuen elektronischen Münzdatensatz zu erhalten. Des Weiteren werden zusätzliche Informationen, die zum Registrieren des Erstellens des maskierten neuen elektronischen Münzdatensatzes in der entfernten Überwachungsinstanz benötigt werden, im der Herausgeberinstanz berechnet. Bevorzugt sind diese weitere Informationen ein Nachweis, dass der (maskierte) neue elektronische Münzdatensatz von der Herausgeberinstanz stammt, beispielsweise durch eine signieren des maskierten neuen elektronischen Münzdatensatzes. In einer Ausgestaltung kann vorgesehen sein, dass die Herausgeberinstanz einen maskierten elektronischen Münzdatensatz beim Erzeugen des elektronischen Münzdatensatzes mit ihrer Signatur signiert. Die Signatur der Herausgeberinstanz wird dazu in der Überwachungsinstanz hinterlegt. Die Signatur der Herausgeberinstanz ist von der erzeugten Signatur des ersten Endgeräts verschieden.

Bevorzugt kann die Herausgeberinstanz einen elektronischen Münzdatensatz, der sich in ihrem Besitz befindet (also von dem sie den monetären Betrag und den Verschleierungsbetrag kennt) deaktivieren, indem sie den maskierten zu deaktivierenden elektronischen Münzdatensatz mit der beispielsweise homomorphen Einwegfunktion maskiert und einen Deaktivieren-Befehl für die Überwachungsinstanz vorbereitet. Teil des Deaktivieren-Befehls ist bevorzugt neben dem maskierten zu deaktivierenden elektronischen Münzdatensatzes auch der Nachweis, dass der Deaktivieren Schritt von der Herausgeberinstanz initiiert wurde, beispielsweise in Form des signierten maskierten zu deaktivierenden elektronischen Münzdatensatzes. Als zusätzliche Information könnten im Deaktivieren-Befehl Bereichsprüfungen für den maskierten zu deaktivierenden elektronischen Münzdatensatz enthalten sein. Das Deaktivieren kann die Folge eines Zurückgebens sein. Anschließend erfolgt ein Registrieren des Deaktivierens des maskierten elektronischen Münzdatensatzes in der entfernten Überwachungsinstanz. Mit dem Deaktivieren-Befehl wird der Schritt des Deaktivierens ausgelöst.

Die Schritte Erstellen und Deaktivieren erfolgen bevorzugt an gesicherten Orten, insbesondere nicht in den Endgeräten. In einer bevorzugten Ausgestaltung werden die Schritte des Erstellens und Deaktivierens nur von der Herausgeberinstanz durchgeführt bzw. angestoßen. Vorzugsweise finden diese Schritte an einen gesicherten Ort statt, beispielsweise in einer Hard- und Software-Architektur, die zur Verarbeitung von sensiblem Datenmaterial in unsicheren Netzen entwickelt wurde. Das Deaktivieren des entsprechenden maskierten elektronischen Münzdatensatz bewirkt, dass der entsprechende maskierte elektronische Münzdatensatz nicht mehr für weitere Verarbeitung, insbesondere Transaktionen, verfügbar ist. Jedoch kann in einer Ausführungsform vorgesehen sein, dass der deaktivierte maskierte elektronische Münzdatensatz bei der Herausgeberinstanz archivarisch bestehen bleibt. Dass der deaktivierte maskierte elektronische Münzdatensatz nicht mehr gültig bzw. zurückgegeben wird, kann beispielsweise mithilfe eines Flags oder einer anderen Codierung gekennzeichnet oder der deaktivierte maskierte elektronische Münzdatensatz kann zerstört und/ oder gelöscht werden. Der deaktivierte elektronische Münzdatensatz wird auch physisch vom Endgerät entfernt.

Durch das erfindungsgemäße Verfahren werden verschiedene Verarbeitungsoperationen (Modifikationen) für die elektronischen Münzdatensätze und die entsprechenden maskierten elektronischen Münzdatensätze ermöglicht. Jeder der Verarbeitungsoperationen (insbesondere das Erstellen, Deaktivieren, Aufteilen, Verbinden und Umschalten) wird dabei in der Überwachungsinstanz registriert und dort in unveränderlicher Form an die Liste der vorherigen Verarbeitungsoperationen für den jeweiligen maskierten elektronischen Münzdatensatz angehängt. Die Registrierung ist dabei vom Bezahlvorgang zwischen den Endgeräten sowohl zeitlich als auch örtlich (räumlich) unabhängig. Die Verarbeitungsoperationen "Erstellen" und "Deaktivieren" (=Zurückgeben), die die Existenz des monetären Betrags an sich betreffen, also die Schaffung und die Vernichtung bis hin der Zerstörung von Geld bedeuten, bedürfen einer zusätzlichen Genehmigung, beispielsweise in Form einer Signatur, durch die Herausgeberinstanz, um in der Überwachungsinstanz registriert (also protokolliert) zu werden. Die übrigen Verarbeitungsoperationen (Aufteilen, Verbinden, Umschalten), von denen das Aufteilen und das Verbinden auch von einem Endgerät auch an ein weiteres Endgerät delegiert werden können, bedürfen keiner Autorisierung durch die Herausgeberinstanz oder durch den Befehlsinitiator (= Zahler, bspw. das erste Endgerät).

Eine Verarbeitung in der Direkttransaktionsschicht betrifft nur die Besitzverhältnisse und/ oder die Zuordnung der Münzdatensätze zu Endgeräten der jeweiligen elektronischen Münzdatensätze. Eine Registrierung der jeweiligen Verarbeitung in der Überwachungsinstanz wird beispielsweise durch entsprechende Listeneinträge in einer Datenbank realisiert, die eine Reihe von Markierungen umfasst, die von der Überwachungsinstanz durchgeführt werden müssen. Eine mögliche Struktur für einen Listeneintrag umfasst beispielsweise Spalte(n) für einen Vorgänger-Münzdatensatz, Spalte(n) für einen Nachfolger-Münzdatensatz, eine Signatur-Spalte für die Herausgeberinstanz, eine Signatur-Spalte für das sendende und/oder empfangende Endgerät, eine Signatur-Spalte für Münzteilungsvorgänge und zumindest eine Markierungsspalte. Eine Änderung des Status der Markierung bedarf der Genehmigung durch die Überwachungsinstanz und muss sodann unveränderlich gespeichert werden. Eine Änderung ist endgültig, wenn und nur wenn die erforderlichen Markierungen durch die Überwachungsinstanz validiert wurden, d.h. nach der entsprechenden Prüfung beispielsweise vom Status "0" in den Status "1" gewechselt wurden. Scheitert eine Prüfung oder dauert zu lang, so wird sie stattdessen beispielsweise vom Status "-" in den Status "0" gewechselt. Weitere Statuswerte sind denkbar und/oder die hier genannten Statuswerte sind austauschbar. Bevorzugt wird die Gültigkeit der jeweiligen (maskierten) elektronischen Münzdatensätze aus den Statuswerten der Markierungen zusammengefasst jeweils in einer Spalte für jeden maskierten elektronischen Münzdatensatz, der im Registrieren der Verarbeitung involviert ist, dargestellt.

In einem weiteren Ausführungsbeispiel können wenigstens zwei vorzugsweise drei oder sogar alle der vorhergenannten Markierungen auch durch eine einzige Markierung ersetzt werden, die dann gesetzt wird, wenn alle Prüfungen erfolgreich abgeschlossen wurden. Des Weiteren lassen sich die je zwei Spalten für Vorgänger-Datensätze und Nachfolger-Datensätze zu jeweils einem zusammenfassen, in welchem alle Münzdatensätze gemeinsam ausgelistet sind. Dadurch könnten dann auch mehr als zwei elektronische Münzdatensätze je Feldeintrag verwaltet werden, und somit z.B. eine Aufspaltung in mehr als zwei Münzdatensätze realisiert werden.

Die Prüfungen durch die Überwachungsinstanz, um zu prüfen, ob eine Verarbeitung endgültig ist sind bereits oben beschrieben und sind insbesondere:

- Sind die maskierten elektronischen Münzdatensätze der Vorgänger-Spalte(n) gültig?
- Ergibt eine Überwachung den korrekten Prüfwert?
- Sind die Bereichsnachweise für die maskierten elektronischen Münzdatensätze erfolgreich?
- Ist die Signatur des maskierten elektronischen Münzdatensatzes eine gültige Signatur der Herausgeberinstanz?
- Überschreitet das sendende/empfangende Endgerät (Pseudonym) einen Grenzwert für einen maximal zulässigen monetären Betrag, insbesondere pro Zeiteinheit?

Bevorzugt gilt zudem, dass ein maskierter elektronischer Münzdatensatz ungültig ist, wenn einer der folgenden Prüfungen zutrifft, also wenn:

(1) der maskierte elektronische Münzdatensatz nicht in der Überwachungsinstanz registriert ist;

(2) die letzte Verarbeitung des maskierten elektronischen Münzdatensatzes angibt, dass es für ihn Vorgänger-Münzdatensätze gibt, diese letzte Verarbeitung aber nicht endgültig ist; oder

(3) die letzte Verarbeitung des maskierten elektronischen Münzdatensatzes angibt, dass es für ihn Nachfolger-Münzdatensätze gibt und diese letzte Verarbeitung endgültig ist;

(4) der maskierte elektronische Münzdatensatz nicht der Nachfolger von einem gültigen maskierten elektronischen Datensatz ist, es sei denn er ist von der Herausgeberinstanz signiert;

(5) der monetäre Betrag des maskierten elektronischen Münzdatensatzes dazu führt, dass ein Grenzwert für einen maximal zulässigen monetären Betrag, insbesondere pro Zeiteinheit, überschritten wird und die geforderte Deanonymisierung vom entsprechenden Endgerät abgelehnt wird.

In einem Aspekt ist ein Bezahlsystem zum Austausch von monetären Beträgen vorgesehen mit einer Überwachungsschicht mit einer bevorzugt dezentral gesteuerten Datenbank, englisch Distributed Ledger Technology, DLT, in der maskierte elektronische Münzdatensätze abgelegt sind; und einer Direkttransaktionsschicht mit zumindest zwei Endgeräten, in welche das vorhergehend beschriebene Verfahren durchführbar ist; und/oder eine Herausgeberinstanz zum Erzeugen eines elektronischen Münzdatensatzes. Dabei kann die Herausgeberinstanz nachweisen, dass der maskierte erzeugte elektronische Münzdatensatz von ihr erzeugt wurde, bevorzugt kann sich die Herausgeberinstanz durch das Signieren ausweisen und die Überwachungsinstanz kann die Signatur der Herausgeberinstanz prüfen.

In einer bevorzugten Ausgestaltung umfasst das Bezahlsystem eine Herausgeberinstanz zum Erzeugen eines elektronischen Münzdatensatzes. Dabei kann die Herausgeberinstanz nachweisen, dass der maskierte erzeugte elektronische Münzdatensatz von ihr erzeugt wurde, bevorzugt kann sich die Herausgeberinstanz durch das Signieren ausweisen und die Überwachungsinstanz kann die Signatur der Herausgeberinstanz prüfen.

Bevorzugt ist das Bezahlsystem zum Durchführen des oben genannten Verfahrens und/ oder wenigstens einer der Ausführungsvarianten ausgebildet.

Ein weiterer Aspekt betrifft ein Währungssystem umfassend eine Herausgeberinstanz, eine Überwachungsinstanz, ein erstes Endgerät und ein zweites Endgerät, wobei die Herausgeberinstanz ausgebildet ist, einen elektronischen Münzdatensatzes zu erstellen. Der maskierte elektronische Münzdatensatz ist ausgebildet, nachweisbar durch die Herausgeberinstanz erstellt zu sein. Die Überwachungsinstanz ist zum Ausführen eines Registrierschritts wie in dem oben genannten Verfahren ausgeführt, ausgebildet Vorzugsweise sind die Endgeräte, d.h. wenigstens das erste und zweite Endgerät zum Ausführen eines des oben genannten Verfahrens zum Übertragen geeignet.

In einer bevorzugten Ausführung des Währungssystems ist lediglich die Herausgeberinstanz berechtigt, einen elektronischen Münzdatensatz initial zu erstellen und final zurückzunehmen. Eine Verarbeitung, beispielsweise der Schritt des Verbindens, des Aufteilens und/ oder des Umschaltens, kann und wird vorzugsweise durch ein Endgerät durchgeführt. Der Verarbeitungsschritt des Deaktivierens kann vorzugsweise nur von der Herausgeberinstanz ausgeführt werden. Somit wäre lediglich die Herausgeberinstanz berechtigt, den elektronischen Münzdatensatzes und/ oder den maskierten elektronischen Münzdatensatz zu invalidieren.

Bevorzugt sind die Überwachungsinstanz und die Herausgeberinstanz in einer Serverinstanz angeordnet oder liegen als Computerprogrammprodukt auf einem Server und/ oder einem Computer vor.

Ein elektronischer Münzdatensatz kann dabei in einer Vielzahl von unterschiedlichen Erscheinungsformen vorliegen und damit über verschiedene Kommunikationskanäle, nachfolgend auch Schnittstellen genannt, ausgetauscht werden. Ein sehr flexibler Austausch von elektronischen Münzdatensätzen ist damit geschaffen.

Der elektronische Münzdatensatz ist beispielsweise in Form einer Datei darstellbar. Eine Datei besteht dabei aus inhaltlich zusammengehörigen Daten, die auf einem Datenträger, Datenspeicher oder Speichermedium gespeichert sind. Jede Datei ist zunächst eine eindimensionale Aneinanderreihung von Bits, die normalerweise in Byte-Blöcken zusammengefasst interpretiert werden. Ein Anwendungsprogramm (Applikation) oder ein Betriebssystem selbst interpretieren diese Bit- oder Bytefolge beispielsweise als einen Text, ein Bild oder eine Tonaufzeichnung. Das dabei verwendete Dateiformat kann unterschiedlich sein, beispielsweise kann es eine reine Textdatei sein, die den elektronischen Münzdatensatz repräsentiert. Dabei werden insbesondere der monetäre Betrag und die blinde Signatur als Datei abgebildet.

Der elektronische Münzdatensatz ist beispielsweise eine Folge von American Standard Code for Information Interchange, kurz ASCII, Zeichen. Dabei werden insbesondere der monetäre Betrag und die blinde Signatur als diese Folge abgebildet.

Der elektronische Münzdatensatz kann in einem Gerät auch von einer Darstellungsform in eine andere Darstellungsform umgewandelt werden. So kann beispielsweise der elektronische Münzdatensatz als QR-Code im Gerät empfangen werden und als Datei oder Zeichenfolge vom Gerät ausgegeben werden.

Diese unterschiedlichen Darstellungsformen von ein und demselben elektronischen Münzdatensatz ermöglichen einen sehr flexiblen Austausch zwischen Geräten unterschiedlicher technischer Ausrüstung unter Verwendung unterschiedlicher Übertragungsmedien (Luft, Papier, drahtgebunden) und unter Berücksichtigung der technischen Ausgestaltung eines Geräts. Die Wahl der Darstellungsform der elektronischen Münzdatensätze erfolgt bevorzugt automatisch, beispielsweise aufgrund erkannter oder ausgehandelter Übertragungsmedien und Gerätekomponenten. Zusätzlich kann auch ein Benutzer eines Gerät die Darstellungsform zum Austausch (=Übertragen) eines elektronischen Münzdatensatzes wählen.

In einem einfachen Fall ist der Datenspeicher ein interner Datenspeicher des Endgerät. Hier werden die elektronischen Münzdatensätze abgelegt. Ein einfacher Zugriff auf elektronische Münzdatensätze ist somit gewährleistet.

Der Datenspeicher ist insbesondere ein externer Datenspeicher, auch Online-Speicher genannt. Somit weist das Gerät nur ein Zugriffsmittel auf die extern und damit sicher abgelegten Münzdatensätze auf. Insbesondere bei einem Verlust des Geräts oder bei Fehlfunktionen des Geräts sind die elektronischen Münzdatensätze nicht verloren. Da der Besitz der (nicht maskierten) elektronischen Münzdatensätze gleich dem Besitz des monetären Betrags entspricht, kann durch Verwendung externer Datenspeicher Geld sicherer aufbewahrt werden.

Ist die Überwachungsinstanz eine entfernte Überwachungsinstanz, so verfügt das Gerät bevorzugt über eine Schnittstelle zur Kommunikation mittels einem üblichen Internet-Kommunikationsprotokoll, beispielsweise TCP, IP, UDP oder HTTP. Die Übertragung kann eine Kommunikation über das Mobilfunknetz beinhalten.

In einer bevorzugten Ausgestaltung ist das Endgerät dazu eingerichtet, die bereits beschriebenen Verarbeitungen, insbesondere das Aufteilen, Verbinden und Umschalten an einem elektronischen Münzdatensatz durchzuführen. Dazu ist die Recheneinheit dazu eingerichtet, einen umzuschaltenden elektronischen Münzdatensatz als den elektronischen Münzdatensatz zu maskieren und mit einem Pseudonym zu verknüpfen, den die Überwachungsinstanz als maskierten elektronischen Münzdatensatz zum Registrieren des Umschalten-Befehls bzw. im Umschalten-Schritt braucht. Auf diese Weise kann ein elektronischer Münzdatensatz - wie oben beschrieben - umgeschaltet werden.

Zudem oder alternativ ist die Recheneinheit bevorzugt eingerichtet, einen in eine Anzahl von Münzteildatensätzen aufgeteilten elektronischen Münzdatensatz zu maskieren und mit einem Pseudonym zu verknüpfen, um einen maskierten elektronischen Münzdatensatz und ggf. maskierte elektronischen Münzteildatensätze zu erhalten, die in der Überwachungsinstanz registriert werden können. Auf diese Weise kann ein elektronischer Münzdatensatz - wie oben beschrieben - aufgeteilt werden.

Zudem oder alternativ ist die Recheneinheit bevorzugt eingerichtet, einen aus einem ersten und einem zweiten elektronischen Münzdatensatz zu verbindenden elektronischen Münzteildatensatzes als den elektronischen Münzdatensatz zu maskieren und mit einem Pseudonym zu verknüpfen, um einen maskierten zu verbindenden Münzdatensatzes als den maskierten elektronischen Münzdatensatz zu erhalten, der in der Überwachungsinstanz registriert wird. Auf diese Weise kann ein elektronischer Münzdatensatz - wie oben beschrieben - verbunden werden.

In einer bevorzugten Ausgestaltung ist die Schnittstelle zum Ausgeben des zumindest einen elektronischen Münzdatensatzes eine elektronische Anzeigeeinheit des Geräts, die zum Anzeigen des elektronischen Münzdatensatzes und dadurch (auch) zum Ausgeben des elektronischen Münzdatensatzes in visueller Form eingerichtet ist. Wie bereits beschrieben wurde, ist der elektronische Münzdatensatz dann beispielsweise in Form eines optoelektronisch erfassbaren Codes, einem Bild, etc. zwischen Geräten austauschbar.

In einer bevorzugten Ausgestaltung ist die Schnittstelle zum Ausgeben des zumindest einen elektronischen Münzdatensatzes eine Protokollschnittstelle zum drahtlosen Senden des elektronischen Münzdatensatzes an das andere Gerät mittels eines Kommunikationsprotokolls für Drahtloskommunikation. Dabei ist insbesondere eine Nahfeldkommunikation, beispielsweise mittels Bluetooth-Protokoll oder NFC-Protokoll oder IR-Protokoll vorgesehen, alternativ oder zusätzlich sind WLAN Verbindungen oder Mobilfunkverbindungen denkbar. Der elektronische Münzdatensatz wird dann gemäß den Protokolleigenschaften angepasst und übertragen.

In einer bevorzugten Ausgestaltung ist die Schnittstelle zum Ausgeben des zumindest einen elektronischen Münzdatensatzes eine Datenschnittstelle zum Bereitstellen des elektronischen Münzdatensatzes an das andere Gerät mittels einer Applikation. Im Unterschied zur Protokollschnittstelle wird hier der elektronische Münzdatensatz mittels einer Applikation übertragen. Diese Applikation überträgt sodann den Münzdatensatz in einem entsprechenden Dateiformat. Es kann ein für elektronische Münzdatensätze spezifisches Dateiformat verwendet werden. In einfachster Form wird der Münzdatensatz als ASCII-Zeichenfolge oder als Textnachricht, beispielsweise SMS, MMS, Instant-Messenger-Nachricht (wie Threema oder WhatsApp) übertragen. In einer alternativen Form wird der Münzdatensatz als APDU-Zeichenfolge übertragen. Es kann auch eine Geldbörsen-Applikation vorgesehen sein. Hierbei stellen die austauschenden Geräte bevorzugt sicher, dass ein Austausch mittels der Applikation möglich ist, also dass beide Geräte die Applikation aufweisen und austauschbereit sind.

In einer bevorzugten Ausgestaltung weist das Gerät weiter eine Schnittstelle zum Empfangen von elektronischen Münzdatensätzen auf.

In einer bevorzugten Ausgestaltung ist die Schnittstelle zum Empfangen des zumindest einen elektronischen Münzdatensatzes ein elektronisches Erfassungsmodul des Geräts, eingerichtet zum Erfassen eines, in visueller Form dargestellten elektronischen Münzdatensatzes. Das Erfassungsmodul ist dann beispielsweise eine Kamera oder ein Barcode bzw. QR-Code Scanner.

In einer bevorzugten Ausgestaltung ist die Schnittstelle zum Empfangen des zumindest einen elektronischen Münzdatensatzes eine Protokollschnittstelle zum drahtlosen Empfangen des elektronischen Münzdatensatzes von einem anderen Gerät mittels eines Kommunikationsprotokolls für Drahtloskommunikation. Dabei ist insbesondere eine Nahfeldkommunikation, beispielsweise mittels Bluetooth-Protokoll oder NFC-Protokoll oder IR-Protokoll, vorgesehen. Alternativ oder zusätzlich sind WLAN Verbindungen oder Mobilfunkverbindungen denkbar.

In einer bevorzugten Ausgestaltung ist die Schnittstelle zum Empfangen des zumindest einen elektronischen Münzdatensatzes eine Datenschnittstelle zum Empfangen des elektronischen Münzdatensatzes von dem anderen Gerät mittels einer Applikation. Diese Applikation empfängt sodann den Münzdatensatz in einem entsprechenden Dateiformat. Es kann ein für Münzdatensätze spezifisches Dateiformat verwendet werden. In einfachster Form wird der Münzdatensatz als ASCII-Zeichenfolge oder als Textnachricht, beispielsweise SMS, MMS, Threema oder WhatsApp übertragen. In einer alternativen Form wird der Münzdatensatz als APDU-Zeichenfolge übertragen. Zusätzlich kann die Übertragung mittels einer Geldbörsen-Applikation erfolgen.

In einer bevorzugten Ausgestaltung ist die Schnittstelle zum Empfangen des zumindest einen elektronischen Münzdatensatzes auch die Schnittstelle zum Ausgeben des elektronischen Münzdatensatzes, sodass eine Schnittstelle sowohl zum Senden als auch zum Empfangen des Münzdatensatzes vorgesehen ist.

Bevorzugt ist der als elektronischer Münzdatensatz zu erhaltende Teil des monetären Betrags ein elektronischer Münzteildatensatz eines zuvor aufgeteilten elektronischen Münzdatensatzes. Dabei kann das andere Gerät (also das Gerät vom Nutzer) zum Aufteilen entweder selbständig in Kontakt zur Überwachungsinstanz treten oder das Gerät als vertrauenswürdige Instanz zur Kommunikation mit der Überwachungsinstanz nutzen. In einer bevorzugten Ausführung würde das andere Gerät in diesem Fall dem Gerät einen elektronischen Münzdatensatz mit der Bitte um symmetrisches Aufteilen beispielsweise in einen ersten vordefinierten elektronischen Münzteildatensatz und einen zweiten vordefinierten elektronischen Münzteildatensatz.

In einer bevorzugten Ausgestaltung umfassend das Gerät zumindest ein Sicherheitselement-Lesegerät, eingerichtet zum Lesen eines Sicherheitselements; einen Zufallszahlengenerator; und/oder eine Kommunikationsschnittstelle zu einem Tresormodul und/ oder Bankinstitut mit zu autorisierendem Zugriff auf ein Bankkonto.

In einer bevorzugten Ausgestaltung ist der Datenspeicher ein gemeinsamer Datenspeicher, auf den zumindest noch ein anderes Gerät zugreifen kann, wobei jedes der Endgeräte eine Applikation aufweist, wobei diese Applikation zum Kommunizieren mit der Überwachungsinstanz zum entsprechenden Registrieren von elektronischen Münzteildatensätzen eingerichtet ist.

Vorgeschlagen wird hierbei also eine Lösung, die digitales Geld in Form von elektronischen Münzdatensätzen herausgibt, die an die Verwendung von konventionellen (analogen) Banknoten und/oder Münzen angelehnt ist. Das digitale Geld wird hierbei durch elektronische Münzdatensätze abgebildet. Wie bei (analogen) Banknoten werden auch diese elektronischen Münzdatensätze für alle Formen von Zahlungen, einschließlich Peer-to-Peer-Zahlungen und/oder POS-Zahlungen, verwendbar. Die Kenntnis aller Bestandteile (insbesondere monetärer Betrag und Verschleierungsbetrag) eines gültigen elektronischen Münzdatensatzes ist gleichbedeutend mit dem Besitz (Eigentum) des digitalen Geldes. Es ist daher ratsam, diese gültigen elektronischen Münzdatensätze vertraulich zu behandeln, also beispielsweise in einem Sicherheitselement/ Tresormodul eines Endgeräts aufzubewahren und dort zu verarbeiten. Um über die Authentizität eines elektronischen Münzdatensatzes zu entscheiden und Doppelausgaben zu verhindern, werden in der Überwachungsinstanz maskierte elektronische Münzdatensätze als einzigartige, korrespondierende öffentliche Darstellung des elektronischen Münzdatensatzes vorgehalten. Die Kenntnis oder der Besitz eines maskierten elektronischen Münzdatensatzes stellt nicht den Besitz von Geld dar. Vielmehr gleicht dies dem Überprüfen der Echtheit des analogen Zahlungsmittels.

Die Überwachungsinstanz enthält auch Markierungen über durchgeführte und geplante Verarbeitungen des maskierten elektronischen Münzdatensatzes. Aus den Markierungen zu den Verarbeitungen wird ein Status des jeweiligen maskierten elektronischen Münzdatensatzes abgeleitet, der angibt, ob der entsprechende (nicht maskierte) elektronische Münzdatensatz gültig, d.h. zahlungsbereit ist. Daher wird ein Empfänger eines elektronischen Münzdatensatzes zunächst einen maskierten elektronischen Münzdatensatz erzeugen und sich durch die Überwachungsinstanz die Gültigkeit der maskierten elektronischen Münzdatensatz authentifizieren lassen. Ein großer Vorteil dieser erfindungsgemäßen Lösung ist, dass das digitale Geld auf Endgeräte, Händler, Banken und andere Nutzer des Systems verteilt wird, aber kein digitales Geld oder weitere Metadaten bei der Überwachungsinstanz - also einer gemeinsamen Instanz - gespeichert wird.

Die vorgeschlagene Lösung kann in bestehende Zahlsysteme und Infrastrukturen eingebunden werden. Insbesondere können eine Kombination aus analogen Zahlungsvorgängen mit Geldscheinen und Münzen und digitale Zahlungsvorgänge gemäß der vorliegenden Lösung vorliegen. So kann ein Bezahlvorgang mit Banknoten und/ oder Münzen erfolgen, das Wechselgeld bzw. Rückgeld liegt aber als elektronischer Münzdatensatz vor. Zur Transaktion können beispielsweise ATMs mit entsprechender Konfiguration, insbesondere mit geeigneter Kommunikationsschnittstelle, und/ oder mobile Endgeräte vorgesehen sein. Weiterhin ist ein Umtausch von elektronischem Münzdatensatz in Banknoten bzw. Münzen denkbar.

Die vorliegend aufgeführten Schritte des Erstellens, Umschaltens, Aufteilens, Verbinden und Deaktivierens (Zurückgebens) werden jeweils durch einen entsprechenden Erstell-, Umschalt-, Aufteil-, Verbinden- bzw. Deaktivier-Befehl (Rückgabe-Befehle) ausgelöst.

## KURZE ZUSAMMENFASSUNG DER FIGUREN

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:

Fig.1a,b ein Ausführungsbeispiel eines Bezahlsystems gemäß dem Stand der Technik;

Fig.2 ein Ausführungsbeispiel eines Verfahrensablaufdiagramms eines erfindungsgemäßen Verfahrens;

Fig.3 ein Ausführungsbeispiel einer Weiterbildung des in Fig. 2 gezeigten Verfahrensablaufdiagramms;

Fig.4 ein Ausführungsbeispiel einer Weiterbildung des in Fig. 2 gezeigten Verfahrensablaufdiagramms;

Fig.5 ein Ausführungsbeispiel eines Verfahrensablaufdiagramms eines erfindungsgemäßen Verfahrens;

Fig.6 ein Ausführungsbeispiel eines Systems gemäß der Erfindung;

Fig.7 ein Ausführungsbeispiel eines Bezahlsystems, insbesondere einer Überwachungsinstanz;

Fig.8 ein Ausführungsbeispiel eines Systems gemäß der Erfindung zum Aufteilen und Umschalten von elektronischen Münzdatensätzen;

Fig.9 ein Ausführungsbeispiel eines Bezahlsystems gemäß der Erfindung zum Verbinden von elektronischen Münzdatensätzen;

Fig. 10 ein Ausführungsbeispiel eines Verfahrensablaufdiagramms eines erfindungsgemäßen Verfahrens und entsprechenden Verarbeitungsschritte eines Münzdatensatzes;

Fig.11 ein Ausführungsbeispiel eines Verfahrensablaufdiagramms eines erfindungsgemäßen Verfahrens und entsprechenden Verarbeitungsschritte eines Münzdatensatzes;

Fig. 12 ein Ausführungsbeispiel eines erfindungsgemäßen Geräts;

Fig. 13 ein System gemäß der Erfindung.

## FIGURENBESCHREIBUNG

Die Fig.1a und Fig.1b zeigen ein Ausführungsbeispiel eines Bezahlsystems gemäß dem Stand der Technik und wurden in der Einleitung bereits kurz beschrieben. Wiederholend wird darauf hingewiesen, dass das Endgerät M7 den empfangenen Münzdatensatz $C_1$ als seinen Münzdatensatz $C_7$ an der Instanz 4 registrieren lassen möchte und die Instanz 4 feststellt, dass der Münzdatensatz $C_1$ bereits ungültig ist. In der Folge akzeptiert die Instanz 4 weder den vermeintlich gültigen Münzdatensatz $C_1$ noch den umzuschaltenden Münzdatensatz $C_7$.

Das Problem kann auftreten, wenn beispielsweise ein Angreifer M1 den Münzdatensatz $C_1$ an zwei Teilnehmer M2 und M3 direkt weitergibt. Sobald M2 den empfangenen Münzdatensatz in der Überwachungsinstanz 4 registrieren lässt, wird der Münzdatensatz $C_1$ ungültig. Im dargestellten Beispiel wird der Münzdatensatz $C_1$ ungültig, da das Teilen der Überwachungsinstanz mitgeteilt wird. Ein argloser Teilnehmer (Endgerät) M3 gibt den Münzdatensatz $C_1$ direkt weiter, ohne ihn registrieren zu lassen. Erst das Endgerät M7 durchbricht die direkte Übertragungskette, wobei die Überwachungsinstanz 4 die Ungültigkeit vom Münzdatensatz $C_1$ erkennt und somit die doppelte Weitergabe erkannt wird. Eine Zentralbank (nachfolgend synonym für eine Herausgeberinstanz der elektronischen Münzdatensätze) könnte nun einerseits die Anzahl des direkten Übertragens von Münzdatensätzen limitieren wollen und möchte andererseits im Fall eines erkannten Angriffs nachvollziehen können, wo der Angriff stattgefunden hat.

Ein Angriff (doppeltes Ausgeben eines elektronischen Münzdatensatz von M1) wird im Stand der Technik also erst relativ spät entdeckt und es wird eine Vielzahl von Direktübertragungen in unerlaubter Weise ausgeführt. Ob der Angreifer M1 nachträglich identifizierbar ist, hängt von Implementierungsdetails des Gesamtsystems ab. So können die Endgeräte für die Überwachungsinstanz beispielsweise anonym, pseudonym oder identitätsgebunden sein. Zudem steigt durch die Vielzahl von Transaktionen eines elektronischen Münzdatensatzes und auch durch die fortschreitende Lebensdauer das Risiko, dass an dem elektronischen Münzdatensatz Manipulation(en) vorgenommen werden. Wünschenswert ist also, dass bei Übersteigen einer gewissen Lebensdauer oder Anzahl von Aktionen insgesamt am/mit dem Münzdatensatz, der Münzdatensatz verfällt.

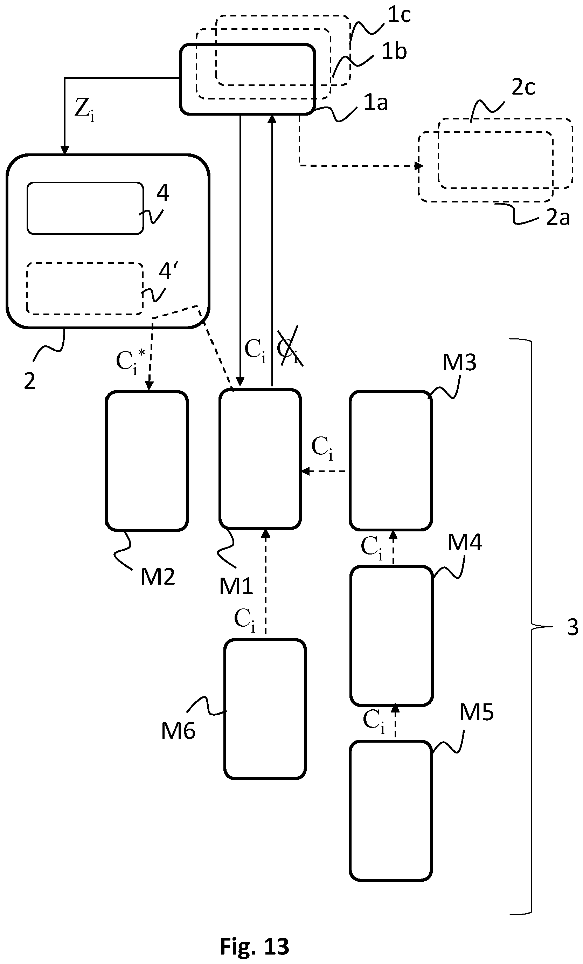

Das erfindungsgemäße Gesamtsystem umfasst eine Herausgeberinstanz (Zentralbank), mindestens ein Bezahlsystem und eine Vielzahl von Teilnehmern, die als Endgeräte Mx dargestellt sind. Das Bezahlsystem umfasst beispielsweise Geschäftsbanken und einen (oder mehrere) zentrale Überwachungsinstanzen, die die Registrierung der Münzdatensätze vornimmt und die Modifikationen am Münzdatensatz prüft und protokolliert. Das Gesamtsystem (System) ist in Fig. 13 dargestellt.

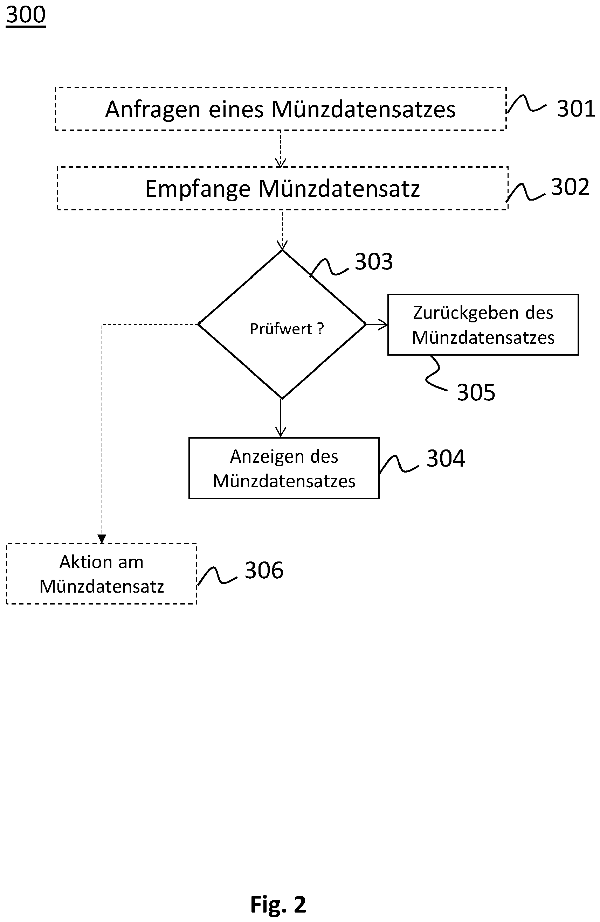

Die Fig.2 zeigt ein Ausführungsbeispiel eines Verfahrensablaufdiagramms eines erfindungsgemäßen Verfahrens 300 in einem Endgerät. Nach einem optionalen Schritt 302 und einem möglicherweise vorgelagerten Schritt 301, liegt ein Münzdatensatz bei dem Endgerät vor.

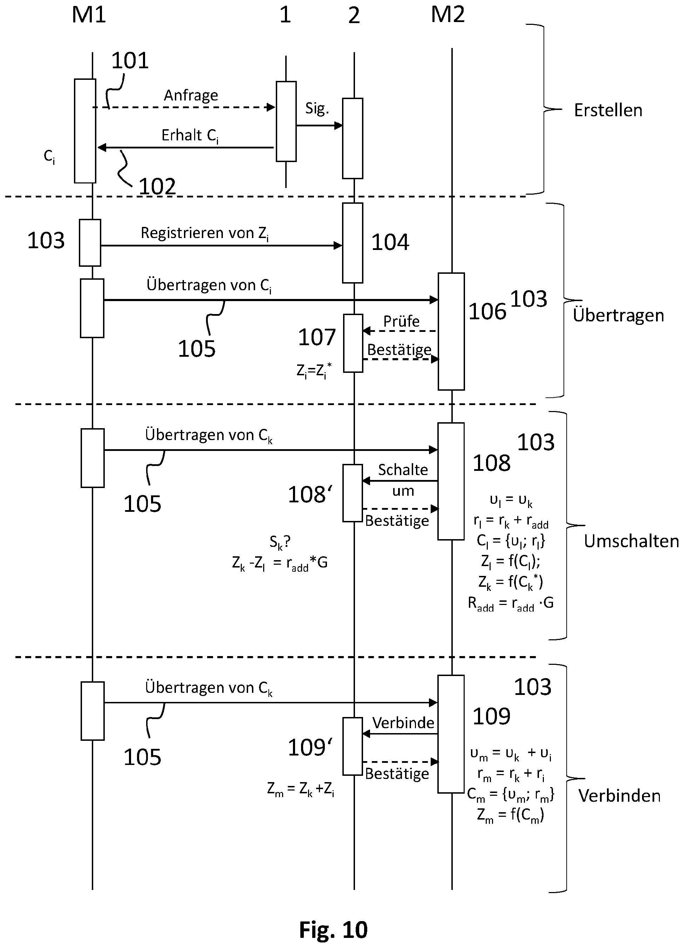

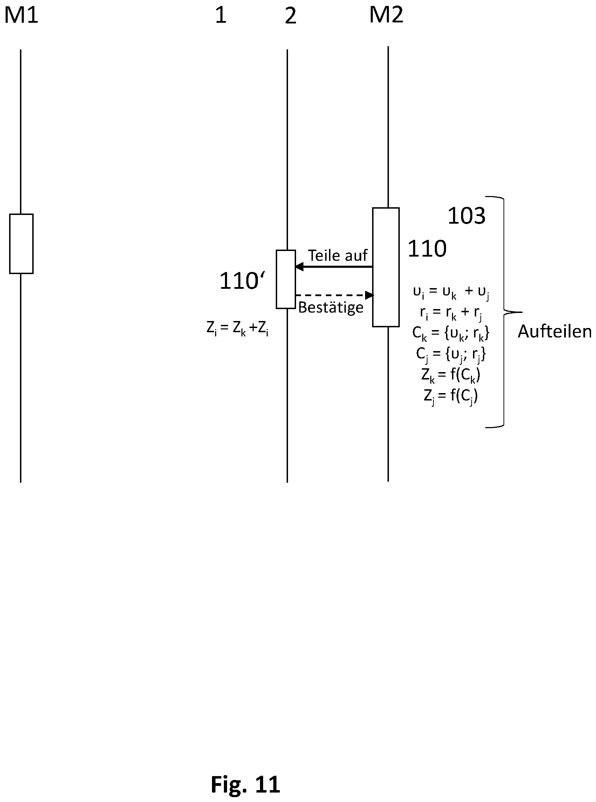

Dabei wird ein elektronischer Münzdatensatz im optionalen Schritt 301 - beispielsweise bei einer Herausgeberinstanz 1 - angefragt und im optionalen Schritt 302 von einem Endgerät, von der Herausgeberinstanz oder von einem Bezahlsystem empfangen. Der Schritt 302 könnte optional auch einem Sende-Kommando eines anderen Endgerätes entsprechen. Ein anderes Endgerät sendet also mit dem Sende-Kommando einen Münzdatensatz an das Endgerät und hat - beispielsweise unmittelbar oder irgendwann - vorher den Münzdatensatz selbst erhalten. Die Schritte 301 und 302 können den Schritten 101 und 102 der Fig. 10 und 11 entsprechen.

In Schritt 303 bestimmt das Endgerät anhand eines Prüfwertes des elektronischen Münzdatensatzes, ob dieser elektronische Münzdatensatz anzuzeigen und/oder zurückzugeben ist, bzw. ob er normal verwendet werden. Das Ergebnis der Prüfung im Schritt 303 kann sein, dass für den Münzdatensatz ein Schritt 304, 305 ausgeführt wird oder dass - jetzt oder später - eine beliebige Aktion (Aufteilen, Verbinden, Umschalten, Übertragen, Einlösen, Wechseln) in Schritt 306 mit dem Münzdatensatz durchgeführt werden darf (wird). Im Schritt 304 wird der geprüfte Münzdatensatz von dem Endgerät bei dem Bezahlsystem angezeigt. Im Schritt 305 wird der geprüfte Münzdatensatz zurückgegeben, beispielsweise direkt bzw. indirekt an die zentrale Herausgeberinstanz oder an eine Überwachungsinstanz bzw. an das Bezahlsystem, welche den Münzdatensatz ihrerseits (an die zentrale Herausgeberinstanz) zurückgeben. Das Bestimmen (bzw. Prüfen) 303 erfolgt vor einer Verwendung des Münzdatensatzes, insbesondere zumindest einmalig für jeden empfangenen Münzdatensatz und/oder vor jeder Verwendung. Der mögliche Verfahrensablauf 300 kann nur einen der oder beide der Schritte 304, 305 umfassen. Entsprechend wird in Schritt 303 nur für einen oder für beide der Schritte 304, 305 geprüft, ob sie auszuführen sind.

Das Anzeigen im Schritt 304 kann als ein Melden des Münzdatensatzes bei der Überwachungsinstanz (für das Endgerät) verstanden werden. Ab einer gewissen Anzahl von direkten Weitergaben des Münzdatensatzes erfolgt somit ein automatisches Registrieren des Münzdatensatzes in dem Bezahlsystem, das Registrieren wird also systematisch erzwungen. Anzumerken ist, dass das Endgerät beim Registrieren für die Überwachungsinstanz anonym, pseudonym oder identitätsbekannt sein kann. Für den geprüften Münzdatensatz wird das anzeigende Endgerät als neuer Inhaber zugeordnet, bevorzugt entsteht - wie später näher erläutert - aus dem geprüften Münzdatensatz ein modifizierter Münzdatensatz für das anzeigende Endgerät.

In Ausgestaltungen des Systems ist eine Rückgabe an die Zentralbank nicht notwendig und ggf. unsinnig. Dies gilt insbesondere wenn aus einem herausgegebenen Münzdatensatz im Bezahlsystem ziemlich schnell hintereinander modifizierte Münzdatensätze werden. Dann muß der Münzdatensatz nur bei Überschreiten einer Anzahl von Direktübertragungen zwischen Endgeräten wieder im Bezahlsystem angezeigt (gemeldet) werden, sodass dieser Münzdatensatz in dem Bezahlsystem (für das Endgerät) registriert ist. Beispielsweise wird der Münzdatensatz nach dem Anzeigen-Schritt 304 modifiziert, also beispielsweise umgeschaltet, werden. Der umzuschaltende Münzdatensatz gilt dann als zurückgenommen. Ein Teil der normalen Aktionen 306, die bei positivem Prüfungsergebnis zulässig sind, kann also auch als Anzeigen-Schritt 304 dienen.

In dem elektronischen Münzdatensatz wird vorliegend ein Prüfwert als Datenelement geführt. Dieser Prüfwert wird bei jeder direkten Übertragung dieses Münzdatensatzes zwischen Endgeräten inkrementiert. Im Bezahlsystem kann zudem ein Zählerwert geführt oder bestimmt werden, der den Prüfwert einbezieht, beispielsweise als Summe des bisherigen (registrierten) Zählerwerts und des Prüfwerts, um zu bestimmen, ob der Münzdatensatz zurückzugeben ist. Jede Aktion mit dem Münzdatensatz erhöht diesen Zählerwert. Verschiedene Aktionstypen gewichten den Zählerwert unterschiedlich, sodass beispielsweise eine direkte Weitergabe des Münzdatensatzes ein höheres Gewicht hat als eine Modifikation (Aufteilen, Kombinieren). Auf diese Weise wird die Lebensdauer und die darin geführten Aktionen eines Münzdatensatzes bewertet und Kriterien für dessen Rückgabe entsprechend der geführten Aktionen definiert. Der Prüfwert und auch der Zählerwert bilden den Lebenszyklus des Münzdatensatzes ab, anhand dessen dann über die Rückgabe entschieden wird.

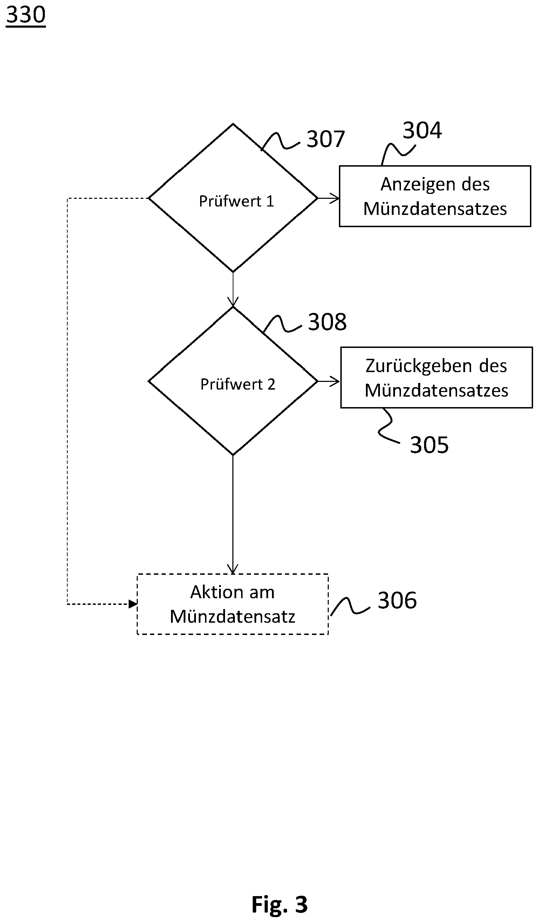

In der Fig.3 ist ein Ausführungsbeispiel 330 einer Weiterbildung des in Fig. 2 gezeigten Verfahrensablaufdiagramms dargestellt. In Fig.3 ist der Schritt 303 des Verfahrens der Fig.2 detaillierter mit zwei Teilschritten 307, 308 dargestellt. Ein Münzdatensatz weist dazu zwei Prüfwerte auf. Für einen Münzdatensatz, also beispielsweise nach dem Erhalten-Schritt 302 bzw. dem Sende-Kommando, wird anhand eines ersten Prüfwerts des Münzdatensatzes bestimmt 307, ob der Münzdatensatz in dem Bezahlsystem angezeigt werden muss, also ein Melden des Münzdatensatzes zum Erzwingen einer Registrierung im Bezahlsystem erfolgt. In Schritt 307 wird insbesondere die Anzahl direkter Weitergaben geprüft und bei Überschreiten eines Schwellwertes das Anzeigen bei dem Bezahlsystem gemäß Schritt 304 erzwungen.

Ein zweiter Prüfwert im Münzdatensatz wird im Schritt 308 verwendet, um zu bestimmen, ob der Münzdatensatz an die zentrale Herausgeberinstanz zurückzugeben ist. Der zweite Prüfwert ist aktionsinvariant und wird bei Aktionen des Münzdatensatzes unverändert weitergeführt. Dieser zweite Prüfwert ist beispielsweise ein Rückgabedatum. Dieses Rückgabedatum wird von der Herausgeberinstanz während dem Erzeugen des Münzdatensatzes als Datenelement in den Münzdatensatz integriert. Wird bei der Prüfung im Schritt 308 festgestellt, dass das Rückgabedatum erreicht oder überschritten ist, wird der Münzdatensatz von dem Endgerät an die Herausgeberinstanz zurückgegeben.

Der zweite Prüfwert kann beispielsweise ein Ausgabedatum sein. Dieses Ausgabedatum wird von der Herausgeberinstanz während dem Erzeugen des Münzdatensatzes als Datenelement in den Münzdatensatz integriert. Wird bei der Prüfung im Schritt 308 festgestellt, dass das Ausgabedatum vor einem vordefinierten Referenzausgabedatum liegt, beispielsweise ein fest vorgegebener Zeitraum, beispielsweise ein Jahr oder ein Monat, wird der Münzdatensatz von dem Endgerät an die Herausgeberinstanz zurückgegeben.

Der zweite Prüfwert kann beispielsweise ein Identifizierungswert sein. Der Identifizierungswert ist nicht Münzdatensatz-individuell und ermöglicht lediglich den Schluss auf eine Gruppe von Münzdatensätzen. Dieser Identifizierungswert wird von der Herausgeberinstanz während dem Erzeugen des Münzdatensatzes als Datenelement in den Münzdatensatz integriert. Wird bei der Prüfung im Schritt 308 festgestellt, dass der Identifizierungswert mit einen vordefinierten Identifizierungswert übereinstimmt, wird der Münzdatensatz von dem Endgerät an die Herausgeberinstanz zurückgegeben.

Der zweite Prüfwert kann beispielsweise ein Registrierungsdatum des elektronischen Münzdatensatzes sein, also ein Datum, wann der Münzdatensatz letztmalig in dem Bezahlsystem registriert wurde. Dieses Registrierungsdatum wird bei einer Registrierung des Münzdatensatzes im Bezahlsystem als Datenelement in den Münzdatensatz integriert. Wird bei der Prüfung im Schritt 308 festgestellt, dass das Registrierungsdatum vor einem fest vorgegebenen Zeitraum, beispielsweise einem Jahr oder einem Monat vor dem aktuellen Datum liegt, wird der Münzdatensatz von dem Endgerät an die Herausgeberinstanz zurückgegeben.

Das Endgerät kennt also den (die) Grenzwert(e) für den zweiten Prüfwert für die Prüfung im Schritt 308. Ergibt die Prüfung im Schritt 308, dass keine Rückgabe des Münzdatensatzes erfolgen müsse, so wird eine Aktion am Münzdatensatz im Schritt 308 veranlasst bzw. ist die normale Verwendung mit dem Münzdatensatz zulässig.

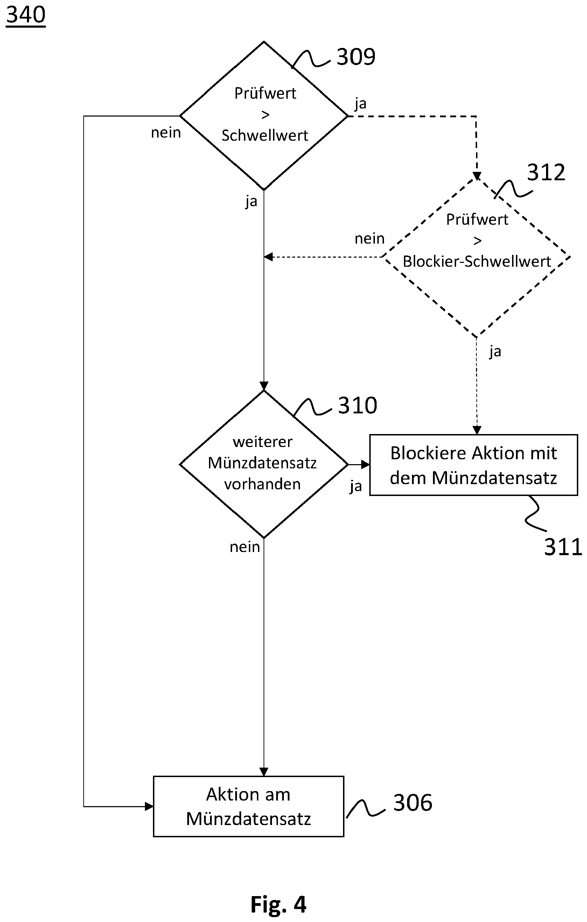

In der Fig.4 ist ein weiteres Ausführungsbeispiel 340 einer Weiterbildung des in Fig.2 gezeigten Verfahrensablaufdiagramms gezeigt. In Fig.3 ist ebenfalls der Schritt 303 des Verfahrens der Fig.2 detaillierter dargestellt. Die Verfahren der Fig.3 und 4 können miteinander kombiniert werden. In der Fig.4 wird im Schritt 309 ein Prüfwert (beispielsweise der erste Prüfwert und/oder der zweite Prüfwert der Fig.3) mit einem vordefinierten Schwellwert verglichen.

Ist der Prüfwert kleiner als der Schwellwert, wird im Schritt 306 die (geplante) Aktion am/mit dem Münzdatensatz durchgeführt.

Ist der Prüfwert größer (als der Schwellwert oder) gleich dem Schwellwert, wird im Schritt 310 geprüft, ob ein weiterer Münzdatensatz in dem Endgerät vorhanden ist. Ist ein weiterer Münzdatensatz in dem Endgerät vorhanden, beispielsweise in einem Datenspeicher, auf den das Endgerät Zugriff hat, dann wird der (geprüfte) Münzdatensatz im Schritt 311 blockiert.

Blockieren heißt in diesem Zusammenhang, insbesondere dass der Münzdatensatz nicht an ein anderes Endgerät weitergegeben wird. Dazu wird der Münzdatensatz beispielsweise in einen sicheren Datenspeicher transferiert, auf das nur ein Rückgabe-Prozess oder einen Anzeige-Prozess des Endgeräts Zugriff hat. Der Münzdatensatz kann im blockierten Zustand nicht mehr für Aktionen eingesetzt werden. Er ist zwingend an die Herausgabeinstanz zurückzugeben oder muss dem Bezahlsystem angezeigt (zwingende Registrierung) werden. Der weitere (andere) Münzdatensatz ist ein Münzdatensatz des Bezahlsystems und von der gleichen Herausgeberinstanz generiert. Das Prüfen im Schritt 310 kann in Abhängigkeit eines monetären Betrags erfolgen, sodass der monetäre Betrag aller verfügbaren Münzdatensätze geringer sein muss als der zu zahlende Betrag (also der monetäre Betrag des zu prüfenden Münzendatensatz). Dieser Schritt 310 ermöglicht beispielsweise das Durchführen von Bezahlvorgängen obwohl der Münzdatensatz bereits die Kriterien für eine Rückgabe oder ein Anzeigen erfüllt, um das Verfahren benutzerfreundlich und alltagstauglich zu machen.

In einer alternativen Ausgestaltung des Verfahrens 340 der Fig. 4, die gestrichelt dargestellt ist, wird nach dem Erkennen, dass der Prüfwert größer oder gleich dem Schwellwert (Schritt 309) ist, eine zweite Prüfung im Schritt 312 durchgeführt, bei der der Prüfwert mit einem Blockier-Schwellwert verglichen wird. Ist der Prüfwert größer oder gleich dem Blockier-Schwellwert, wird der Münzdatensatz in jedem Fall im Schritt 311 blockiert. Dieses Blockieren erfolgt unabhängig vom Vorhandensein weiterer (anderer) Münzdatensätze (Schritt 310). Das Verfahren 340 verwendet dann zwei unterschiedliche Schwellwerte für den gleichen Prüfwert (Schwellwert ist ungleich Blockier-Schwellwert). Eine Aktion mit dem Münzdatensatz ist bei Überschreiten des Schwellwertes nur noch möglich, wenn kein anderer (weiterer) Münzdatensatz im Endgerät verfügbar ist. Überschreitet der Prüfwert auch einen Blockier-Schwellwert (zweiter Schwellwert) wird eine Aktion mit dem Münzdatensatz, insbesondere aber das direkte Übertragen des Münzdatensatzes blockiert, um ein Mindestmaß an Sicherheit zu garantieren. Der Blockier-Schwellwert kann ein Vielfaches des Schwellwerts sein, um das Endgerät nicht vorschnell zu blockieren. Der Schwellwert des Prüfwerts beträgt beispielsweise eine Anzahl von 10 oder 5 oder 3 Direktübertragungen des Münzdatensatzes. Der Blockier-Schwellwert beträgt beispielsweise 30 oder 15 oder 10 Direktübertragungen des Münzdatensatzes.

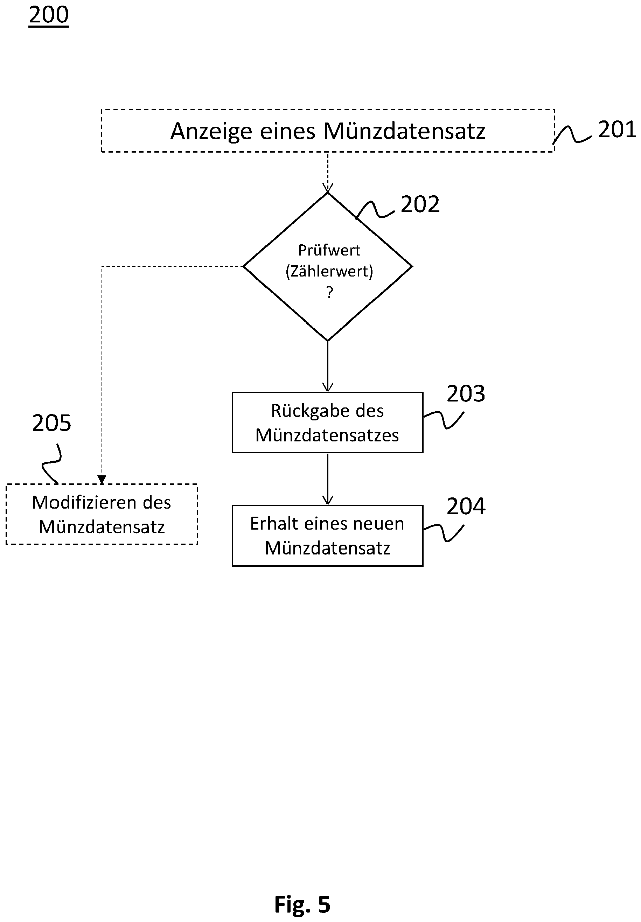

In der Fig.5 ist ein Ausführungsbeispiel eines Verfahrensablaufdiagramms eines erfindungsgemäßen Verfahrens 200 in einem Bezahlsystem gezeigt. Hier wird im Bezahlsystem ein Münzdatensatz 201 von einem Endgerät angezeigt. Das Anzeigen erfolgt beispielsweise durch ein in Fig.2 bis Fig.4 dargestelltes Verfahren 300, 330, 340. Im Schritt 202 prüft das Bezahlsystem, insbesondere die Überwachungsinstanz des Bezahlsystems, einen Prüfwert. Dazu wurde der Prüfwert dem Bezahlsystem bereitgestellt. Alternativ wird ein Zählerwert in dem Bezahlsystem mit Hilfe des Prüfwerts geprüft. Alternativ kann das Anzeigen eines Münzdatensatzes ohne Übermittlung des Prüfwerts erfolgen, insbesondere wenn das Anzeigen bezahlsystemweit bedeutet, dass ein Prüfwert einen gewissen Mindestwert hat.

In einer Ausführung des Verfahrens speichert das Bezahlsystem den Prüfwert (zweiten Prüfwert, siehe Fig.3) auch. Im Bezahlsystem wird im Schritt 202 dann beispielsweise eine Prüfung auf Zeit, wenn der Prüfwert eine Datumsangabe ist, oder eine Prüfung eines Grenzwerts, wenn der Prüfwert ein Identifizierungswert ist, durchgeführt. Die Prüfung im Schritt 202 kann anhand von Nachschlagetabellen, LUT, von der Herausgeberinstanz oder eines Zeitablauf erfolgen.

Das Ergebnis der Prüfung führt entweder zu einer Rückgabe des Münzdatensatzes 203 an die Herausgeberinstanz oder alternativ zu einer Modifizierung des Münzdatensatzes durch das Bezahlsystem. Die Rückgabe im Schritt 203 kann auch eine Aufforderung an das anzeigende Endgerät sein, den Münzdatensatz bei der Herausgeberinstanz zurückzugeben. Alternativ fordert das Bezahlsystem die Rückgabe durch das Endgerät an. Im Schritt 204 wird als Folge der Rückgabe dann ein neuer Münzdatensatz, der einen identischen monetären Betrag zum zurückgegebenen Münzdatensatz aufweist, von der Herausgeberinstanz generiert und bereitgestellt. Alternativ wird der monetäre Betrag des zurückgegebenen Münzdatensatzes als Buchgeld einem Konto des Teilnehmers (Endgerätebesitzers) gutgeschrieben.

Beispielsweise wird ein Zählerwert auf Basis des ersten Prüfwerts pii bestimmt. Verschiedene Aktionstypen können dabei unterschiedlich gewichtet werden. So wird beispielsweise der Aktionstyp direkte Weitergabe mit einer Konstante A gewichtet. Das Konstante A ist möglicherweise am höchsten, da dieser Aktionstyp die größte Unsicherheit für das Bezahlsystem 2 darstellt. Indirekte Weitergaben (also Weitergaben, die mit einem Umschalten-Kommando abgesichert werden, werden) werden beispielsweise mit einer Konstante B gewichtet, wobei A größer als B ist. Sonstige Aktionstypen (Aufteilen, Verbinden etc.) werden mit einem geringen Gewicht C gewichtet, da die Unsicherheit für das Bezahlsystem am geringsten ist. Das Kriterium des Gewichts für einen Aktionstyp ist insbesondere die Sicherheit, die dieser Aktionstyp mit sich bringt, wobei das Gewicht umgekehrt proportional zur Sicherheit ist.

Wenn die Aktion ein Aufteilen ist, wird nach Prüfung des Prüfwerts bzw. des Zählerwertes ein erhöhter Wert für alle aufgeteilten Münzdatensätze übernommen. Wenn die Aktion ein Verbinden ist, wird ein neuer Prüfwert unter Berücksichtigung aller alten Prüfwert bestimmt.

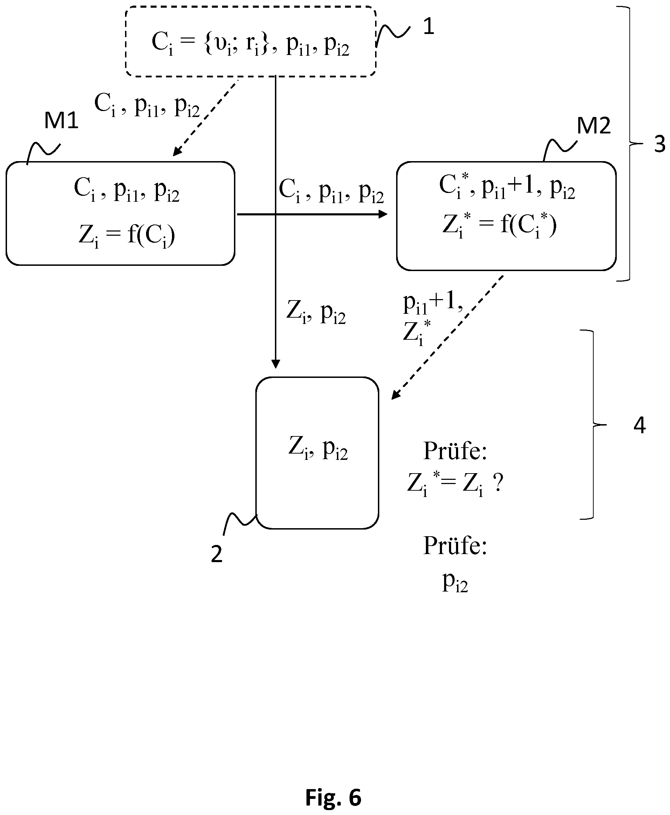

Fig.6 zeigt ein Ausführungsbeispiel eines Bezahlsystems mit Endgeräten M1 und M2. Die Endgeräte M1 und M2 können dabei auch Geräte sein.

Dabei wird in einer Herausgeberinstanz 1, beispielsweise einer Zentralbank, ein elektronischer Münzdatensatz Ci erzeugt. Zu dem elektronischen Münzdatensatz Ci wird ein maskierter elektronische Münzdatensatz $Z_i$ erzeugt, mit einem Verschleierungsbetrag versehen und in einem "Verschleierten-elektronischen-Datensatz-Ledger" als Bezahlsystem 2 registriert. Als Ledger wird im Rahmen dieser Erfindung eine Liste, ein Verzeichnis, vorzugsweise eine Datenbankstruktur verstanden. Der elektronische Münzdatensatz Ci wird an ein erstes Endgerät M1 ausgegeben.

Beispielsweise wurde dazu als Verschleierungsbetrag $r_i$ eine echte Zufallszahl erzeugt. Der Verschleierungsbetrag $r_i$ wird mit einem monetären Betrag $\upsilon_i$ verknüpft. Dem i-te elektronische Münzdatensatz $C_1$ wird zudem ein oben beschriebener ersten Prüfwert $p_{i1}$ und einen zweiten Prüfwert $p_{i2}$ zugeordnet. Ein erfindungsgemäßer i-ten elektronischen Münzdatensatz könnte demnach lauten:

$$C_i = \{ \upsilon_i; r_i \}, p_{i1}, p_{i2} \qquad\qquad (1)$$

Ein gültiger elektronischer Münzdatensatz kann zur Bezahlung eingesetzt werden. Der Besitzer der beiden

Werte $\upsilon_i$ und $r_i$ ist daher im Besitz des digitalen Geldes. Das digitale Geld ist aber definiert durch ein Paar bestehend aus einem gültigen elektronischen Münzdatensatz und einem entsprechenden maskierten elektronischen Münzdatensatz $Z_i$. Ein maskierter elektronischer Münzdatensatz $Z_i$ wird durch Anwenden einer Einwegfunktion f ($C_i$) gemäß Gleichung (2) erhalten:

$$Z_i = f(C_i) \qquad (2)$$

Die Einwegfunktion f($C_i$) ist beispielsweise homomorph. Diese Funktion f ($C_i$) ist öffentlich, d.h. jeder Systemteilnehmer kann diese Funktion aufrufen und verwenden. Diese Funktion f ($C_i$) ist gemäß Gleichung (3) oder Gleichung (3a) beispielsweise definiert:

$$Z_i = \upsilon_i \cdot H + r_i \cdot G \qquad (3)$$

$$Z_i = r_i \cdot G \qquad (3a)$$

wobei H und G Generatorpunkte einer Gruppe G, in der das diskrete Logarithmusproblem schwer ist, mit den Generatoren G und H, für die der diskrete Logarithmus der jeweils anderen Basis unbekannt ist. Beispielsweise ist G (Gleichung (3), (3a)) als auch H (Gleichung (3) jeweils ein Generatorpunkt einer elliptischen Kurvenverschlüsselung, ECC, - also private Schlüssel der ECC, sind. Im Fall von Gleichung (3) müssen diese Generatorpunkte G und H in der Art gewählt werden, dass der Zusammenhang von G und H nicht öffentlich bekannt ist, sodass bei:

$$G = n \cdot H \qquad (4)$$

die Verknüpfung n praktisch nicht auffindbar sein darf, um zu verhindern, dass der monetäre Betrag $\upsilon_i$ manipuliert wird und trotzdem ein gültiges $Z_i$ berechnet werden könnte. Die Gleichung (3) ist ein "Pederson-Commitment für ECC", das sicherstellt, dass der monetäre Betrag $\upsilon_i$ einer Überwachungsinstanz 2 zugestanden, also "commited", werden kann, ohne diesen der Überwachungsinstanz 2 zu offenbaren. Der öffentlichen und entfernten Überwachungsinstanz 2 wird daher nur der maskierte Münzdatensatz $Z_i$ zugesendet (offenbart).

Auch wenn im vorliegenden Beispiel eine Verschlüsselung basierend auf elliptischen Kurven beschrieben ist bzw. wird, so wäre auch ein anderes kryptographische Verfahren denkbar, welches auf einem diskreten logarithmischen Verfahren beruht und auf Gleichung (3a) basiert.

Bei Anwendung der Gleichung (3a) wird eine Einwegfunktion nur auf einen Teil des Münzdatensatzes C, hier der Verschleierungsbetrag r, angewendet, dieser teilmaskierte Münzdatensatz kann auch als R bezeichnet werden.

Die Gleichung (3) ermöglicht durch die Entropie des Verschleierungsbetrags $r_i$, dass auch bei kleinem Wertebereich für monetäre Beträge $\upsilon_i$ ein kryptografisch starkes $Z_i$ erhalten wird. Somit ist ein einfacher Brute-Force-Angriff durch bloßes Schätzen von monetären Beträgen $\upsilon_i$ praktisch nicht möglich.

Die Gleichungen (3) und (3a) verwenden Einwegfunktionen, das heißt, dass die Berechnung von Zi aus Ci einfach ist, da ein effizienter Algorithmus existiert, wohingegen die Berechnung von $C_i$ ausgehend von Zi sehr schwer ist, da kein in polynomialer Zeit lösbarer Algorithmus existiert.

Zudem ist die Gleichung (3) homomorph für Addition und Subtraktion, das heißt es gilt:

$$Z_i + Z_j = (\upsilon_i \cdot H + r_i \cdot G) + (\upsilon_j \cdot H + r_j \cdot G) = (\upsilon_i + \upsilon_j) \cdot H + (r_i + r_j) \cdot G \qquad (5)$$

Somit können Additions-Operationen und Subtraktions-Operationen sowohl in der Direkttransaktionsschicht 3 also auch parallel in der Überwachungsschicht 4 ausgeführt werden, ohne dass die Überwachungsschicht 4 Kenntnis von den elektronischen Münzdatensätzen Ci hat. Die homomorphe Eigenschaft der Gleichung (3) ermöglicht eine Überwachung von gültigen und ungültigen elektronischen Münzdatensätzen Ci auf alleiniger Basis der maskierten Münzdatensätze $Z_i$ zu führen und sicherzustellen, dass kein neuer monetärer Betrag $\upsilon_j$ geschaffen wurde.

Durch diese homomorphe Eigenschaft kann der Münzdatensatz $C_i$ gemäß Gleichung (1) aufgeteilt werden in:

$$C_i = C_j + C_k = \{\upsilon_j; r_j\} + \{\upsilon_k; r_k\} \qquad (6)$$

wobei gilt:

$$v_i = v_j + v_k \qquad\qquad (7)$$

$$r_i = r_j + r_k \qquad\qquad (8)$$

Für die entsprechenden maskierten Münzdatensätze gilt:

$$Z_i = Z_j + Z_k \qquad\qquad (9)$$

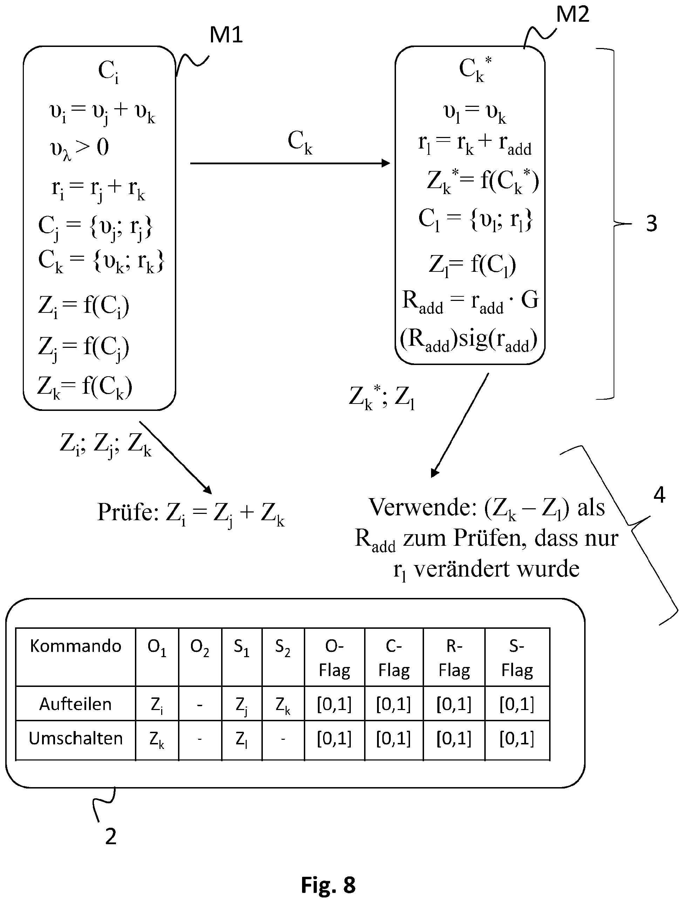

Mit Gleichung (9) kann beispielsweise auf einfache Weise ein Verarbeitungsschritt eines aufgeteilten Münzdatensatzes - beispielsweise gemäß Fig. 8 - geprüft werden, ohne dass die Überwachungsinstanz 2 Kenntnis von $C_i$, $C_j$, $C_k$ hat. Insbesondere wird die Bedingung der Gleichung (9) geprüft, um aufgeteilte Münzdatensätze $C_j$ und $C_k$ für gültig zu erklären und den Münzdatensatz $C_i$ für ungültig zu erklären. Ein derartiges Aufteilen eines elektronischen Münzdatensatzes $C_i$ ist in Fig. 8 gezeigt.

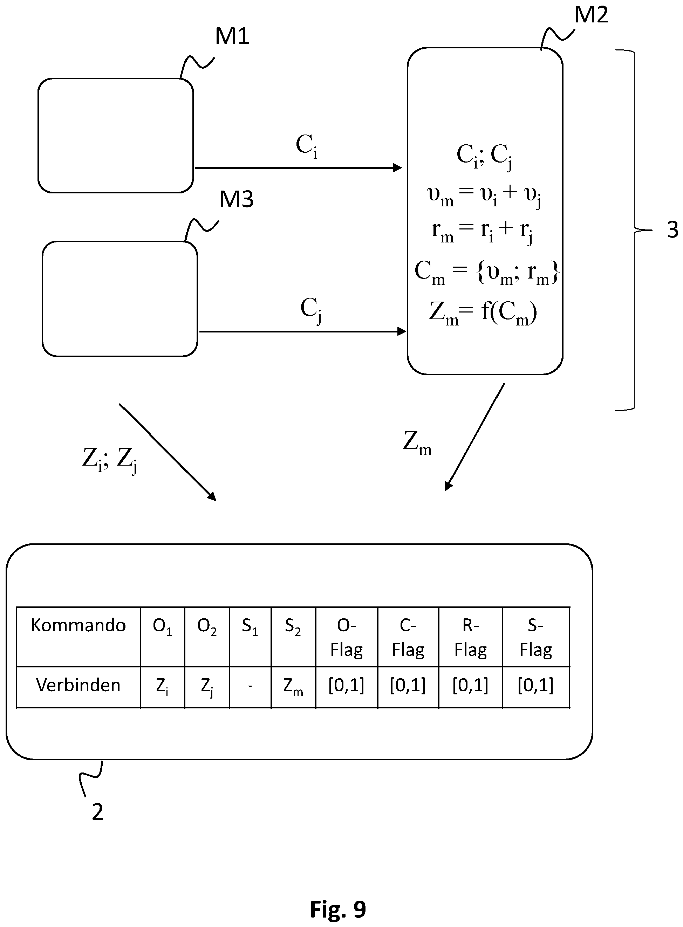

Auf die gleiche Weise können elektronische Münzdatensätze auch zusammengefügt (verbunden) werden, siehe dazu Fig. 9 und die Erläuterungen dazu.

Zusätzlich gilt es zu prüfen, ob (nicht erlaubte) negative monetäre Beträge registriert werden. Ein Besitzer eines elektronischen Münzdatensatzes Ci muss dabei der Überwachungsinstanz 2 nachweisen können, dass alle monetären Beträge $v_i$ in einer Verarbeitungs-Operation innerhalb eines Wertebereichs von [0, ..., n] liegen, ohne der Überwachungsinstanz 2 dabei die monetären Beträge $v_i$ mitzuteilen. Diese Bereichsnachweise werden auch "Range-Proofs" genannt. Als Bereichsnachweise werden bevorzugt Ringsignaturen (engl. ring signature) verwendet. Für das vorliegende Ausführungsbeispiel werden sowohl der monetäre Betrag $v$ als auch der Verschleierungsbetrag $r$ eines elektronischen Münzdatensatzes C in Bitdarstellung aufgelöst. Es gilt:

$$v_i = \sum a_j \cdot 2^j \text{ für } 0 \leq j < n \text{ und } a_j \in \{0; 1\} \qquad\qquad (9a)$$

sowie

$$r_i = \sum r_j \cdot 2^j \text{ für } 0 \leq j < n \text{ (und optional } r_j \in \{0; 1\}) \qquad\qquad (9b)$$

Für jedes Bit wird vorzugsweise eine Ringsignatur mit

$$C_{ij} = a_j \cdot H + r_j \cdot G \qquad\qquad (9c)$$

und

$$C_{ij} - a_j \cdot H \qquad\qquad (9d)$$

durchgeführt, wobei in einer Ausgestaltung vorgesehen sein kann, nur für bestimmte Bits eine Ringsignatur durchzuführen.

In Fig. 6 wird ein elektronischer Münzdatensatz Ci von der Herausgeberinstanz 1 erzeugt und dem ersten Endgerät M1 mit dessen ersten Prüfwert $p_{i1}$ und dessen zweiten Prüfwert $p_{i2}$ zur Verfügung gestellt. Der erste Prüfwert $p_{i1}$ wird mit jeder Direktweitergabe zwischen Endgeräten Mx inkrementiert und ist initial bei der Erzeugung "0". Der zweite Prüfwert $p_{i2}$ ist aktionsinvariant und entweder ein Ausgabedatum, ein Rückgabedatum oder eine Gruppen-ID des Münzdatensatzes Ci. Alternativ ist der zweite Prüfwert $p_{i2}$ ein Registrierungsdatum, das von dem Bezahlsystem 2 mit jeder Registrierung aktualisiert wird.

In Fig. 6 wird der elektronische Münzdatensatz Ci von der Herausgeberinstanz 1 mittels der Gleichung (3) oder der Gleichung (3a) ein maskierter elektronischer Münzdatensatz Zi von der Herausgeberinstanz 1 errechnet und dieser zusammen mit zumindest dem zweiten Prüfwert $p_{i2}$ in dem Bezahlsystem 2 bzw. der Überwachungsinstanz 4 registriert. Auch der erste Prüfwert $p_{i1}$ kann registriert werden (nicht dargestellt). Im Anschluss überträgt das erste Endgerät M1 den elektronischen Münzdatensatz Ci und die Prüfwerte $p_{i1}$, $p_{i2}$ an ein zweites Endgerät M2 oder führt Modifizierungen (Umschalten, Verbinden, Aufteilen) aus. Die Übertragung erfolgt beispielsweise drahtlos über WLAN, NFC oder Bluetooth. Die Übertragung kann durch kryptografische Verschlüsselungsverfahren zusätzlich abgesichert sein, indem beispielsweise ein Sitzungsschlüssel ausgehandelt wird oder eine PKI-Infrastruktur angewendet wird.

Im zweiten Endgerät M2 wird der übertragene elektronische Münzdatensatz $C_i$ als $C_i^*$ erhalten. Mit dem Erhalt des elektronischen Münzdatensatzes $C_i^*$ ist das zweite Endgerät M2 im Besitz des digitalen Geldes, den der elektronische Münzdatensatz $C_i^*$ repräsentiert. Mit der direkten Übertragung wird der Prüfwert $p_{i1}$ vom sendenden Endgerät M1 (nicht dargestellt) oder dem empfangenden Endgerät M2 inkrementiert. Das sendende Endgerät M1 (nicht dargestellt) oder das empfangende Endgerät M2 prüft nun gemäß der Ausführungen der Fig. 2 bis Fig. 4 den Prüfwert $p_{i1}$ bzw. die beiden Prüfwerte $p_{i1}$, $p_{i2}$. Entsprechend des Ergebnisses der Prüfung wird der Münzdatensatz $C_i$ angezeigt oder zurückgegeben oder steht im Endgerät M2 für weitere Aktionen zur Verfügung.

Wenn sich beide Endgeräte M1, M2 gegenseitig vertrauen und die Prüfwerte unterhalb der definierten Schwellwerte oder Prüfkriterien sind, sind keine weiteren Schritte notwendig, um das Verfahren zu beenden. Allerdings ist dem Endgerät M2 nicht bekannt, ob der elektronische Münzdatensatz $C_i^*$ tatsächlich gültig ist. Zudem könnte das Endgerät M1 den elektronischen Münzdatensatz $C_i$ auch noch einem dritten Endgerät (nicht dargestellt) übertragen. Um dies zu verhindern sind weitere bevorzugte Schritte im Verfahren vorgesehen.

Zum Prüfen der Validität des erhaltenen elektronischen Münzdatensatzes $C_i^*$ wird im zweiten Endgerät M2 mit der - öffentlichen - Einwegfunktion aus Gleichung (3) oder Gleichung (3a) der maskierte übertragene elektronische Münzdatensatz $Z_i^*$ errechnet. Der maskierte übertragene elektronische Münzdatensatz $Z_i^*$ wird dann an die Überwachungsinstanz 2 übertragen und dort gesucht. Bei Übereinstimmung mit einem registrierten und gültigen maskierten elektronischen Münzdatensatz wird dem zweiten Endgerät M2 die Validität des erhaltenen Münzdatensatzes $C_i^*$ angezeigt und es gilt, dass der erhaltene elektronische Münzdatensatz $C_i^*$ gleich dem registrierten elektronischen Münzdatensatz $C_i$ ist. Mit der Prüfung auf Validität kann in einer Ausgestaltung festgestellt werden, dass der erhaltene elektronische Münzdatensatz $C_i^*$ noch gültig ist, d.h., dass er nicht bereits durch einen anderen Verarbeitungsschritt oder bei einer anderen Transaktion bereits verwendet wurde und/ oder einer weiteren Veränderung unterworfen war.

Bevorzugt findet danach ein Umschalten des erhaltenen elektronischen Münzdatensatzes statt.

Es gilt für das erfindungsgemäße Verfahren, dass die alleinige Kenntnis eines maskierten elektronischen Münzdatensatzes $Z_i$ nicht dazu berechtigt, das digitale Geld auszugeben. Die alleinige Kenntnis des elektronischen Münzdatensatzes Ci berechtigt aber zum Bezahlen, d.h. eine Transaktion erfolgreich durchzuführen, insbesondere wenn der Münzdatensatz $C_i$ gültig ist. Es herrscht eine eineindeutige Beziehung zwischen den elektronischen Münzdatensätzen Ci und den entsprechenden maskierten elektronischen Münzdatensätzen $Z_i$. Die maskierten elektronischen Münzdatensätze $Z_i$ werden in der Überwachungsinstanz 4 des Bezahlsystems 2, beispielsweise einer öffentlichen dezentralen Datenbank, registriert. Durch dieses Registrieren wird zunächst die Gültigkeit des elektronischen Münzdatensatzes prüfbar, beispielsweise ob neue monetäre Beträge (illegaler Weise) erschaffen wurden.

Ein Hauptunterscheidungsmerkmal gegenüber konventionellen Lösungen ist, dass die maskierten elektronischen Münzdatensätze $Z_i$ in einer Überwachungsinstanz 4 gespeichert werden und alle Verarbeitungen an dem elektronischen Münzdatensatz $Z_i$ dort registriert werden, wohingegen die tatsächliche Übertragung des digitalen Geldes in einer (geheimen, d.h. einer der Öffentlichkeit nicht bekannten) Direkttransaktionsschicht 3 erfolgt.

Um ein mehrfaches Ausgeben zu verhindern oder um ein flexibleres Übertragen zu gewährleisten, können die elektronischen Münzdatensätze nunmehr im erfindungsgemäßen Verfahren verarbeitet werden. In der nachfolgenden Tabelle 1 sind die einzelnen Operationen aufgelistet, wobei mit dem angegebenen Befehl auch ein entsprechender Verarbeitungsschritt ausgeführt wird:

*Tabelle 1 - Anzahl von Operationen, die pro Verarbeitung eines Münzdatensatzes im Endgerät bzw. Herausgeberinstanz durchführbar sind;*

| Befehl bzw. Schritt | Signatur erstellen | Zufallszahl erstellen | Maskierung erstellen | Bereichsnachweis erstellen |
|---|---|---|---|---|
| Erzeugen | 1 | 1 | 1 | 0 oder 1 |
| Zurückgeben | 1 | 0 | 1 | 0 oder 1 |
| Aufteilen | 1 | 1 | 3 | 0 oder 1 |
| Verbinden | 1 | 0 | 3 | 1 |
| Umschalten | 1 | 1 | 2 | 1 |

Weitere Operationen, die in Tabelle 1 nicht aufgeführt sind, können benötigt werden, beispielsweise das Wechseln der Währung oder das Einlösen des monetären Betrags auf einem Konto. Anstelle der angeführten Implementierung sind auch andere Umsetzungen denkbar, die andere Operationen implizieren. Die Tabelle 1 zeigt, dass für jeden Münzdatensatz, jede der Verarbeitungen "Erstellen", "Zurückgeben", "Aufteilen", "Verbinden" und "Umschalten" verschiedene Operationen "Signatur erstellen"; "Zufallszahl erstellen"; "Maskierung erstellen"; "Bereichsprüfung" vorgesehen sein können, wobei jede der Verarbeitungs-Operation in der Überwachungsinstanz 4 registriert und dort in unveränderlicher Form an eine Liste vorheriger Verarbeitungs-Operationen für maskierte elektronische Münzdatensätze $Z_i$ angehängt wird. Die Operationen der Verarbeitungen "Erstellen" und "Zurückgeben" eines elektronischen Münzdatensatzes werden nur an sicheren Orten und/oder nur von ausgewählten Instanzen, beispielsweise der Herausgeberinstanz 1, ausgeführt, während die Operationen aller übrigen Verarbeitungen auf den Endgeräten M1 bis M3 ausgeführt werden können.

Die Anzahl der Operationen für die einzelnen Verarbeitungen ist in der Tabelle 1 mit "0", "1" oder "2" gekennzeichnet. Die Anzahl "0" zeigt dabei an, dass das Endgerät bzw. die Herausgeberinstanz 1 diese Operation für diese Verarbeitung des elektronischen Münzdatensatzes nicht durchführen muss. Die Anzahl "1" zeigt dabei an, dass das Endgerät bzw. die Herausgeberinstanz 1 diese Operation für diese Verarbeitung des elektronischen Münzdatensatzes einmal durchführen können muss. Die Anzahl "2" zeigt dabei an, dass das Endgerät bzw. die Herausgeberinstanz 1 diese Operation zweimal für diese Verarbeitung des elektronischen Münzdatensatzes durchführen können muss.

Grundsätzlich kann in einer Ausgestaltung auch vorgesehen sein, dass eine Bereichsprüfung durch die Herausgeberinstanz 1 auch beim Erzeugen und/ oder Löschen durchgeführt wird.

In der nachfolgenden Tabelle 2 sind für die einzelnen Verarbeitungen die für die Überwachungsinstanz 4 benötigten Operationen aufgelistet:

*Tabelle 2 - Anzahl von Operationen, die pro Verarbeitung eines Münzdatensatzes in der Überwachungsinstanz durchführbar sind;*

| Befehl bzw. Schritt | Signatur vom Herausgeber prüfen | Signatur vom Endgerät prüfen | Gültigkeit des maskierten elektronischen Münzdatensatzes prüfen | Bereichsnachweis nachvollziehen | homomorphe Eigenschaften der maskierten elektronischen Münzdatensätze nachvollziehen, d.h. Addieren oder Subtrahieren |
|---|---|---|---|---|---|
| Erzeugen | 1 | 0 | 0 | 0 oder 1 | 0 |
| Zurückgeben | 1 | 0 | 1 | 0 oder 1 | 0 |
| Aufteilen | 0 | 1 | 1 | 2 oder mehr | 1 |
| Verbinden | 0 | 1 | 2 oder mehr | 1 | 1 |
| Umschalten | 0 | 1 | 1 | 1 | 0 |

Weitere Operationen, die in Tabelle 2 nicht aufgeführt sind, können benötigt werden. Anstelle der angeführten Implementierung sind andere Umsetzungen denkbar, die andere Operationen implizieren. Alle Operationen der Tabelle 2 können in der Überwachungsinstanz 2 durchgeführt werden, die als vertrauenswürdige Instanz, beispielsweise als dezentraler Server, insbesondere Distributed-Trusted-Server, für eine ausreichende Integrität der elektronischen Münzdatensätze sorgt.

Die Tabelle 3 zeigt die für die Systemteilnehmer im Bezahlsystem der Fig. 1 bevorzugt zu installierenden Komponenten:

*Tabelle 3 - Bevorzugte Einheiten in den Systemkomponenten*

| Befehl bzw. Schritt | Herausgeberinstanz | Endgerät | Überwachungsinstanz |
|---|---|---|---|
| Zufallszahlgenerator (hohe Sicherheit) | Ja | - | - |
| Zufallsgenerator (deterministisch) | - | Ja | - |
| PKI zum Signieren | Ja | Ja | - |
| PKI zur Signaturprüfung | - | (Ja) | Ja |
| Lesezugriff auf DLT | Ja | Ja | Ja |

(fortgesetzt)

| Befehl bzw. Schritt | Herausgeberinstanz | Endgerät | Überwachungsinstanz |
|---|---|---|---|
| Schreibzugriff auf DLT | Ja | Ja | Ja |
| Zurückgeben des elektronischen Münzdatensatzes | Ja | Ja | - |
| Transportverschlüsselung | Ja | Ja | - |
| Sicherer Speicher | (Ja) | Ja | -/Ja |
| Maskierungs-Einheit | Ja | Ja | - |
| Bereichsnachweis | - | Ja | - |
| Bereichsnachweis prüfen | - | - | Ja |
| DLT Software | - | - | Ja |

Tabelle 3 zeigt eine Übersicht über die bevorzugt zu verwendenden Komponenten in jedem Systemteilnehmer, also der Herausgeberinstanz 1, einem Endgerät M1 und der Überwachungsinstanz 2. Das Endgerät M1 kann als ein Wallet für elektronische Münzdatensätze Ci (mit deren Prüfwert $p_{i1}$ $p_{i2}$) d.h. als elektronische Geldbörse, also ein Datenspeicher des Endgeräts M1, in dem eine Vielzahl von Münzdatensätzen Ci hinterlegt sein können, ausgebildet sein und beispielsweise in Form einer Applikation auf einem Smartphone oder IT-System eines Händlers, einer Geschäftsbank oder eines anderen Marktteilnehmers implementiert sein und einen elektronischen Münzdatensatz senden oder empfangen. Somit sind die Komponenten in dem Endgerät, so wie sie in Tabelle 3 gezeigt sind, als Software implementiert. Es wird davon ausgegangen, dass die Überwachungsinstanz 2 auf einer DLT basiert und von einer Reihe vertrauenswürdiger Marktteilnehmer betrieben wird.

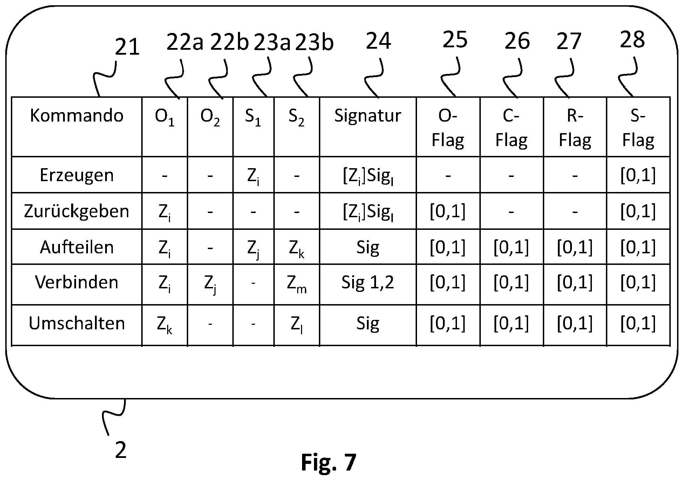

Fig. 7 zeigt ein Ausführungsbeispiel eines Bezahlsystems 2 (bzw. einer Überwachungsinstanz 4) der Fig. 6. In der Fig. 7 ist eine beispielhafte Datenbank in Form einer Tabelle dargestellt, in der die maskierten elektronischen Münzdatensätze $Z_i$ und ggf. ihre Verarbeitungen registriert sind. Die Überwachungsinstanz 2 ist bevorzugt lokal entfernt von den Endgeräten M1 bis M3 angeordnet und ist beispielsweise in einer Server-Architektur untergebracht.

Jede Verarbeitungs-Operation für eine Verarbeitung (Erstellen, Zurückgeben, symmetrisches oder asymmetrisches Aufteilen, Verbinden und Umschalten) wird dabei in der Überwachungsinstanz 4 registriert und dort in unveränderlicher Form an eine Liste vorheriger Verarbeitung-Operationen für maskierte elektronische Münzdatensätze $Z_i$ angehängt. Die einzelnen Operationen bzw. deren Prüfergebnis, also quasi die Zwischenergebnisse einer Verarbeitung, werden in der Überwachungsinstanz 4 festgehalten.

Die Verarbeitungen "Erstellen" und "Zurückgeben", die die Existenz des monetären Betrags $\upsilon_i$ an sich betreffen, also die Schaffung und die Vernichtung von Geld bedeuten, bedürfen einer zusätzlichen Genehmigung durch die Herausgeberinstanz 1, um in der Überwachungsinstanz 4 registriert (also protokolliert) zu werden. Die übrigen Verarbeitungsoperationen (Aufteilen, Verbinden, Umschalten) bedürfen keiner Autorisierung durch die Herausgeberinstanz 1 oder durch den Befehlsinitiator (= Zahler, bspw. das erste Endgerät M1).

Eine Registrierung der jeweiligen Verarbeitung in der Überwachungsinstanz 4 wird beispielsweise durch entsprechende Listeneinträge in der Datenbank gemäß Fig. 7 realisiert. Jeder Listeneintrag hat dabei weitere Markierungen 25 bis 28, die die Zwischenergebnisse der jeweiligen Verarbeitung dokumentiert, die von der Überwachungsinstanz 4 durchgeführt werden müssen. Bevorzugt werden die Markierungen 25 bis 28 als Hilfestellung benutzt und nach Abschluss der Befehle von der Überwachungsinstanz verworfen. Was bleibt sind Markierungen 29 bis 32 über die Gültigkeit der (maskierten) elektronischen Münzdatensätze aus den Spalten 22a, 22b, 23a und/oder 23b. Diese Markierungen sind bei eingehen eines Verarbeitung-Befehls beispielsweise im Zustand "-" und werden nach erfolgreichem Absolvieren aller Prüfungen auf den Zustand "1" gesetzt und bei mindestens einer gescheiterten Prüfung auf den Zustand "0" gesetzt. Eine mögliche Struktur für einen Listeneintrag eines Münzdatensatzes umfasst beispielsweise zwei Spalten 22a, 22b für einen Vorgänger-Münzdatensatz (O1, O2), zwei Spalten 23a, 23b für einen Nachfolger-Münzdatensatz (S1, S2), eine Signatur-Spalte 24 für Signaturen von Herausgeberinstanz(en) 1 und Signaturen von Endgeräten M, und vier Markierungsspalten 25 bis 28. Jeder der Einträge in den Spalten 25 bis 28 weist drei alternative Zustände "-", "1" oder "0" auf. Die Spalte 25 (O-Flag) zeigt an, ob eine Gültigkeitsprüfung bezüglich eines elektronischen Münzdatensatzes in Spalte 23a/b erfolgreich war, wobei Zustand "1" bedeutet, dass eine Validitäts-Prüfung ergab, dass der elektronische Münzdatensatz der Spalte 23a/b gültig ist und der Zustand "0" anzeigt, dass eine Validitäts-Prüfung ergab, dass der elektronische Münzdatensatz der Spalte 23a/b ungültig und der Zustand "-" anzeigt, dass eine Validitäts-Prüfung noch nicht abgeschlossen ist. Die Spalte 26 (C-Flag) zeigt an, ob die Berechnung des maskierten elektronischen Münzdatensatzes erfolgreich war, wobei Zustand "1" bedeutet, dass eine Berechnung erfolgreich war und der Zustand "0" gibt an, dass Berechnung nicht erfolgreich war und der Zustand "-" anzeigt, dass eine Validitäts-Prüfung noch nicht abgeschlossen ist.

Die in Spalte 26 durchzuführende Berechnung lautet für maskierte Münzdatensätze gemäß Gleichung (3) beispielsweise:

$$(Z_{O1} + Z_{O2}) - (Z_{S1} + Z_{S2}) == 0 \qquad\qquad (10)$$

Die Spalte 27 (R-Flag) zeigt an, ob eine Prüfung der Bereichsnachweise oder des Bereichsnachweises erfolgreich war, wobei Zustand "1" bedeutet, dass eine Validitäts-Prüfung ergab, dass die Bereichsnachweise oder der Bereichsnachweis nachzuvollziehen sind oder ist und der Zustand "0" anzeigt, dass eine Validitäts-Prüfung ergab, dass die Bereichsnachweise oder der Bereichsnachweis nicht nachvollzogen werden konnten oder konnte und der Zustand "-" anzeigt, dass eine Validitäts-Prüfung noch nicht abgeschlossen ist, erfolgreich war.

Die Spalte 28 (S-Flag) zeigt an, ob eine Signatur des elektronischen Münzdatensatzes mit der Signatur der Spalte 24 übereinstimmt, wobei Zustand "1" bedeutet, dass eine Validitäts-Prüfung ergab, dass die Signatur als die der Herausgeberinstanz 1 identifiziert werden konnte und der Zustand "0" anzeigt, dass eine Validitäts-Prüfung ergab, dass die Signatur nicht als die der Herausgeberinstanz identifiziert werden konnte und der Zustand "-" anzeigt, dass eine Validitäts-Prüfung noch nicht abgeschlossen ist.

Eine Änderung des Status eines der Markierungen (auch als "Flag" bezeichnet) bedarf der Genehmigung durch die Überwachungsinstanz 4 und muss sodann unveränderlich in der Überwachungsinstanz 4 gespeichert werden. Eine Verarbeitung ist endgültig, wenn und nur wenn die erforderlichen Markierungen 25 bis 28 durch die Überwachungsinstanz 4 validiert wurden, d.h. nach der entsprechenden Prüfung vom Zustand "0" in den Zustand "1" oder den Zustand "1" gewechselt wurden.

Um festzustellen, ob ein maskierter elektronischer Münzdatensatz Z gültig ist, sucht die Überwachungsinstanz 4 nach der letzten Änderung, die den maskierten elektronischen Münzdatensatz Z betrifft. Es gilt, dass der maskierte elektronische Münzdatensatz Z gültig ist, wenn und nur wenn der maskierte elektronische Münzdatensatz Z für seine letzte Verarbeitung in einer der Nachfolger-Spalten 23a, 23b aufgeführt ist und diese letzte Verarbeitung die entsprechende endgültige Markierung 25 bis 28 aufweist. Es gilt auch, dass der maskierte elektronische Münzdatensatz Z gültig ist, wenn und nur wenn der maskierte elektronische Münzdatensatz Z für seine letzte Verarbeitung in einer der Vorgänger-Spalten 22a, 22b aufgeführt ist und diese letzte Verarbeitung fehlgeschlagen ist, also zumindest einer der entsprechend geforderten Zustände der Markierungen 25 bis 28 auf "0" gesetzt ist.

Es gilt zudem, dass der maskierte elektronische Münzdatensatz Z für alle übrigen Fälle nicht gültig ist, beispielsweise, wenn der maskierte elektronische Münzdatensatz Z nicht in der Überwachungsinstanz 4 gefunden wird oder wenn die letzte Verarbeitung des maskierten elektronischen Münzdatensatzes Z in einer der Nachfolger-Spalten 23a, 23b aufgeführt ist, diese letzte Verarbeitung aber nie endgültig wurde oder wenn die letzte Verarbeitung des maskierten elektronischen Münzdatensatzes Z in einer der Vorgänger-Spalten 22a, 22b ist und diese letzte Verarbeitung endgültig ist.

Die Prüfungen durch die Überwachungsinstanz 4, um zu prüfen, ob eine Verarbeitung endgültig ist, werden durch die Spalten 25 bis 28 abgebildet: Der Zustand in der Spalte 25 zeigt an, ob der/die maskierten elektronischen Münzdatensätze gemäß Vorgänger-Spalten 22a, 22b gültig sind. Der Zustand in der Spalte 26 gibt an, ob die Berechnung des maskierten elektronischen Münzdatensatzes gemäß Gleichung (10) stimmt. Der Zustand in der Spalte 27 gibt an, ob die Bereichsnachweise für die maskierten elektronischen Münzdatensätze Z erfolgreich geprüft werden konnten. Der Zustand in Spalte 28 zeigt an, ob die Signatur in der Spalte 24 des maskierten elektronischen Münzdatensatzes Z eine gültige Signatur der Herausgeberinstanz 1 ist.

Der Zustand "0" in einer Spalte 25 bis 28 zeigt dabei an, dass die Prüfung nicht erfolgreich war. Der Zustand "1" in einer Spalte 25 bis 28 zeigt dabei an, dass die Prüfung erfolgreich war. Der Zustand "-" in einer Spalte 25 bis 28 zeigt dabei an, dass keine Prüfung erfolgt ist. Die Zustände können auch einen anderen Wert aufweisen, solange eindeutig zwischen Erfolg/Misserfolg einer Prüfung unterschieden werden kann und ersichtlich ist, ob eine bestimmte Prüfung durchgeführt wurde.

Beispielhaft sind fünf verschiedene Verarbeitungen definiert, die hier im Einzelnen erläutert werden. Dabei wird auf den entsprechenden Listeneintrag in Fig. 7 verwiesen.

Eine Verarbeitung ist beispielsweise "Erzeugen" eines elektronischen Münzdatensatzes $C_i$. Das Erzeugen in der Direkttransaktionsschicht 3 durch die Herausgeberinstanz 1 beinhaltet das Wählen eines monetären Betrags $\upsilon_i$, das Erstellen eines Verschleierungsbetrags $r_i$ und das Erzeugen des/r Prüfwerte/s $p_{i1}$ (und $p_{i2}$) wie mit Gleichung (1) und Fig. 2 bis 4 bereits beschrieben wurde. Wie in Fig. 7 gezeigt, bedarf es bei der Verarbeitung "Erzeugen" keiner Eintragungen/Markierungen in den Spalten 22a, 22b, 23b und 25 bis 27. In der NachfolgerSpalte 23a wird der maskierte elektronische Münzdatensatz $Z_i$ registriert. Diese Registrierung erfolgt bevorzugt vor dem Übertragen an ein Endgerät M1 bis M3, insbesondere oder bereits beim Generieren durch die Herausgeberinstanz 1, wobei in beiden Fällen dazu die Gleichung (3) oder die Gleichung (3a) ausgeführt werden muss. Der maskierte elektronische Münzdatensatz $Z_i$ ist

beim Erstellen von der Herausgeberinstanz 1 signiert, diese Signatur ist in der Spalte 24 eingetragen, um sicherzustellen, dass der elektronische Münzdatensatz Ci tatsächlich von einer Herausgeberinstanz 1 erstellt wurde, wobei auch andere Verfahren dafür in Frage kommen. Stimmt die Signatur eines erhaltenen $Z_i$ mit der Signatur in Spalte 24 überein, so wird die Markierung in Spalte 28 gesetzt (von "0" auf "1"). Die Markierungen gemäß Spalte 25 bis 27 benötigen keine Statusänderung und können ignoriert werden. Der Bereichsnachweis wird nicht benötigt, da die Überwachungsinstanz 4 darauf vertraut, dass die Herausgeberinstanz 1 keine negativen monetären Beträge ausgibt. In einer alternativen Ausführung kann er aber von der Herausgeberinstanz 1 im Erstellen-Befehl mitgesendet werden und von der Überwachungsinstanz 4 geprüft werden. In der Überwachungsinstanz wird zudem der/die Prüfwert/e pii (und $p_{i2}$) abgelegt und protokolliert. Zudem wird, wie in Fig. 5 dargestellt, ggf. ein Zählerwert abgelegt und protokolliert.

Eine Verarbeitung ist beispielsweise "Zurückgeben". Das Zurückgeben, also das Geldvernichten (DESTROY), bewirkt, dass der maskierte elektronische Münzdatensatz Zi nach erfolgreichem Ausführen des Zurückgeben-Befehls durch die Herausgeberinstanz 1 ungültig wird. Man kann also den zu zurückgegebenen (maskierten) elektronischen Münzdatensatz in der Überwachungsschicht 4 also nicht mehr weiterverarbeiten. Um Verwirrung zu vermeiden, sollten die entsprechenden (nicht maskierten) elektronischen Münzdatensätze $C_i$ in der Direkttransaktionsschicht 3 gelöscht werden. Beim "Zurückgeben" wird die Vorgängerspalte 22a mit dem elektronischen Münzdatensatz $Z_i$ beschrieben, aber keine Nachfolgerspalte 23a, 23b besetzt. Der maskierte elektronische Münzdatensatz $Z_i$ ist beim Deaktivieren daraufhin zu prüfen, ob die Signatur mit der Signatur gemäß Spalte 24 übereinstimmt, um sicherzustellen, dass der elektronische Münzdatensatz Ci tatsächlich von einer Herausgeberinstanz 1 erstellt wurde, wobei wieder andere Mittel für diese Prüfung verwendet werden können. Kann das signierte $Z_i$, das im Zurückgeben-Befehl mitgesendet wird, als von der Herausgeberinstanz 1 signiert bestätigt werden oder als gültig signiert bestätigt werden, wird die Markierung 28 gesetzt (von "0" auf "1"). Die Markierungen gemäß Spalte 26 bis 27 benötigen keine Statusänderung und können ignoriert werden. Die Markierungen gemäß Spalte 25 und 28 werden nach entsprechender Prüfung gesetzt.

Eine Verarbeitung ist beispielsweise das "Aufteilen". Das Aufteilen, also das Teilen eines elektronischen Münzdatensatzes $Z_i$ in eine Anzahl n, beispielsweise 2, von elektronischen Münzteildatensätzen $Z_j$ und $Z_k$ erfolgt zunächst in der Direkttransaktionsschicht 3, so wie es in Fig. 8 und 10 noch gezeigt wird, wobei die monetären Beträge $\upsilon_j$ und des Verschleierungsbetrags $r_j$ generiert werden. $v_k$ und $r_k$ ergeben sich durch Gleichungen (7) und (8). In der Überwachungsinstanz 4 werden die Markierungen 24 bis 27 gesetzt, die Vorgängerspalte 22a wird mit dem elektronischen Münzdatensatz $Z_i$ beschrieben, Nachfolgerspalte 23a wird mit $Z_j$ und Nachfolgerspalte 23b wird mit $Z_k$ beschrieben. Die gemäß Spalten 24 bis 27 benötigten Statusänderungen erfolgen nach der entsprechenden Prüfung durch die Überwachungsinstanz 4 und dokumentieren das jeweilige Prüfungsergebnis. Die Markierung gemäß Spalte 28 wird ignoriert. Die Spalte 24 wird zum Eintragen einer vom aufteilenden Endgerät M1 bis M3 erzeugten Signatur verwendet.

Eine Verarbeitung ist beispielsweise "Verbinden". Das Verbinden, also das Zusammenfügen zweier elektronischer Münzdatensätze $Z_i$ und $Z_j$ zu einem elektronischen Münzdatensatz $Z_m$ erfolgt zunächst in der Direkttransaktionsschicht 3, so wie es in Fig. 10 noch gezeigt wird, wobei der monetäre Betrag $\upsilon_m$ und der Verschleierungsbetrag $r_m$ berechnet werden. In der Überwachungsinstanz 2 werden die Markierungen 25 bis 27 gesetzt, die Vorgängerspalte 22a wird mit dem elektronischen Münzdatensatz $Z_i$ beschrieben, Vorgängerspalte 22b wird mit $Z_j$ und Nachfolgerspalte 23b wird mit $Z_m$ beschrieben. Die Markierungen in den Spalten 25 bis 27 benötigen Statusänderungen und die Überwachungsinstanz 2 führt die entsprechenden Prüfungen durch. Ein Bereichsnachweis muss erbracht werden, um zu zeigen, dass kein neues Geld generiert wurde. Die Markierung gemäß Spalte 28 wird ignoriert. Die Spalte 24 wird zum Eintragen einer vom verbindenden Endgerät M1 bis M3 erzeugten Signatur verwendet.

Eine Verarbeitung ist beispielsweise "Umschalten". Das Umschalten ist dann nötig, wenn ein elektronischer Münzdatensatz auf ein anderes Endgerät Mx übertragen wurde und ein erneutes Ausgeben durch das übertragende Endgerät (hier M1) ausgeschlossen werden soll. Beim Umschalten, auch "switch" genannt, wird der vom ersten Endgerät M1 erhaltene elektronische Münzdatensatz $C_k$ gegen einen neuen elektronischen Münzdatensatz $C_l$ mit gleichem monetärem Betrag ausgetauscht. Der neue elektronische Münzdatensatz $C_l$ wird vom zweiten Endgerät M2 generiert. Dieses Umschalten ist notwendig, um die vom ersten Endgerät M1 erhaltenen elektronischen Münzdatensatz $C_k$ zu invalideren (ungültig machen), wodurch ein erneutes Ausgeben des gleichen elektronischen Münzdatensatzes $C_k$ vermieden wird. Denn, solange der elektronische Münzdatensatz $C_k$ nicht umgeschaltet ist, kann - da das erste Endgerät M1 in Kenntnis des elektronischen Münzdatensatzes $C_k$ ist - das erste Endgerät M1 diesen elektronischen Münzdatensatz $C_k$ an ein drittes Endgerät M3 weitergeben. Das Umschalten erfolgt beispielsweise durch Hinzufügen eines neuen Verschleierungsbetrags $r_{add}$ zum Verschleierungsbetrag $r_k$ des erhaltenen elektronischen Münzdatensatz $C_k$, wodurch ein Verschleierungsbetrag $r_l$ erhalten wird, die nur das zweite Endgerät M2 kennt. Dies kann auch in der Überwachungsinstanz 4 erfolgen. Um zu beweisen, dass nur einen neuen Verschleierungsbetrag $r_{add}$ zum Verschleierungsbetrag $r_k$ des maskierten erhaltenen elektronischen Münzdatensatzes $Z_k$ hinzugefügt wurde, der monetäre Betrag aber gleichgeblieben ist, und also Gleichung (11):

$$v_k = v_l \qquad\qquad (11)$$

gilt, so muss das zweite Endgerät M2 nachweisen können, dass sich $Z_l$-$Z_k$ als skalares Vielfaches von G also als $r_{add}$*G darstellen lässt. Das heißt, dass nur ein Verschleierungsbetrag $r_{add}$ erzeugt wurde und der monetäre Betrag von Zi gleich dem monetären Betrag von $Z_k$ ist, also $Z_l=Z_k+ r_{add}$*G. Dies erfolgt durch das Erzeugen einer Signatur mit dem öffentlichen Schlüssel $Z_l$-$Z_k$=$r_{add}$*G. Diese Signatur wird in der Überwachungsschicht 4 verwendet, um die Gültigkeit des umzuschaltenden elektronischen Münzdatensatzes zu bestätigen.

Die Modifikationen "Aufteilen" und "Verbinden" an einem elektronischen Münzdatensatz können auch von einem Endgerät M1 an ein anderes Endgerät M2, M3 delegiert werden, beispielsweise wenn eine Kommunikationsverbindung zur Überwachungsinstanz 2 nicht vorhanden ist.

In Fig. 8 ist ein Ausführungsbeispiel eines Bezahlsystems gemäß der Erfindung zu den Aktionen "Aufteilen", "Verbinden" und "Umschalten" von elektronischen Münzdatensätzen C gezeigt. Die Prüfwerte $p_{i1}$, $p_{i2}$ sind der Übersichtlichkeit halber nicht dargestellt. In Fig. 8 hat das erste Endgerät M1 den Münzdatensatz $C_i$ erhalten und möchte nun eine Bezahltransaktion nicht mit dem gesamten monetären Betrag $v_i$, sondern nur mit einem Teilbetrag $v_k$ durchführen. Dazu wird der Münzdatensatz $C_i$ aufgeteilt. Dazu wird zunächst der monetäre Betrag geteilt:

$$v_i = v_j + v_k \qquad\qquad (12)$$

Dabei muss jeder der erhaltenen Beträge $v_j$, $v_k$, größer 0 sein, denn negative monetäre Beträge sind nicht zulässig.

Beim Aufteilen werden die Prüfwerte $p_{i1}$, $p_{i2}$ des aufzuteilenden Münzdatensatz in die aufgeteilten Münzdatensätze unverändert übernommen.

Dann wird ein Münzteildatensatz, hier $C_k$, zusammen mit den Prüfwerten $p_{i1}$, $p_{i2}$ vom ersten Endgerät M1 an das zweite Endgerät M2 übertragen. Um ein doppeltes Ausgeben zu verhindern, ist eine Umschalt-Operation sinnvoll, um den vom ersten Endgerät M1 erhaltenen elektronischen Münzdatensatz $C_k$ gegen einen neuen elektronischen Münzdatensatz $C_l$ mit gleichem monetären Betrag auszutauschen. Der neue elektronische Münzdatensatz $C_l$ wird vom zweiten Endgerät M2 generiert. Dabei wird der monetäre Betrag des Münzdatensatzes $C_l$ übernommen und nicht verändert, siehe Gleichung (11).

Dann wird gemäß Gleichung (14) ein neuer Verschleierungsbetrag $r_{add}$ zum Verschleierungsbetrag $r_k$ des erhaltenen elektronischen Münzdatensatz $C_k$ hinzugefügt,

$$r_l = r_k + r_{add} \qquad\qquad (14)$$

wodurch ein Verschleierungsbetrag $r_l$ erhalten wird, die nur das zweite Endgerät M2 kennt. Um zu beweisen, dass nur ein neuer Verschleierungsbetrag $r_{add}$ zum Verschleierungsbetrag $r_k$ des erhaltenen elektronischen Münzdatensatz $Z_k$ hinzugefügt wurde, der monetäre Betrag aber gleichgeblieben ist ($v_k = v_l$), muss das zweite Endgerät M2 nachweisen können, dass sich $Z_l$-$Z_k$ als Vielfaches von G darstellen lässt. Dies erfolgt mittels öffentlicher Signatur $R_{add}$ gemäß Gleichung (15):

$$R_{add} = r_{add} \cdot G \qquad\qquad (15)$$
$$=Z_l - Z_k=(v_l-v_k)*H+(r_k+r_{add}-r_k)*G$$

wobei G der Generatorpunkt der ECC ist. Dann wird der umzuschaltende Münzdatensatz Ci maskiert mittels der Gleichung (3) oder der Gleichung (3a), um den maskierten Münzdatensatz $Z_l$ zu erhalten. In der Überwachungsinstanz 2 kann dann die private Signatur $r_{add}$ genutzt werden um beispielsweise den maskierten umzuschaltenden elektronischen Münzdatensatz $Z_l$ zu signieren, was als Beweis gilt, dass das zweite Endgerät M2 nur ein Verschleierungsbetrag $r_{add}$ zum maskierten elektronischen Münzdatensatz hinzugefügt hat und keinen zusätzlichen monetären Wert, d.h. vi = $v_k$.

Der Beweis lautet für Maskierungen mittels Gleichung (3) wie folgt:

$$Z_k = v_k \cdot H + r_k \cdot G \qquad\qquad (16)$$
$$Z_l = v_l \cdot H + r_l \cdot G = v_k \cdot H+ (r_k+r_{add}) \cdot G$$
$$Z_l - Z_k =( r_k +r_{add}-r_k) \cdot G$$
$$= r_{add} \cdot G$$

Für Maskierungen mittels der Gleichung (3a) wird eine Signatur über dem monetären Betrag $v_k$, dem Verschlei-

erungsbetrag $r_k$ und dem maskierten Münzdatensatz Z (auch als R bezeichnet) erzeugt. So kann die Signatur durch Neuberechnen der Maskierung in der Überwachungsinstanz 4 validiert werden, um die Echtheit und das Vorhandensein/Besitz des Münzdatensatzes C beweisen zu können.

Fig. 9 zeigt ein Ausführungsbeispiel eines Bezahlsystems gemäß der Erfindung zum Verbinden (auch Kombinieren genannt) von elektronischen Münzdatensätzen. Dabei werden im zweiten Endgerät M2 die beiden Münzdatensätze $C_i$ und $C_j$ erhalten. Jeder Münzdatensatz $C_i$ und $C_j$ umfasst dabei jeweils die Prüfwerte $p_{i1}$, $p_{i2}$. In Anlehnung an das Aufteilen gemäß Fig. 8 wird nun ein neuer Münzdatensatz $Z_m$ erhalten, indem sowohl die monetären Beträge als auch der Verschleierungsbetrag der beiden Münzdatensätze $C_i$ und $C_j$ addiert werden. Dann wird der erhaltene zu verbindende Münzdatensatz $C_m$ mittels der Gleichung (3) oder der Gleichung (3a) maskiert und der maskierte Münzdatensatz $Z_m$ wird in der Überwachungsinstanz registriert. Sodann wird beim "Verbinden" die Signatur des zweiten Endgeräts M2 eingetragen, da dieses die Münzdatensätze $C_i$ und $C_j$ erhalten hat.

Für Maskierungen mittels der Gleichung (3a) kann eine erste Signatur über den monetären Betrag $\upsilon_i$, dem Verschleierungsbetrag ri und dem maskierten Münzdatensatz $Z_i$ erzeugt werden und es kann eine zweite Signatur über den monetären Betrag $\upsilon_j$, dem Verschleierungsbetrag $r_j$ und dem maskierten Münzdatensatz $Z_j$ erzeugt werden. Beide Signaturen können durch jeweiliges Neuberechnen der Maskierung in der Überwachungsinstanz 4 validiert werden, um die Echtheit und das Vorhandensein/Besitz des Münzdatensatzes C beweisen zu können. Die erste Signatur kann auch mit der zweiten Signatur verknüpft werden, um eine gemeinsame Signatur zu bilden.

Bei einem Kombinieren durch das Bezahlsystem 2 wird der höchste der beiden einzelnen Prüfwert der jeweiligen elektronischen Münzteildatensätze $C_i$ und $C_j$ bestimmt. Dieser höchste Prüfwert wird als der Prüfwert $C_i$ und $C_j$ des kombinierten elektronischen Münzdatensatzes übernommen.

Alternativ wird beim Kombinieren (= Verbinden) durch ein Bezahlsystem 2 ein neuer Prüfwert aus der Summe aller Prüfwerte der elektronischen Münzteildatensätzen Ci und $C_j$ geteilt durch das Produkt der Anzahl (hier zwei) der Münzteildatensätze Ci und $C_j$ mit einem konstanten Korrekturwert bestimmt. Der Korrekturwert ist bezahlsystemweit konstant. Der Korrekturwert ist größer gleich 1. Bevorzugt ist der Korrekturwert von einer maximalen Abweichung der einzelnen Prüfwerte der elektronischen Münzteildatensätze Ci und $C_j$ oder von einem maximalen Prüfwert einer der elektronischen Münzteildatensätze Ci und $C_j$ abhängig. Weiter bevorzugt ist der Korrekturwert kleiner gleich 2. Dieser neue Prüfwert wird als der Prüfwert des kombinierten elektronischen Münzdatensatzes $C_m$ übernommen.

Nachfolgend werden die Figuren 10 und 11 gemeinsam beschrieben, um die Aktionen "Erstellen", "Übertragen", "Umschalten", "Verbinden" und "Aufteilen" zu erläutern. In den optionalen Schritten 101 und 102 wird ein Münzdatensatz angefragt und seitens der Herausgeberinstanz 1 dem ersten Endgerät M1 nach Erstellen des elektronischen Münzdatensatzes bereitgestellt. Ein maskierter elektronischer Münzdatensatz wird an die Überwachungsinstanz 4 gesendet. Im Schritt 103 erfolgt ein Maskieren des erhaltenen elektronischen Münzdatensatzes Ci gemäß der Gleichung (3). Dann wird im Schritt 104 der maskierte elektronische Münzdatensatz $Z_i$ in der Überwachungsinstanz 4 registriert. Optional kann das Endgerät M1 den erhaltenen elektronischen Münzdatensatz umschalten. Im Schritt 105 erfolgt das Übertragen des Münzdatensatzes Ci in der Direkttransaktionsschicht 3 an das zweite Endgerät M2. In den optionalen Schritten 106 und 107 erfolgt eine Validitäts-Prüfung mit vorheriger Maskierung, bei der im Gutfall die Überwachungsinstanz 2 die Gültigkeit des Münzdatensatzes Zi bzw. Ci bestätigt wird. Zudem wird der Prüfwert gemäß dem Verfahren 300 der Fig. 2 bis 4 geprüft, um zu bestimmen, ob der Münzdatensatz der Überwachungsinstanz 4 anzuzeigen ist, wenn eine Anzahl von direkten Weitergaben des Münzdatensatzes bereits überschritten ist. Zudem kann geprüft werden, ob der Münzdatensatz zurückzusenden ist.

Im Schritt 108 erfolgt das Umschalten eines erhaltenen Münzdatensatzes $C_k$ (es könnte natürlich auch der erhaltene Münzdatensatz Ci umgeschaltet werden) auf einen neuen Münzdatensatz Ci, wodurch der Münzdatensatz $C_k$ ungültig wird und ein Doppeltausgeben verhindert wird. Dazu wird der monetäre Betrag $\upsilon_k$ des übertragenen Münzdatensatzes $C_k$ als "neuer" monetärer Betrag $\upsilon_l$ verwendet. Zudem wird, wie bereits mit Gleichungen (14) bis (17) erläutert, der Verschleierungsbetrag $r_1$ erstellt. Der zusätzliche Verschleierungsbetrag $r_{add}$ wird verwendet, um zu beweisen, dass kein neues Geld (in Form eines höheren monetären Betrags) von dem zweiten Endgerät M2 generiert wurde. Dann wird der maskierte umzuschaltende Münzdatensatz Zi an die Überwachungsinstanz 2 gesendet und das Umschalten von $C_k$ auf Ci beauftragt.

Im Schritt 108' erfolgt die entsprechende Prüfung in der Überwachungsinstanz 2. Dabei wird $Z_k$ in die Spalte 22a gemäß Tabelle in Fig. 2 eingetragen und in Spalte 23b der umzuschreibende Münzdatensatz $Z_l$. Es erfolgt sodann eine Prüfung in der Überwachungsinstanz 2, ob $Z_k$ (noch) gültig ist, also ob die letzte Verarbeitung von $Z_k$ in einer der Spalten 23a/b eingetragen ist (als Beweis dafür, dass $Z_k$ nicht weiter aufgeteilt oder zurückgegeben oder verbunden wurde) und ob eine Prüfung für die letzte Verarbeitung fehlgeschlagen ist. Zudem wird Zi in die Spalte 23b eingetragen und die Markierungen in den Spalten 25, 26, 27 werden zunächst auf "0" gesetzt. Nun erfolgt eine Prüfung, ob Zi gültig ist, wobei dabei die Prüfung gemäß Gleichungen (16) und (17) verwendet werden können. Im Gutfall wird die Markierung in Spalte 25 auf "1" gesetzt, ansonsten auf "0". Nun erfolgt eine Prüfung, die Berechnung gemäß Gleichung (10) ergibt, dass $Z_k$ und Zi gültig sind und entsprechend wird die Markierung in Spalte 26 gesetzt. Weiterhin wird geprüft, ob die Bereiche schlüssig sind, sodann wird die Markierung in Spalte 27 gesetzt. Wenn alle Prüfungen erfolgreich waren, und dies entsprechend unveränderlich in der Überwachungsinstanz 2 festgehalten wurde, gilt der Münzdatensatz als umgeschaltet. D.h. der Münzdatensatz $C_k$ ist nicht mehr gültig und ab sofort ist der Münzdatensatz Ci gültig. Der erste Prüfwert des Münzdatensatz $C_1$ wird vom Bezahlsystem 2 mit "0" initialisiert, da noch keine Direktweitergabe erfolgt ist.

Im Schritt 109 erfolgt ein Verbinden von zwei Münzdatensätzen $C_k$ und Ci auf einen neuen Münzdatensatz $C_m$, wodurch die Münzdatensätze $C_k$, $C_i$ ungültig werden und ein Doppeltausgeben verhindert wird. Dazu wird der monetäre Betrag $\upsilon_m$ aus den beiden monetären Beträgen $\upsilon_k$ und $\upsilon_i$ gebildet. Dazu wird der Verschleierungsbetrag $r_m$ aus den beiden Verschleierungsbeträgen $r_k$ und $r_i$ gebildet. Zudem wird mittels Gleichung (3) der maskierte zu verbindende Münzdatensatz $Z_m$ erhalten und dieser (mit anderen Informationen zusammen) an die Überwachungsinstanz 2 gesendet und das Verbinden als Verarbeitung erbeten. Zudem wird eine Signatur $S_k$ und eine Signatur Si erzeugt und der Überwachungsinstanz 2 mitgeteilt.

Im Schritt 109' erfolgt die entsprechende Prüfung in der Überwachungsinstanz 2. Dabei wird $Z_m$ in die Spalte 23b gemäß Tabelle in Fig. 2 eingetragen, was auch gleich einer Umschreibung. Es erfolgt sodann eine Prüfung in der Überwachungsinstanz 2, ob $Z_k$ und Zi (noch) gültig sind, also ob die letzte Verarbeitung von $Z_k$ oder Zi in einer der Spalten 23a/b eingetragen ist (als Beweis dafür, dass $Z_k$ und Zi nicht weiter aufgeteilt oder deaktiviert oder verbunden wurden) und ob eine Prüfung für die letzte Verarbeitung fehlgeschlagen ist. Zudem werden die Markierungen in den Spalten 25, 26, 27 zunächst auf "0" gesetzt. Nun erfolgt eine Prüfung, ob $Z_m$ gültig ist, wobei dabei die Prüfung gemäß Gleichungen (16) und (17) verwendet werden können. Im Gutfall wird die Markierung in Spalte 25 auf "1" gesetzt, ansonsten auf "0". Nun erfolgt eine Prüfung, die Berechnung gemäß Gleichung (10) ergibt, dass Zi plus $Z_k$ gleich $Z_m$ ist und entsprechend wird die Markierung in Spalte 26 gesetzt. Weiterhin wird geprüft, ob die Bereiche schlüssig sind, sodann wird die Markierung in Spalte 27 gesetzt.

Im Schritt 110 erfolgt ein Aufteilen eines Münzdatensatz Ci in zwei Münzteildatensätzen $C_k$ und $C_j$, wodurch der Münzdatensatz Ci ungültig gemacht wird und die beiden geteilten Münzteildatensätze $C_k$ und $C_j$ gültig gemacht werden sollen. Bei einem Aufteilen wird der monetären Betrag $\upsilon_i$ in monetäre Teilbeträge $\upsilon_k$ und $\upsilon_j$ aufgeteilt. Dazu wird der Verschleierungsbetrag ri in die beiden Verschleierungsbeträge $r_k$ und $r_j$ aufgeteilt. Zudem werden mittels Gleichung (3) die maskierten Münzteildatensätze $Z_k$ und $Z_j$ erhalten und diese mit weiteren Informationen, beispielsweise den Bereichsprüfungen (Zero-knowledge-proofs), an die Überwachungsinstanz 2 gesendet und das Aufteilen als Verarbeitung erbeten.

Im Schritt 110' erfolgt die entsprechende Prüfung in der Überwachungsinstanz 2. Dabei werden $Z_j$ und $Z_k$ in die Spalten 23a/b gemäß Tabelle in Fig. 2 eingetragen. Es erfolgt sodann eine Prüfung in der Überwachungsinstanz 2, ob Zi (noch) gültig ist, also ob die letzte Verarbeitung von Zi in einer der Spalten 23a/b eingetragen ist (als Beweis dafür, dass Zi nicht weiter aufgeteilt oder deaktiviert oder verbunden wurde) und ob eine Prüfung für die letzte Verarbeitung fehlgeschlagen ist. Zudem werden die Markierungen in den Spalten 25, 26, 27 zunächst auf "0" gesetzt. Nun erfolgt eine Prüfung, ob $Z_j$ und $Z_k$ gültig sind, wobei dabei die Prüfung gemäß Gleichungen (16) und (17) verwendet werden können. Im Gutfall wird die Markierung in Spalte 25 auf "1" gesetzt. Nun erfolgt eine Prüfung, die Berechnung gemäß Gleichung (10) ergibt, dass $Z_i$ gleich $Z_k$ plus $Z_j$ ist und entsprechend wird die Markierung in Spalte 26 gesetzt. Weiterhin wird geprüft, ob die Bereiche schlüssig sind, sodann wird die Markierung in Spalte 27 gesetzt.

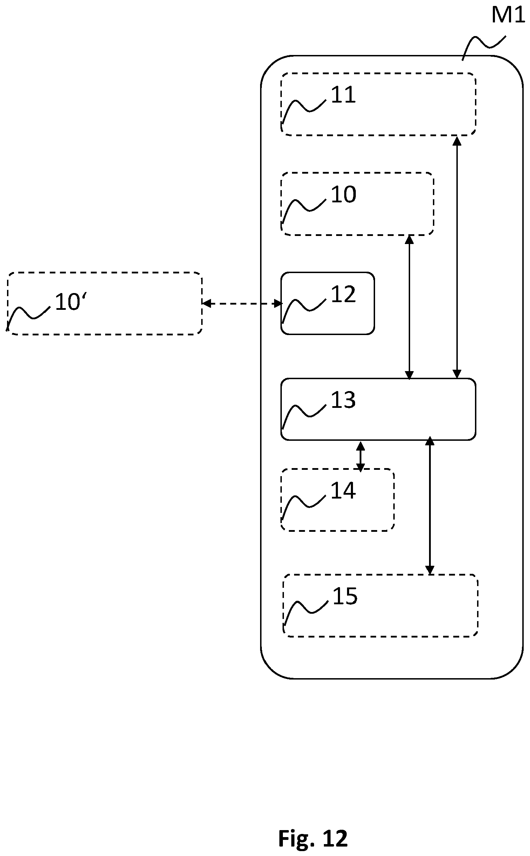

In Fig. 12 ist ein Ausführungsbeispiel eines erfindungsgemäßen Geräts M1 gezeigt. Das Gerät M1 kann elektronische Münzdatensätze Ci in einem Datenspeicher 10, 10' ablegen. Dabei können die elektronischen Münzdatensätze Ci auf dem Datenspeicher 10 des Geräts M1 liegen oder in einem externen Datenspeicher 10' verfügbar sein. Bei Verwenden eines externen Datenspeichers 10' könnten die elektronischen Münzdatensätze Ci in einem Online-Speicher abgelegt sein, beispielsweise einem Datenspeicher 10' eines Anbieters für digitale Geldbörsen. Zusätzlich könnten auch private Datenspeicher, bspw. ein Network-Attached-Storage, NAS in einem privaten Netzwerk verwendet werden.

In einem Fall ist der elektronische Münzdatensatz Ci als ein Ausdruck auf Papier dargestellt. Dabei kann der elektronische Münzdatensatz durch einen QR-Code, ein Bild eines QR-Codes dargestellt werden, oder aber auch eine Datei oder eine Zeichenfolge (ASCII) sein.

Das Gerät M1 hat mindestens eine Schnittstelle 12 als Kommunikationskanal zum Ausgeben des Münzdatensatzes Ci zur Verfügung. Diese Schnittstelle 12 ist beispielsweise eine optische Schnittstelle, beispielsweise zum Darstellen des Münzdatensatzes Ci auf einem Anzeigeeinheit (Display), oder einen Drucker zum Ausdrucken des elektronischen Münzdatensatzes Ci als Papier-Ausdruck. Diese Schnittstelle 12 kann auch eine digitale Kommunikationsschnittstelle, beispielsweise für Nahfeldkommunikation, wie NFC, Bluetooth, oder eine Internetfähige Schnittstelle, wie TCP, IP, UDP, HTTP oder ein Zugriff auf eine Chipkarte als Sicherheitselement sein. Diese Schnittstelle 12 ist beispielsweise eine Datenschnittstelle, sodass der Münzdatensatz $C_i$ über eine Applikation, beispielsweise einem Instant-Messenger-Dienst oder als Datei oder als Zeichenfolge zwischen Geräten übertragen wird.

Zudem ist die Schnittstelle 12 oder eine weitere Schnittstelle (nicht dargestellt) des Geräts M1 dazu eingerichtet, mit der Überwachungsinstanz 2 gemäß der Beschreibung in den Figuren 1 bis 6 zu interagieren. Das Gerät M1 ist dazu bevorzugt onlinefähig. Darüber hinaus kann das Gerät M1 auch eine Schnittstelle zum Empfang von elektronischen Münzdatensätzen aufweisen. Diese Schnittstelle ist eingerichtet visuell präsentierte Münzdatensätze, beispielsweise mittels Erfassungsmodul wie Kamera oder Scanner, oder digital präsentierte Münzdatensätze, empfangen via NFC, Bluetooth, TCP, IP, UDP, HTTP oder mittels einer Applikation präsentierte Münzdatensätze zu empfangen. Das Gerät M1 umfasst auch eine Recheneinheit 13, die das oben beschriebene Verfahren zum Maskieren von Münzdatensätzen und die Verarbeitungen an Münzdatensätzen durchführen kann.

Das Gerät M1 ist onlinefähig und kann bevorzugt mittels eines Standorterkennungs-Moduls 15 erkennen, wenn es mit einem WLAN verbunden ist. Optional kann ein spezifisches WLAN Netz als bevorzugt markiert sein (=Standortzone), sodass das Gerät M1 besondere Funktionen nur ausführt, wenn es in diesem WLAN Netz angemeldet ist. Alternativ erkennt das Standorterkennungs-Modul 15, wenn das Gerät M1 in vordefinierten GPS-Koordinaten inklusive eines definierten Radius ist und führt die besonderen Funktionen entsprechend der so definierten Standortzone durch. Diese Standortzone kann entweder manuell in das Gerät M1 oder via andere Einheiten/Module in das Gerät M1 eingebracht werden. Die besonderen Funktionen, die das Gerät M1 bei Erkennen der Standortzone durchführt, sind insbesondere das Übertragen von elektronischen Münzdatensätzen von/zum externen Datenspeicher 10 von/zu einem Tresormodul 14 und ggf. das Übertragen maskierter Münzdatensätze Z an die Überwachungsinstanz 2, beispielsweise im Rahmen von den o.g. Verarbeitungen an einem Münzdatensatz.

Im einfachsten Fall werden im Endgerät M1 alle Münzdatensätze Ci nach Erhalt automatisch zu einem Münzdatensatz verbunden (siehe Verbinden-Verarbeitung bzw. Verbinden-Schritt). Das heißt, sobald ein neuer elektronischer Münzdatensatz empfangen wird, wird ein Verbinden bzw. Umschalten-Befehl an die Überwachungsinstanz 2 gesendet. Das Gerät M1 kann elektronische Münzdatensätze auch in algorithmisch festgelegten Denominationen vorbereiten und im Datenspeicher 10, 10' vorhalten, damit auch ohne Datenverbindung zur Überwachungsinstanz 2 ein Bezahlvorgang möglich ist.

In Fig.13 ist ein Gesamtsystem zum besseren Verständnis dargestellt. Das erfindungsgemäße Gesamtsystem umfasst eine Herausgeberinstanz (Zentralbank) 1a. Zudem können weitere Herausgeberinstanzen 1b, 1c vorgesehen sein, die beispielsweise elektronische Münzdatensätze in einer anderen Währung ausgeben. Zudem ist mindestens ein Bezahlsystem 2 dargestellt, in dem mindestens eine Überwachungsinstanz 4 als zentraler Verwalter des Bezahlsystems vorgesehen ist. Zudem ist eine Vielzahl von Teilnehmern, die als Endgeräte Mx dargestellt sind, vorgesehen. Das Bezahlsystem 2 umfasst beispielsweise Geschäftsbanken und eine (oder mehrere) zentrale Überwachungsinstanz(en) 4, die die Registrierung der Münzdatensätze Ci vornimmt und die Modifikationen am Münzdatensatz Ci prüft und protokolliert.

Die Endgeräte M1 bis M6 können Münzdatensätze Ci und die entsprechenden Prüfwerte pi1, pi2 in der Direkttransaktionsschicht 3 direkt austauschen. Beispielsweise überträgt das Endgerät M5 einen Münzdatensatz an das Endgerät M4. Beispielsweise überträgt das Endgerät M4 den Münzdatensatz an das Endgerät M3. Beispielsweise überträgt das Endgerät M6 einen Münzdatensatz an das Endgerät M1. In jedem sendenden Endgerät Mx bzw. jedem empfangenden Endgerät Mx wird der Prüfwert des zu sendenden bzw. zu empfangenden Münzdatensatzes verwendet, um zu prüfen, ob der Münzdatensatz beim Bezahlsystem angezeigt wird und/oder ob der Münzdatensatz bei der Herausgeberinstanz 1a zurückzugeben ist, siehe Fig. 2 bis 4. Das Bezahlsystem 2 prüft beispielsweise anhand des Prüfwerts bzw. eines vom Prüfwert abgeleiteten Zählerwertes für jeden Münzdatensatz, ob der Münzdatensatz zurückzugeben ist oder nicht, siehe Fig. 5 für weitere Details.

Wenn eine Registrierung (Umschalten) als Aktion in der Überwachungsinstanz 4 durchzuführen ist, dann wird der bei direktem Übertragen erhöhte Prüfwert vom umzuschaltenden Münzdatensatz auf den umgeschalteten Münzdatensatz nicht übernommen, sondern zurückgesetzt. Eine registrierte Weitergabe zwischen Endgeräten ist der Regelfall, die direkte Weitergabe, wie beispielsweise zwischen den Endgeräten M4 und M5, eher nicht. In Fig. 13 ist als ein weiteres Beispiel gezeigt, dass ein Münzdatensatz von dem Endgerät M1 an das Endgerät M2 über das Bezahlsystem 2 übertragen wird (indirekte Weitergabe). Auch dabei prüft das Bezahlsystem den Zählerwert.

Im Rahmen der Erfindung können alle beschriebenen und/oder gezeichneten und/oder beanspruchten Elemente beliebig miteinander kombiniert werden.

BEZUGSZEICHENLISTE

| 1, 1a-c | Herausgeberinstanz oder Bank |
|---|---|
| 2 | Bezahlsystem |
| 21 | Befehls-Eintrag |
| 22a, b | Eintrag eines zu verarbeitenden elektronischen Münzdatensatzes (Vorgänger) |
| 23a, b | Eintrag eines verarbeiteten elektronischen Münzdatensatzes (Nachfolger) |
| 24 | Signatur-Eintrag |
| 25 | Markierung der Gültigkeitsprüfung |
| 26 | Markierung der Berechnungsprüfung |
| 27 | Markierung der Bereichsnachweisprüfung |

| 28 | Markierung der Signatur-Prüfung |
|---|---|
| 3 | Direkttransaktionsschicht |
| 4, 4', 4" | Überwachungsschicht, Überwachungsinstanz |
| 5 | Applikation gemeinsame Geldbörse |
| 10, 10' | Datenspeicher |
| 11 | Anzeige |
| 12 | Schnittstelle |
| 13 | Recheneinheit |
| 14 | Tresormodul |
| 15 | Standorterkennungs-Modul |
| Mx | x-tes Endgerät |
| $C_i$ | elektronischer Münzdatensatz |
| $C_j$, $C_k$ | aufgeteilter elektronischer Münzteildatensatz, |
| $C_{j\_k}$ | k-ter aufgeteilter elektronischer Münzteildatensatz bei symmetrischer Aufteilung |
| $C_i$ | umzuschaltender elektronischer Münzdatensatz |
| $C_m$ | zu verbindender elektronischer Münzdatensatz |
| $Z_i$ | maskierter elektronischer Münzdatensatz |
| $Z_j$, $Z_k$ | maskierter aufgeteilter elektronischer Münzteildatensatz |
| $Z_i$ | maskierter umzuschaltender elektronischer Münzdatensatz |
| $Z_m$ | maskierter zu verbindender elektronischer Münzdatensatz |
| S | Signierter maskierter elektronischer Münzdatensatz |
| $p_{i1}$, | Erster Prüfwert |
| $p_{i2}$, | Zweiter Prüfwert |
| $\upsilon_i$, | Monetärer Betrag |
| $\upsilon_j$, $\upsilon_j$ | Aufgeteilter monetärer Betrag |
| $\upsilon_l$, | Monetärer Betrag eines umzuschaltenden/umgeschalteten elektr. Münzdatensatzes |
| $\upsilon_m$, | Monetärer Betrag eines zu verbindenden/verbundenen elektr. Münzdatensatz |
| n | Anzahl symmetrisch geteilter Münzteildatensätze |
| ri | Verschleierungsbetrag, Zufallszahl |
| $r_j$, $r_j$ | Verschleierungsbetrag eines aufgeteilten elektronischen Münzdatensatzes |
| $r_m$ | Verschleierungsbetrag eines zu verbindenden/verbundenen elektronischen Münzdatensatzes |
| $C_i^*$ | übertragener elektronischer Münzdatensatz |
| $C_j^*$, $C_k^*$ | übertragener aufgeteilter elektronischer Münzteildatensatz, |
| $Z_i^*$ | maskierter übertragener elektronischer Münzdatensatz |
| $Z_j^*$, | $Z_k^*$ maskierter übertragener aufgeteilter elektronischer Münzdatensatz |
| f(C) | Homomorphe Einwegfunktion |
| $[Z_i]$ $Sig(PK_1)$ | Signatur der Herausgeberinstanz |
| 301-312 | Verfahrensschritte im Endgerät gemäß einem Ausführungsbeispiel |
| 201-204 | Verfahrensschritte im Bezahlsystem gemäß einem Ausführungsbeispiel |

**Patentansprüche**

1. Verfahren (300) in einem Endgerät (M1, M2, M3) zum Verwalten von elektronischen Münzdatensätzen ($C_i$, $C_j$, $C_k$) eines Bezahlsystems (2), wobei die elektronischen Münzdatensätze ($C_i$, $C_j$, $C_k$) von einer zentralen Herausgeberinstanz (1) ausgegeben werden, wobei jeder elektronische Münzdatensatz ($C_i$, $C_j$, $C_k$) einen Prüfwert ($p_{i1}$, $p_{i2}$) aufweist,

   wobei das Verfahren (300) den folgenden Schritt umfasst:

      - Bestimmen (303) durch das Endgerät (M1, M2, M3) anhand des Prüfwertes ($p_{i1}$, $p_{i2}$) eines elektronischen Münzdatensatzes ($C_i$, $C_j$, $C_k$), ob dieser elektronische Münzdatensatz ($C_i$, $C_j$, $C_k$) von dem Endgerät (M1, M2, M3) bei dem Bezahlsystem (2) angezeigt (304) wird; oder
      - Bestimmen (303) durch das Endgerät (M1, M2, M3) anhand des Prüfwerts ($p_{ii}$, $p_{i2}$) des elektronischen Münzdatensatzes ($C_i$, $C_j$, $C_k$), ob der elektronische Münzdatensatz ($C_i$, $C_j$, $C_k$) an die zentrale Herausgeberinstanz (1) zurückgegeben (305) wird;

   **dadurch gekennzeichnet, dass**

der Prüfwert ($p_{i1}$, $pi_2$) bei direktem Übertragen des elektronischen Münzdatensatzes ($C_i$, $C_j$, $C_k$) zwischen zwei Endgeräten (M1, M2, M3) inkrementiert wird.

2. Das Verfahren (300) nach Anspruch 1,

   wobei der elektronische Münzdatensatz ($C_i$, $C_j$, $C_k$) in Folge des Anzeigens (304) von dem Bezahlsystem (2) an die zentrale Herausgeberinstanz (1) zurückgegeben wird und/oder
   wobei das Bezahlsystem (2) in Folge des Anzeigens (304) das Modifizieren des elektronischen Münzdatensatzes ($C_i$, $C_j$, $C_k$) vom Endgerät (M1, M2, M3) fordert.

3. Das Verfahren (300) nach einem der vorhergehenden Ansprüche, wobei ein Zählerwert im Bezahlsystem (2) betreffend diesen elektronischen Münzdatensatz ($C_i$, $C_j$, $C_k$) in Folge des Anzeigens (305) durch das Bezahlsystem (2) unter Verwendung des Prüfwerts ($p_{i1}$, $pi_2$) des elektronischen Münzdatensatzes ($C_i$, $C_j$, $C_k$) bestimmt wird, wobei bevorzugt der Zählerwert mit jeder Aktion betreffend den elektronischen Münzdatensatz ($C_i$, $C_j$, $C_k$) erhöht wird, wobei weiter bevorzugt für unterschiedliche Aktionen der Zählerwert mit unterschiedlicher Gewichtung erhöht wird.

4. Das Verfahren (300) nach einem der vorhergehenden Ansprüche, wobei jeder elektronische Münzdatensatz (Ci, $C_j$, $C_k$) einen ersten Prüfwert ($p_{i1}$) und einen zweiten Prüfwert aufweist ($pi_2$), wobei der erste Prüfwert (pii) beim direkten Übertragen des elektronischen Münzdatensatzes ($C_i$, $C_j$, $C_k$) zwischen zwei Endgeräten (M1, M2, M3) inkrementiert wird und wobei anhand des ersten Prüfwertes ($p_{i1}$) des elektronischen Münzdatensatzes ($C_i$, $C_j$, $C_k$) bestimmt wird, ob der elektronische Münzdatensatz ($C_i$, $C_j$, $C_k$) von dem Endgerät (M1, M2, M3) beim Bezahlsystem (2) angezeigt wird.

5. Das Verfahren (300) nach einem der vorhergehenden Ansprüche, wobei jeder elektronische Münzdatensatz ($C_i$, $C_j$, $C_k$) einen ersten Prüfwert ($p_{i1}$) und einen zweiten Prüfwert ($pi_2$) aufweist, wobei anhand zumindest des zweiten Prüfwertes ($pi_2$) des elektronischen Münzdatensatzes ($C_i$, $C_j$, $C_k$) bestimmt wird, ob der elektronische Münzdatensatz ($C_i$, $C_j$, $C_k$) an die zentrale Herausgeberinstanz (1) zurückgegeben wird.

6. Das Verfahren (300) nach Anspruch 5,

   - wobei der zweite Prüfwert ($pi_2$) invariant bei einer, von Endgeräten (M1, M2, M3) mit dem elektronischen Münzdatensatz ($C_i$, $C_j$, $C_k$) durchgeführten Aktion ist und wobei bevorzugt der zweite Prüfwert ($pi_2$) zumindest ein Wert aus der folgenden Liste ist:

     o Rückgabedatum des elektronischen Münzdatensatzes ($C_i$, $C_j$, $C_k$);
     ◦ Ausgabedatum des elektronischen Münzdatensatzes ($C_i$, $C_j$, $C_k$);
     ◦ Registrierungsdatum des elektronischen Münzdatensatzes ($C_i$, $C_j$, $C_k$); und
     ◦ Identifizierungswert des elektronischen Münzdatensatzes ($C_i$, $C_j$, $C_k$); und/oder

   - wobei der zweite Prüfwert ($pi_2$) variabel ist und wobei der zweite Prüfwert ($p_{i2}$) den ersten Prüfwert ($p_{i1}$) umfasst, um zu bestimmen, ob der elektronische Münzdatensatz ($C_i$, $C_j$, $C_k$) zurückgegeben wird..

7. Das Verfahren (300) nach einem der vorhergehenden Ansprüche, wobei das Überschreiten eines Schwellwerts des Prüfwerts (pii, $pi_2$) des elektronischen Münzdatensatzes durch ein erstes Endgerät festgestellt (309) wird und eine Aktion mit diesem elektronischen Münzdatensatz ($C_i$, $C_j$, $C_k$), insbesondere das direkte Übertragen dieses elektronischen Münzdatensatzes ($C_i$, $C_j$, $C_k$) von dem ersten Endgerät (M1) an ein zweites Endgerät (M2), nur dann durchgeführt wird, wenn im ersten Endgerät (M1) kein anderer elektronischer Münzdatensatz vorhanden ist.

8. Das Verfahren (300) nach einem der vorhergehenden Ansprüche, wobei das Überschreiten eines Blockier-Schwellwerts des Prüfwerts ($p_{i1}$, $pi_2$) des elektronischen Münzdatensatzes ($C_i$, $C_j$, $C_k$) durch ein erstes Endgerät (M1) festgestellt (312) wird und eine Aktion mit diesem elektronischen Münzdatensatz ($C_i$, $C_j$, $C_k$), insbesondere das direkte Übertragen dieses elektronischen Münzdatensatzes ($C_i$, $C_j$, $C_k$) von dem ersten Endgerät (M1) an ein zweites Endgerät (M2), blockiert wird, unabhängig davon, ob im ersten Endgerät (M1) ein anderer elektronischer Münzdatensatz vorhanden ist oder nicht.

9. Ein Endgerät (M1), aufweisend:

   - eine Recheneinheit (13), eingerichtet zum Verwalten von elektronischen Münzdatensätzen ($C_i$, $C_j$, $C_k$) gemäß

einem Verfahren der Ansprüche 1 bis 8;
- Mittel zum Zugreifen auf einen Datenspeicher (10, 10'), wobei im Datenspeicher (10, 10') zumindest ein elektronischer Münzdatensatz ($C_i$, $C_j$, $C_k$) abgelegt ist; und
- eine Schnittstelle (12) eingerichtet zum Ausgeben des zumindest einen elektronischen Münzdatensatzes ($C_i$, $C_j$, $C_k$) an ein anderes Endgerät (M2, M3) und/oder zum Anzeigen des elektronischen Münzdatensatzes ($C_i$, $C_j$, $C_k$) an das Bezahlsystem (2) und/oder zum direkten oder indirekten Zurückgeben des elektronischen Münzdatensatzes ($C_i$, $C_j$, $C_k$) an eine zentrale Herausgeberinstanz (1).

10. Ein Verfahren (200) in einem Bezahlsystem (2), insbesondere einer Geschäftsbank oder einer Überwachungsinstanz (4) des Bezahlsystems (2), zum Verwalten von elektronischen Münzdatensätzen ($C_i$, $C_j$, $C_k$), wobei die elektronischen Münzdatensätze ($C_i$, $C_j$, $C_k$) von einer zentralen Herausgeberinstanz (1) ausgegeben werden, wobei für jeden elektronischen Münzdatensatz ($C_i$, $C_j$, $C_k$) ein Prüfwert ($p_{i1}$, $p_{i2}$) vorliegt, wobei der Prüfwert ($p_{i1}$, $p_{i2}$) bei direktem Übertragen des elektronischen Münzdatensatzes ($C_i$, $C_j$, $C_k$) zwischen zwei Endgeräten (M1, M2, M3) inkrementiert wird,

wobei das Verfahren (200) den Schritt umfasst:

- Bestimmen (202) anhand eines Prüfwertes ($p_{i1}$, $p_{i2}$) des elektronischen Münzdatensatzes ($C_i$, $C_j$, $C_k$), ob der elektronische Münzdatensatz ($C_i$, $C_j$, $C_k$) zurückgegeben wird, **dadurch gekennzeichnet, dass**

der Schritt des Bestimmens (202) durch das Bezahlsystem (202) erfolgt, und
durch das Bezahlsystem (2) ein Zählerwert im Bezahlsystem (2) betreffend den elektronischen Münzdatensatz ($C_i$, $C_j$, $C_k$) unter Verwendung des Prüfwerts ($p_{i1}$, $p_{i2}$) des elektronischen Münzdatensatzes ($C_i$, $C_j$, $C_k$) bestimmt wird, wobei bei Überschreiten eines Schwellwertes des Zählerwertes, der elektronische Münzdatensatz ($C_i$, $C_j$, $C_k$) an die zentrale Herausgeberinstanz (1) zurückgegeben (203) wird.

11. Das Verfahren (200) nach Anspruch 10, wobei der elektronische Münzdatensatz ($C_i$, $C_j$, $C_k$) zum Übertragen zwischen zwei Endgeräten (M1, M2, M3) vorgesehen ist, wobei der zu übertragende elektronische Münzdatensatz ($C_i$, $C_j$, $C_k$) von dem Bezahlsystem (2) in Folge des Bestimmens (203) an die Herausgeberinstanz (1) zurückgegeben (203) wird und wobei anstelle des zu übertragenden elektronischen Münzdatensatzes ($C_i$, $C_j$, $C_k$) ein elektronischer Münzdatensatz des Bezahlsystems (2) oder ein neu ausgegebener elektronischer Münzdatensatz übertragen wird.

12. Das Verfahren (200) nach Anspruch 10, wobei der elektronische Münzdatensatz ($C_i$, $C_j$, $C_k$) zum Übertragen zwischen zwei Endgeräten (M1, M2, M3) vorgesehen ist und wobei das Bezahlsystem (2) das Zurückgeben des zu übertragenden elektronischen Münzdatensatzes ($C_i$, $C_j$, $C_k$) von einem Endgerät (M1, M2, M3) an die Herausgeberinstanz (1) fordert.

13. Das Verfahren (200) nach einem der Ansprüche 10 bis 12, wobei jeder elektronische Münzdatensatz ($C_i$, $C_j$, $C_k$) einen Prüfwert ($p_{i2}$) aufweist, der invariant bei einer, von Endgeräten (M1, M2, M3) mit dem elektronischen Münzdatensatz ($C_i$, $C_j$, $C_k$) durchgeführten Aktion ist und wobei dieser Prüfwert ($p_{i2}$) im Bezahlsystem (2) zur Überprüfung der Rückgabe durch das Bezahlsystem (2) hinterlegt ist und wobei bevorzugt der Prüfwert ($p_{i2}$) zumindest ein Wert aus der folgenden Liste ist:

o Rückgabedatum des elektronischen Münzdatensatzes ($C_i$, $C_j$, $C_k$);
o Ausgabedatum des elektronischen Münzdatensatzes ($C_i$, $C_j$, $C_k$);
◦ Registrierungsdatum des elektronischen Münzdatensatzes ($C_i$, $C_j$, $C_k$); und
◦ Identifizierungswert des elektronischen Münzdatensatzes ($C_i$, $C_j$, $C_k$).

14. Das Verfahren (200) nach einem der Ansprüche 10 bis 13, wobei bei Durchführung einer Aktion mit dem elektronischen Münzdatensatz ($C_i$, $C_j$, $C_k$) durch das Bezahlsystem (2) der bei direktem Übertragen inkrementierte Prüfwert ($p_{i1}$) des elektronischen Münzdatensatzes ($C_i$, $C_j$, $C_k$) von dem Bezahlsystem (2) zurückgesetzt wird.

15. Eine Überwachungsinstanz (4), eingerichtet zum Verwalten eines elektronischen Münzdatensatzes ($C_i$, $C_j$, $C_k$), wobei der elektronische Münzdatensatz ($C_i$, $C_j$, $C_k$) von einer zentralen Herausgeberinstanz (1) ausgegeben wurde, wobei für jeden elektronischen Münzdatensatz ($C_i$, $C_j$, $C_k$) ein Prüfwert ($p_{i1}$, $p_{i2}$) vorliegt, wobei der Prüfwert ($p_{i1}$, $p_{i2}$) bei direktem Übertragen des elektronischen Münzdatensatzes ($C_i$, $C_j$, $C_k$) zwischen zwei Endgeräten (M1, M2, M3) inkrementiert wird, wobei die Überwachungsinstanz (4), eingerichtet ist zum:

- Bestimmen (202), anhand des Prüfwertes (pii, pi$_2$) des elektronischen Münzdatensatzes (C$_i$, C$_j$, C$_k$), ob der elektronische Münzdatensatz (C$_i$, C$_j$, C$_k$) zurückgegeben wird gemäß einem Verfahren der Ansprüche 10 bis 14.

**Claims**

1. Method (300) in a terminal (M1, M2, M3) for managing electronic coin data sets (C$_i$, C$_j$, C$_k$) of a payment system (2), wherein the electronic coin data sets (C$_i$, C$_j$, C$_k$) are issued by a central issuing entity (1), wherein each electronic coin data set (C$_i$, C$_j$, C$_k$) has a check value (p$_{i1}$, pi$_2$) ,

   wherein the method (300) comprises the following step:

   - determining (303) by means of the terminal (M1, M2, M3), on the basis of the check value (p$_{i1}$, p$_{i2}$) of an electronic coin data set (C$_i$, C$_j$, C$_k$), whether this electronic coin data set (C$_i$, C$_j$, C$_k$) is displayed (304) by the terminal (M1, M2, M3) at the payment system (2);
   or
   - determining (303) by means of the terminal (M1, M2, M3), on the basis of the check value (p$_{i1}$, p$_{i2}$) of the electronic coin data set (C$_i$, C$_j$, C$_k$), whether the electronic coin data set (C$_i$, C$_j$, C$_k$) is returned (305) to the central issuing entity (1);

   **characterized in that**
   the check value (p$_{i1}$, p$_{i2}$) is incremented when the electronic coin data set (C$_i$, C$_j$, C$_k$) is directly transferred between two terminals (M1, M2, M3).

2. Method (300) according to Claim 1,

   wherein the electronic coin data set (C$_i$, C$_j$, C$_k$) is returned to the central issuing entity (1) by the payment system (2) on account of the displaying (304) and/or
   wherein the payment system (2) requests the modifying of the electronic coin data set (C$_i$, C$_j$, C$_k$) by the terminal (M1, M2, M3) on account of the displaying (304) .

3. Method (300) according to either of the preceding claims, wherein a counter value in the payment system (2) concerning said electronic coin data set (C$_i$, C$_j$, C$_k$) is determined on account of the displaying (305) by the payment system (2) using the check value (p$_{i1}$, p$_{i2}$) of the electronic coin data set (C$_i$, C$_j$, C$_k$), wherein with preference the counter value is increased with each action concerning the electronic coin data set (C$_i$, C$_j$, C$_k$), wherein with further preference, for different actions, the counter value is increased with different weighting.

4. Method (300) according to any of the preceding claims, wherein each electronic coin data set (C$_i$, C$_j$, C$_k$) has a first check value (p$_{i1}$) and a second check value (p$_{i2}$), wherein the first check value (p$_{i1}$) is incremented when the electronic coin data set (C$_i$, C$_j$, C$_k$) is directly transferred between two terminals (M1, M2, M3), and wherein on the basis of the first check value (p$_{i1}$) of the electronic coin data set (C$_i$, C$_j$, C$_k$) it is determined whether the electronic coin data set (C$_i$, C$_j$, C$_k$) is displayed by the terminal (M1, M2, M3) at the payment system (2).

5. Method (300) according to any of the preceding claims, wherein each electronic coin data set (C$_i$, C$_j$, C$_k$) has a first check value (p$_{i1}$) and a second check value (p$_{i2}$), wherein on the basis of at least the second check value (p$_{i2}$) of the electronic coin data set (C$_i$, C$_j$, C$_k$) it is determined whether the electronic coin data set (C$_i$, C$_j$, C$_k$) is returned to the central issuing entity (1).

6. Method (300) according to Claim 5, wherein the second check value (p$_{i2}$) is invariant in the case of an action carried out by terminals (M1, M2, M3) with the electronic coin data set (C$_i$, C$_j$, C$_k$), and wherein with preference the second check value (p$_{i2}$) is at least one value from the following list:

   o return date of the electronic coin data set (C$_i$, C$_j$, C$_k$) ;
   o date of issue of the electronic coin data set (C$_i$, C$_j$, C$_k$) ;
   o registration date of the electronic coin data set (C$_i$, C$_j$, C$_k$) ; and
   o identification value of the electronic coin data set (C$_i$, C$_j$, C$_k$) ; and/or
   - wherein the second check value (p$_{i2}$) is variable, and wherein the second check value (p$_{i2}$) comprises the first check value (p$_{i1}$) in order to determine whether the electronic coin data set (C$_i$, C$_j$, C$_k$) is returned.

7. Method (300) according to any of the preceding claims, wherein exceeding a threshold value of the check value ($p_{i1}$, $p_{i2}$) of the electronic coin data set is ascertained (309) by a first terminal and an action with this electronic coin data set ($C_i$, $C_j$, $C_k$), in particular the direct transfer of this electronic coin data set ($C_i$, $C_j$, $C_k$) from the first terminal (M1) to a second terminal (M2), is carried out only if no other electronic coin data set is present in the first terminal (M1).

8. Method (300) according to any of the preceding claims, wherein exceeding a blocking threshold value of the check value ($p_{i1}$, $p_{i2}$) of the electronic coin data set ($C_i$, $C_j$, $C_k$) is ascertained (312) by a first terminal (M1) and an action with this electronic coin data set ($C_i$, $C_j$, $C_k$), in particular the direct transfer of this electronic coin data set ($C_i$, $C_j$, $C_k$) from the first terminal (M1) to a second terminal (M2), is blocked irrespective of whether or not another electronic coin data set is present in the first terminal (M1).

9. Terminal (M1), comprising:

    - a computing unit (13), configured for managing electronic coin data sets ($C_i$, $C_j$, $C_k$) according to a method of Claims 1 to 8;
    - means for accessing a data memory (10, 10'), wherein at least one electronic coin data set ($C_i$, $C_j$, $C_k$) is stored in the data memory (10, 10'); and
    - an interface (12) configured for outputting the at least one electronic coin data set ($C_i$, $C_j$, $C_k$) to another terminal (M2, M3) and/or for displaying the electronic coin data set ($C_i$, $C_j$, $C_k$) to the payment system (2) and/or for directly or indirectly returning the electronic coin data set ($C_i$, $C_j$, $C_k$) to a central issuing entity (1).

10. Method (200) in a payment system (2), in particular a commercial bank or a monitoring entity (4) of the payment system (2), for managing electronic coin data sets ($C_i$, $C_j$, $C_k$), wherein the electronic coin data sets ($C_i$, $C_j$, $C_k$) are issued by a central issuing entity (1), wherein a check value ($p_{i1}$, $p_{i2}$) is present for each electronic coin data set ($C_i$, $C_j$, $C_k$), wherein the check value ($p_{i1}$, $p_{i2}$) is incremented when the electronic coin data set ($C_i$, $C_j$, $C_k$) is directly transferred between two terminals (M1, M2, M3),

    wherein the method (200) comprises the following step:

    - determining (202), on the basis of a check value ($p_{i1}$, $p_{i2}$) of the electronic coin data set ($C_i$, $C_j$, $C_k$), whether the electronic coin data set ($C_i$, $C_j$, $C_k$) is returned, **characterized in that**

    the step of determining (202) is effected by the payment system (202), and
    the payment system (2) determines a counter value in the payment system (2) concerning the electronic coin data set ($C_i$, $C_j$, $C_k$) using the check value ($pn$, $p_{i2}$) of the electronic coin data set ($C_i$, $C_j$, $C_k$), wherein if a threshold value of the counter value is exceeded, the electronic coin data set ($C_i$, $C_j$, $C_k$) is returned (203) to the central issuing entity (1).

11. Method (200) according to Claim 10, wherein the electronic coin data set ($C_i$, $C_j$, $C_k$) is provided for transfer between two terminals (M1, M2, M3), wherein the electronic coin data set ($C_i$, $C_j$, $C_k$) to be transferred is returned (203) to the issuing entity (1) by the payment system (2) on account of the determining (203), and wherein an electronic coin data set of the payment system (2) or a newly issued electronic coin data set is transferred instead of the electronic coin data set ($C_i$, $C_j$, $C_k$) to be transferred.

12. Method (200) according to Claim 10, wherein the electronic coin data set ($C_i$, $C_j$, $C_k$) is provided for transfer between two terminals (M1, M2, M3), and wherein the payment system (2) requests the return of the electronic coin data set ($C_i$, $C_j$, $C_k$) to be transferred from a terminal (M1, M2, M3) to the issuing entity (1).

13. Method (200) according to any of Claims 10 to 12, wherein each electronic coin data set ($C_i$, $C_j$, $C_k$) has a check value ($p_{i2}$) which is invariant in the case of an action carried out by terminals (M1, M2, M3) with the electronic coin data set ($C_i$, $C_j$, $C_k$), and wherein this check value ($p_{i2}$) is stored in the payment system (2) for checking the return by the payment system (2), and wherein with preference the check value ($p_{i2}$) is at least one value from the following list:

    o return date of the electronic coin data set ($C_i$, $C_j$, $C_k$);
    o date of issue of the electronic coin data set ($C_i$, $C_j$, $C_k$);
    o registration date of the electronic coin data set ($C_i$, $C_j$, $C_k$); and
    o identification value of the electronic coin data set ($C_i$, $C_j$, $C_k$).

**14.** Method (200) according to any of Claims 10 to 13, wherein when carrying out an action with the electronic coin data set ($C_i$, $C_j$, $C_k$) by means of the payment system (2), the check value ($p_{i1}$) of the electronic coin data set ($C_i$, $C_j$, $C_k$) incremented during direct transfer is reset by the payment system (2).

**15.** Monitoring entity (4), configured for managing an electronic coin data set ($C_i$, $C_j$, $C_k$), wherein the electronic coin data set ($C_i$, $C_j$, $C_k$) was issued by a central issuing entity (1), wherein a check value ($p_{i1}$, $p_{i2}$) is present for each electronic coin data set ($C_i$, $C_j$, $C_k$), wherein the check value ($p_{i1}$, $p_{i2}$) is incremented when the electronic coin data set ($C_i$, $C_j$, $C_k$) is directly transferred between two terminals (M1, M2, M3), wherein the monitoring entity (4) is configured for:

- determining (202), on the basis of the check value ($p_{i1}$, $p_{i2}$) of the electronic coin data set ($C_i$, $C_j$, $C_k$), whether the electronic coin data set ($C_i$, $C_j$, $C_k$) is returned according to a method of Claims 10 to 14.

**Revendications**

**1.** Procédé (300) dans un terminal (M1, M2, M3) permettant de gérer des ensembles de données de pièces de monnaie électroniques ($C_i$, $C_j$, $C_k$) d'un système de paiement (2), dans lequel les ensembles de données de pièces de monnaie électroniques ($C_i$, $C_j$, $C_k$) sont émis par une instance émettrice centrale (1), dans lequel chaque ensemble de données de pièces de monnaie électronique ($c_i$, $C_j$, $C_k$) présente une valeur de contrôle ($p_{i1}$, $P_{i2}$),

le procédé (300) comprenant l'étape suivante consistant à :

- déterminer (303) par le terminal (M1, M2, M3) à l'aide de la valeur de contrôle ($p_{i1}$, $p_{i2}$) d'un ensemble de données de pièces de monnaie électronique ($C_i$, $C_j$, $C_k$) si cet ensemble de données de pièces de monnaie électronique ($C_i$, $C_j$, $C_k$) est affiché (304) par le terminal (M1, M2, M3) sur le système de paiement (2) ; ou
- déterminer (303) par le terminal (M1, M2, M3) à l'aide de la valeur de contrôle ($p_{i1}$, $pi_2$) de l'ensemble de données de pièces de monnaie électronique ($C_i$, $C_j$, $C_k$) si l'ensemble de données de pièces de monnaie électronique ($C_i$, $C_j$, $C_k$) est renvoyé (305) à l'instance émettrice centrale (1) ;

**caractérisé en ce que** la valeur de contrôle ($p_{i1}$, $p_{i2}$) est incrémentée en cas de transmission directe de l'ensemble de données de pièces de monnaie électronique ($C_i$, $C_j$, $C_k$) entre deux terminaux (M1, M2, M3) .

**2.** Procédé (300) selon la revendication 1,

dans lequel l'ensemble de données de pièces de monnaie électronique ($C_i$, $C_j$, $C_k$) est renvoyé à l'instance émettrice centrale (1) suite à l'affichage (304) du système de paiement (2), et/ou
dans lequel suite à l'affichage (304), le système de paiement (2) demande au terminal (M1, M2, M3) la modification de l'ensemble de données de pièces de monnaie électronique ($C_i$, $C_j$, $C_k$) .

**3.** Procédé (300) selon l'une quelconque des revendications précédentes, dans lequel une valeur de comptage dans le système de paiement (2) concernant cet ensemble de données de pièces de monnaie électronique ($C_i$, $C_j$, $C_k$) est déterminée suite à l'affichage (305) par le système de paiement (2) en utilisant la valeur de contrôle ($p_{i1}$, $p_{i2}$) de l'ensemble de données de pièces de monnaie électronique ($C_i$, $C_j$, $C_k$), dans lequel la valeur de comptage est de préférence incrémentée à chaque action concernant l'ensemble de données de pièces de monnaie électronique ($C_i$, $C_j$, $C_k$), dans lequel de plus grande préférence, la valeur de comptage est augmentée avec une pondération différente pour des actions différentes.

**4.** Procédé (300) selon l'une quelconque des revendications précédentes, dans lequel chaque ensemble de données de pièces de monnaie électronique ($C_i$, $C_j$, $C_k$) présente une première valeur de contrôle ($p_{i1}$) et une deuxième valeur de contrôle ($p_{i2}$), dans lequel la première valeur de contrôle ($p_{i1}$) est incrémentée en cas de transmission directe de l'ensemble de données de pièces de monnaie électronique ($C_i$, $C_j$, $C_k$) entre deux terminaux (M1, M2, M3), et dans lequel à l'aide de la première valeur de contrôle ($p_{i1}$) de l'ensemble de données de pièces de monnaie électronique ($C_i$, $C_j$, $C_k$) il est déterminé si l'ensemble de données de pièces de monnaie électronique ($C_i$, $C_j$, $C_k$) est affiché par le terminal (M1, M2, M3) sur le système de paiement (2).

**5.** Procédé (300) selon l'une quelconque des revendications précédentes, dans lequel chaque ensemble de données de pièces de monnaie électronique ($C_i$, $C_j$, $C_k$) présente une première valeur de contrôle ($p_{i1}$) et une deuxième

valeur de contrôle ($p_{i2}$), dans lequel il est déterminé à l'aide au moins de la deuxième valeur de contrôle ($p_{i2}$) de l'ensemble de données de pièces de monnaie électronique ($C_i$, $C_j$, $C_k$) si l'ensemble de données de pièces de monnaie électronique ($C_i$, $C_j$, $C_k$) est renvoyé à l'instance émettrice centrale (1).

6. Procédé (300) selon la revendication 5,

- dans lequel la deuxième valeur de contrôle ($p_{i2}$) est invariante lors d'une action effectuée par les terminaux (M1, M2, M3) avec l'ensemble de données de pièces de monnaie électronique ($C_i$, $C_j$, $C_k$), et dans lequel de préférence la deuxième valeur de contrôle ($p_{i2}$) est au moins une valeur de la liste suivante :

    o la date de renvoi de l'ensemble de données de pièces de monnaie électronique ($C_i$, $C_j$, $C_k$) ;
    o la date d'émission de l'ensemble de données de pièces de monnaie électronique ($C_i$, $C_j$, $C_k$) ;
    o la date d'enregistrement de l'ensemble de données de pièces de monnaie électronique ($C_i$, $C_j$, $C_k$) ; et
    o la valeur d'identification de l'ensemble de données de pièces de monnaie électronique ($C_i$, $C_j$, $C_k$) ; et/ou

- dans lequel la deuxième valeur de contrôle ($p_{i2}$) est variable, et dans lequel la deuxième valeur de contrôle ($p_{i2}$) comprend la première valeur de contrôle ($p_{i1}$) afin de déterminer si l'ensemble de données de pièces de monnaie électronique ($C_i$, $C_j$, $C_k$) est renvoyé.

7. Procédé (300) selon l'une quelconque des revendications précédentes, dans lequel le dépassement d'une valeur seuil de la valeur de contrôle ($p_{i1}$, $p_{i2}$) de l'ensemble de données de pièces de monnaie électronique est constaté (309) par un premier terminal, et une action avec cet ensemble de données de pièces de monnaie électronique ($C_i$, $C_j$, $C_k$), en particulier la transmission directe de cet ensemble de données de pièces de monnaie électronique ($C_i$, $C_j$, $C_k$) du premier terminal (M1) au deuxième terminal (M2), n'est effectuée que si aucun autre ensemble de données de pièces de monnaie électronique n'est présent sur le premier terminal (M1).

8. Procédé (300) selon l'une quelconque des revendications précédentes, dans lequel le dépassement d'une valeur seuil de blocage de la valeur de contrôle ($p_{i1}$, $pi_2$) de l'ensemble de données de pièces de monnaie électronique ($C_i$, $C_j$, $C_k$) est constaté par un premier terminal (M1), et une action avec cet ensemble de données de pièces de monnaie électronique ($C_i$, $C_j$, $C_k$), en particulier la transmission directe de cet ensemble de données de pièces de monnaie électronique ($C_i$, $C_j$, $C_k$) du premier terminal (M1) à un deuxième terminal (M2), est bloquée en fonction du fait qu'un autre ensemble de données de pièces de monnaie électronique est présent ou non sur le premier terminal (M1).

9. Terminal (M1), présentant :

- une unité de calcul (13) qui est conçue pour gérer des ensembles de données de pièces de monnaie électroniques ($C_i$, $C_j$, $C_k$) selon un procédé selon les revendications 1 à 8 ;
- des moyens pour accéder à une mémoire de données (10, 10'), dans lequel au moins un ensemble de données de pièces de monnaie électronique ($C_i$, $C_j$, $C_k$) est sauvegardé dans la mémoire de données (10, 10') ; et
- une interface (12) qui est conçue pour émettre ledit au moins un ensemble de données de pièces de monnaie électronique ($C_i$, $C_j$, $C_k$) à un autre terminal (M2, M3) et/ou pour afficher l'ensemble de données de pièces de monnaie électronique ($C_i$, $C_j$, $C_k$) pour le système de paiement (2) et/ou pour renvoyer directement ou indirectement l'ensemble de données de pièces de monnaie électronique ($C_i$, $C_j$, $C_k$) à une instance émettrice centrale (1).

10. Procédé (200) dans un système de paiement (2), en particulier d'une banque commerciale ou d'une instance de surveillance (4) du système de paiement (2), destiné à gérer des ensembles de données de pièces de monnaie électroniques ($C_i$, $C_j$, $C_k$), dans lequel les ensembles de données de pièces de monnaie électroniques ($C_i$, $C_j$, $C_k$) sont émis par une instance émettrice centrale (1), dans lequel une valeur de contrôle ($p_{i1}$, $p_{i2}$) est présente pour chaque ensemble de données de pièces de monnaie électronique ($C_i$, $C_j$, $C_k$), dans lequel la valeur de contrôle ($p_{i1}$, $p_{i2}$) est incrémentée en cas de transmission directe de l'ensemble de données de pièces de monnaie électronique ($C_i$, $C_j$, $C_k$) entre deux terminaux (M1, M2, M3),

le procédé (200) comprenant l'étape consistant à :

- déterminer (202) à l'aide d'une valeur de contrôle ($p_i$, $p_{i2}$) de l'ensemble de données de pièces de monnaie électronique ($C_i$, $C_j$, $C_k$) si l'ensemble de données de pièces de monnaie électronique ($C_i$, $C_j$, $C_k$) est renvoyé,

**caractérisé en ce que** l'étape de détermination (202) est effectuée par le système de paiement (202), et le système de paiement (2) détermine une valeur de comptage dans le système de paiement (2) concernant l'ensemble de données de pièces de monnaie électronique ($C_i$, $C_j$, $C_k$) en utilisant la valeur de contrôle ($p_{i1}$, $p_{i2}$) de l'ensemble de données de pièces de monnaie électronique ($C_i$, $C_j$, $C_k$), dans lequel en cas de dépassement d'une valeur seuil de la valeur de comptage, l'ensemble de données de pièces de monnaie électronique ($C_i$, $C_j$, $C_k$) est renvoyé (203) à l'instance émettrice centrale (1).

11. Procédé (200) selon la revendication 10, dans lequel l'ensemble de données de pièces de monnaie électronique ($C_i$, $C_j$, $C_k$) est prévu pour une transmission entre deux terminaux (M1, M2, M3), dans lequel l'ensemble de données de pièces de monnaie électronique ($C_i$, $C_j$, $C_k$) à transmettre est renvoyé à l'instance émettrice (1) par le système de paiement (2) suite à la détermination (203), et dans lequel au lieu de l'ensemble de données de pièces de monnaie électronique ($C_i$, $C_j$, $C_k$) à transmettre, un ensemble de données de pièces de monnaie électronique du système de paiement (2) ou un ensemble de données de pièces de monnaie électronique nouvellement émis est transmis.

12. Procédé (200) selon la revendication 10, dans lequel l'ensemble de données de pièces de monnaie électronique ($C_i$, $C_j$, $C_k$) est prévu pour une transmission entre deux terminaux (M1, M2, M3), et dans lequel le système de paiement (2) demande que l'ensemble de données de pièces de monnaie électronique ($C_i$, $C_j$, $C_k$) à transmettre soit renvoyé d'un terminal (M1, M2, M3) à l'instance émettrice (1).

13. Procédé (200) selon l'une quelconque des revendications 10 à 12, dans lequel chaque ensemble de données de pièces de monnaie électronique ($C_i$, $C_j$, $C_k$) présente une valeur de contrôle ($p_{i2}$) qui est invariante lors d'une action effectuée par des terminaux (M1, M2, M3) avec l'ensemble de données de pièces de monnaie électronique ($C_i$, $C_j$, $C_k$), et dans lequel cette valeur de contrôle ($p_{i2}$) est sauvegardée dans le système de paiement (2) pour vérifier le renvoi par le système de paiement (2), et dans lequel de préférence la valeur de contrôle ($p_{i2}$) est au moins une valeur de la liste suivante :

    o la date de renvoi de l'ensemble de données de pièces de monnaie électronique ($C_i$, $C_j$, $C_k$) ;
    o la date d'émission de l'ensemble de données de pièces de monnaie électronique ($C_i$, $C_j$, $C_k$) ;
    o la date d'enregistrement de l'ensemble de données de pièces de monnaie électronique ($C_i$, $C_j$, $C_k$) ; et
    o la valeur d'identification de l'ensemble de données de pièces de monnaie électronique ($C_i$, $C_j$, $C_k$) .

14. Procédé (200) selon l'une quelconque des revendications 10 à 13, dans lequel lors de l'exécution d'une action avec l'ensemble de données de pièces de monnaie électronique ($C_i$, $C_j$, $C_k$) par le système de paiement (2), la valeur de contrôle ($p_{i1}$), incrémentée en cas de transmission directe, de l'ensemble de données de pièces de monnaie électronique ($C_i$, $C_j$, $C_k$) est réinitialisée par le système de paiement (2).

15. Instance de surveillance (4), conçue pour gérer un ensemble de données de pièces de monnaie électronique ($C_i$, $C_j$, $C_k$), dans lequel l'ensemble de données de pièces de monnaie électronique ($C_i$, $C_j$, $C_k$) a été émis par une instance émettrice centrale (1), dans lequel une valeur de contrôle ($p_{i1}$, $p_{i2}$) est présente pour chaque ensemble de données de pièces de monnaie électronique ($C_i$, $C_j$, $C_k$), dans lequel la valeur de contrôle ($p_{i1}$, $p_{i2}$) est incrémentée en cas de transmission directe de l'ensemble de données de pièces de monnaie électronique ($C_i$, $C_j$, $C_k$) entre deux terminaux (M1, M2, M3),
l'instance de surveillance (4) étant conçue pour :

    - déterminer (202), à l'aide de la valeur de contrôle ($p_{i1}$, $p_{i2}$) de l'ensemble de données de pièces de monnaie électronique ($C_i$, $C_j$, $C_k$) si l'ensemble de données de pièces de monnaie électronique (CI, Cj, Ck) est renvoyé selon un procédé selon les revendications 10 à 14.

Fig. 1a – Stand der Technik

Fig. 1b – Stand der Technik

300

Anfragen eines Münzdatensatzes ⌇ ⟿ 301

Empfange Münzdatensatz ⟿ 302

⟿ 303

Prüfwert ?

Zurückgeben des
Münzdatensatzes

305

Anzeigen des
Münzdatensatzes ⟿ 304

Aktion am
Münzdatensatz ⟿ 306

**Fig. 2**

330

**Fig. 3**

340

Fig. 4

200

Anzeige eines Münzdatensatz — 201

Prüfwert
(Zählerwert)
? — 202

Rückgabe des
Münzdatensatzes — 203

Erhalt eines neuen
Münzdatensatz — 204

205

Modifizieren des
Münzdatensatz

**Fig. 5**

$C_i = \{\upsilon_i; r_i\}, p_{i1}, p_{i2}$ ~ 1

$C_i, p_{i1}, p_{i2}$

M1

$C_i, p_{i1}, p_{i2}$
$Z_i = f(C_i)$

$C_i, p_{i1}, p_{i2}$

M2

$C_i^*, p_{i1}+1, p_{i2}$
$Z_i^* = f(C_i^*)$

3

$Z_i, p_{i2}$

$p_{i1}+1,$
$Z_i^*$

$Z_i, p_{i2}$

4

2

Prüfe:
$Z_i^* = Z_i$ ?

Prüfe:
$p_{i2}$

**Fig. 6**

| Kommando | $O_1$ | $O_2$ | $S_1$ | $S_2$ | Signatur | O-Flag | C-Flag | R-Flag | S-Flag |
|---|---|---|---|---|---|---|---|---|---|
| Erzeugen | - | - | $Z_i$ | - | $[Z_i]Sig_l$ | - | - | - | [0,1] |
| Zurückgeben | $Z_i$ | - | - | - | $[Z_i]Sig_l$ | [0,1] | - | - | [0,1] |
| Aufteilen | $Z_i$ | - | $Z_j$ | $Z_k$ | Sig | [0,1] | [0,1] | [0,1] | [0,1] |
| Verbinden | $Z_i$ | $Z_j$ | - | $Z_m$ | Sig 1,2 | [0,1] | [0,1] | [0,1] | [0,1] |
| Umschalten | $Z_k$ | - | - | $Z_l$ | Sig | [0,1] | [0,1] | [0,1] | [0,1] |

(21) (22a) (22b) (23a) (23b) (24) (25) (26) (27) (28)

(2)

**Fig. 7**

M1

$C_i$

$v_i = v_j + v_k$

$v_\lambda > 0$

$r_i = r_j + r_k$

$C_j = \{v_j; r_j\}$

$C_k = \{v_k; r_k\}$

$Z_i = f(C_i)$

$Z_j = f(C_j)$

$Z_k = f(C_k)$

$C_k$

M2

$C_k^*$

$v_l = v_k$

$r_l = r_k + r_{add}$

$Z_k^* = f(C_k^*)$

$C_l = \{v_l; r_l\}$

$Z_l = f(C_l)$

$R_{add} = r_{add} \cdot G$

$(R_{add})\mathrm{sig}(r_{add})$

3

$Z_i; Z_j; Z_k$

Prüfe: $Z_i = Z_j + Z_k$

$Z_k^*; Z_l$

Verwende: $(Z_k - Z_l)$ als $R_{add}$ zum Prüfen, dass nur $r_l$ verändert wurde

4

| Kommando | $O_1$ | $O_2$ | $S_1$ | $S_2$ | O-Flag | C-Flag | R-Flag | S-Flag |
|---|---|---|---|---|---|---|---|---|
| Aufteilen | $Z_i$ | - | $Z_j$ | $Z_k$ | [0,1] | [0,1] | [0,1] | [0,1] |
| Umschalten | $Z_k$ | - | $Z_l$ | - | [0,1] | [0,1] | [0,1] | [0,1] |

2

**Fig. 8**

**Fig. 9**

Fig. 10

M1　　　　　1　　2　　M2

103

110

Teile auf

110'

Bestätige

$Z_i = Z_k + Z_i$

$\upsilon_i = \upsilon_k + \upsilon_j$
$r_i = r_k + r_j$
$C_k = \{\upsilon_k; r_k\}$
$C_j = \{\upsilon_j; r_j\}$
$Z_k = f(C_k)$
$Z_j = f(C_j)$

Aufteilen

**Fig. 11**

Fig. 12

**Fig. 13**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170293912 A1

- US 2007027941 A1

**In der Beschreibung aufgeführte Nicht-Patentliteratur**

- **YEN CHOON CHING.** FairCash: Concepts and Framework. *The Second Internation Conference on Next Generation Mobile Applications, Services and Technologies,* 16. September 2008

- **ISABELLE SIMPLOT-RYL.** Distributed architecture for electronic cash schemes: a survey. *International Journal of parallel, emergent and distributed systems,* 01. Juni 2009, vol. 24 (3), 243-271